(19) Europäisches Patentamt
European Patent Office
Office européen des brevets

(11) **EP 2 672 737 A1**

(12) **EUROPEAN PATENT APPLICATION**
published in accordance with Art. 153(4) EPC

(43) Date of publication:
**11.12.2013 Bulletin 2013/50**

(51) Int Cl.:
*H04W 4/02* (2009.01)        *H04M 11/00* (2006.01)
*H04W 64/00* (2009.01)

(21) Application number: **12742407.5**

(22) Date of filing: **30.01.2012**

(86) International application number:
**PCT/JP2012/052030**

(87) International publication number:
**WO 2012/105516 (09.08.2012 Gazette 2012/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011   JP 2011018867**
**07.06.2011   JP 2011127492**

(71) Applicant: **NTT DOCOMO, INC.**
**Chiyoda-ku**
**Tokyo**
**100-6150 (JP)**

(72) Inventors:
• **NAGATA Tomohiro**
  **Tokyo 100-6150 (JP)**
• **OKAJIMA Ichiro**
  **Tokyo 100-6150 (JP)**
• **TERADA Masayuki**
  **Tokyo 100-6150 (JP)**
• **AOYAGI Sadanori**
  **Tokyo 100-6150 (JP)**

(74) Representative: **Viering, Jentschura & Partner**
**Am Brauhaus 8**
**01099 Dresden (DE)**

(54) **TERMINAL QUANTITY ESTIMATION DEVICE AND TERMINAL QUANTITY ESTIMATION METHOD**

(57)   To estimate the number of mobile terminals that have been staying in an observation area for a desired period of time, the feature quantity calculation portion 17 calculates a feature quantity for observation target location data based on location acquisition time information contained in the observation target location data acquired by the observation target acquisition portion 15. The expected stay time calculation portion 18 calculates an expected stay time in an observation area to be observed and, based on the expected stay time, the passing/staying terminal selection portion 19 selects mobile terminals to serve as a target of terminal quantity estimation. Then, the terminal quantity estimation portion 20 estimates the number of mobile terminals calculated as the target of estimation. In this manner, the terminal quantity estimation device 10 estimates the number of mobile terminals that have been staying in the observation area for a desired period of time.

**Fig.2**

EP 2 672 737 A1

## Description

### Technical Field

The present invention relates to a terminal quantity estimation device and a terminal quantity estimation method for estimating the number of terminals (terminal quantity) in a certain area by using location information of a mobile terminal (for example, a mobile phone) obtained from a network element of the mobile terminal.

### Background Art

In a network element of a telecommunications carrier, operation data such as location data of a mobile terminal is generated to provide a telecommunications service to users of mobile terminals. By making statistics such as aggregation on such operation data, the number of mobile terminals can be calculated, and an estimated value such as a "population" can be obtained by the calculation result.

One example of the location data is a location registration signal. This is a signal that is transmitted from a mobile terminal to a base station in an area substantially periodically, and when a certain base station receives the location registration signal of a certain mobile terminal, it can be estimated that the mobile terminal is present in a certain base station sector, which is a radio range of the base station, at the time when the signal is received.

Another example of the location data is GPS information. This is information about a GPS result that is transmitted from a mobile terminal to a base station in an area periodically or in response to an operation on the terminal or a request from a mobile terminal network. From this information as well, it can be estimated that the mobile terminal is present in the vicinity of a position indicated by the GPS result at the time when the GPS information is received (see Patent Literature 1, for example).

If the number of mobile terminals (terminal number) located in a certain geographical area can be estimated from observation results of the location data described above, it is expected that the estimated value such as a population can be obtained by taking the contact rate of mobile terminals or the like into consideration.

### Citation List

### Patent Literature

[Patent Literature 1] Japanese Patent Application Laid-Open Publication No. 2003-44969

### Summary of Invention

### Technical Problem

However, in the case of acquiring the location data in the above manner, it is not possible to distinguish between the location data that is accidentally transmitted from a mobile terminal that has passed through an observation area during an observation target period and the location data that is transmitted from a mobile terminal that has been staying in the observation area. There is thus a problem that the estimation of the number of terminal is performed without distinguishing between a mobile terminal that has passed through the observation area by chance and mobile terminal that has been staying in the observation area.

In light of the foregoing, an object of the present invention is to provide a terminal quantity estimation device and a terminal quantity estimation method that can estimate the number of mobile terminals that have been staying in an observation area for a desired period of time.

### Solution to Problem

A terminal quantity estimation device according to the present invention includes a location data acquisition means for acquiring location data containing identification information identifying a mobile terminal, location information about a location of the mobile terminal, and location acquisition time information when the location information is acquired, an observation target acquisition means for acquiring location data in which the location acquisition time information is within an observation target period where stay is to be observed and the location information is within an observation area to be observed as observation target location data, a feature quantity calculation means for calculating a feature quantity of the observation target location data based on the location acquisition time information contained in the observation target location data acquired by the observation target acquisition means, an expected stay time calculation means for calculating a total value of feature quantities calculated by the feature quantity calculation means as an expected stay time representing a stay time for each identification information of mobile terminals, an estimation target terminal selection means for selecting mobile terminals to serve as a target of terminal quantity estimation based on the expected stay time, and a terminal quantity estimation means for estimating the number of mobile terminals selected by the estimation target terminal selection means.

Further, a terminal quantity estimation method according to the present invention is a terminal quantity estimation method performed by a terminal quantity estimation device, including a location data acquisition step of acquiring location data containing identification information identifying a mobile terminal, location information about a location of the mobile terminal, and location acquisition time information when the location information is acquired, an observation target acquisition step of acquiring location data in which the location acquisition time information is within an observation target period where stay is to be observed and the location information is within an observation area to be observed as observation target location data, a feature quantity calculation step of calculating a feature quantity of the observation target location data based on the location acquisition time information contained in the observation target location data acquired in the observation target acquisition step, an expected stay time calculation step of calculating a total value of feature quantities calculated in the feature quantity calculation step as an expected stay time representing a stay time for each identification information of mobile terminals, an estimation target terminal selection step of selecting mobile terminals to serve as a target of terminal quantity estimation based on the expected stay time, and a terminal quantity estimation step of estimating the number of mobile terminals selected in the estimation target terminal selection step.

In the terminal quantity estimation device and the terminal quantity estimation method described above, the location data whose location acquisition time information is within the observation target period and whose location information is within the observation area is acquired as the observation target location data, and a feature quantity for the observation target location data is calculated based on the location acquisition time information contained in the observation target location data. Then, the total value of feature quantities is calculated as the expected stay time indicating the stay time for each identification information of mobile terminals, and, based on the expected stay time, mobile terminals as a target of terminal quantity estimation are selected. Then, the number of mobile terminals selected as a target of terminal quantity estimation is estimated. In this manner, because the expected stay time indicating the stay time in the observation area is calculated, and the mobile terminals to serve as a target of terminal quantity estimation are selected based on the expected stay time, it is possible to estimate the number of mobile terminals that have been staying in an observation area for a desired period of time.

Further, it is preferred that the estimation target terminal selection means extracts mobile terminals for which the expected stay time is less than a predetermined passing/staying determination threshold as passing mobile terminals passing through the observation area, and selects the extracted passing mobile terminals as the mobile terminals to serve as a target of terminal quantity estimation. In this case, passing mobile terminals that pass through the observation area can be extracted by using the passing/staying determination threshold, and thereby the number of passing mobile terminals can be estimated.

Further, it is preferred that the estimation target terminal selection means extracts mobile terminals for which the expected stay time is equal to or more than a predetermined passing/staying determination threshold as staying mobile terminals staying in the observation area, and selects the extracted staying mobile terminals as the mobile terminals to serve as a target of terminal quantity estimation. In this case, staying mobile terminals that stay in the observation area can be extracted by using the passing/staying determination threshold, and thereby the number of staying mobile terminals can be estimated.

Further, it is preferred that the estimation target terminal selection means extracts mobile terminals for which the expected stay time is between two predetermined passing/staying determination thresholds as staying mobile terminals staying in the observation area, and selects the extracted staying mobile terminals as the mobile terminals to serve as a target of terminal quantity estimation. In this case, staying mobile terminals that stay in the observation area for a period of time between two predetermined passing/staying determination thresholds can be extracted by using the two passing/staying determination thresholds, and thereby the number of staying mobile terminals can be estimated.

Further, it is preferred that the terminal quantity estimation means estimates the number of mobile terminals within a predetermined estimation target period. In this case, it is possible to estimate the number of mobile terminals during the estimation target period when estimating the number of mobile terminals.

Further, it is preferred that the terminal quantity estimation device further includes a population estimation means for estimating a population of one administrative district area based on the number of mobile terminals estimated by the terminal quantity estimation means, and a ratio of the number of in-the-service-area (of the base station) terminals whose address information is one administrative district area in a predetermined wide area and a population on basis of statistical data in one administrative district area included in the wide area. In this case, it is possible to estimate a population based on the ratio of the number of in-the-service-area terminals and the population and the number of mobile terminals. Further, the population may be estimated by calculating the ratio of the number of in-the-service-area terminals across the country during the estimation target period and the population or a certain fixed value. Furthermore, a previously calculated ratio may be used instead of the estimation target period.

Further, it is preferred that the terminal quantity estimation device further includes an analysis target acquisition means for acquiring location data in which the location acquisition time information is within an analysis target period to be analyzed and the location information is within the observation area as analysis target location data, and an analysis target terminal extraction means for extracting analysis target terminals to be analyzed based on the analysis target location data acquired by the analysis target acquisition means, wherein the estimation target terminal selection means estimates mobile terminals of users living in the observation area based on the expected stay time, and selects mobile terminals remaining after excluding the mobile terminals of users estimated as living in the observation area from the analysis target terminals extracted by the analysis target terminal extraction means as the mobile terminals to serve as a target of terminal quantity estimation by the terminal quantity estimation means. In this case, mobile terminals of users who live in the observation area can be estimated by acquiring the residence estimation target location data in which the observation target period during which the stay is to be observed is a specified period of time in late night hours, for example, and using the expected stay time obtained from the feature quantity calculated based on the residence estimation target location data. Further, among the analysis target terminals that are present in the observation area during the analysis target period, mobile terminals of users who live in the observation area are excluded, and the number of remaining mobile terminals is calculated. Specifically, among users of mobile terminals that are present in the observation area during the analysis target period, the number of mobile terminals of users who return from the observation area to another area, which is, the number of mobile terminals of users who have entered the observation area from another area, can be estimated. It is thereby possible to predict those who return from the observation area to another area in the event of a disaster, for example, using the location data of mobile terminals.

Further, it is preferred that the location data further contains address information of a user of the mobile terminal, the terminal quantity estimation means estimates the number of mobile terminals for each estimation target area based on the address information of the location data corresponding to the mobile terminal, and the terminal quantity estimation device further includes a people number estimation means for estimating the number of people for each estimation target area based on the number of mobile terminals estimated for each estimation target area, and a ratio of the number of in-the-service-area terminals whose address information is one estimation target area in a predetermined wide area and a population on basis of statistical data in one estimation target area included in the wide area. In this case, among the analysis target terminals that are present in the observation area during the analysis target period, the number of remaining mobile terminals after excluding mobile terminals of users who live in the observation area is estimated for each estimation target area based on the address information of the location data. Then, the number of mobile terminals estimated for each estimation target area is converted into the number of people. Thus, among people who are present in the observation area during the analysis target period, the number of people who return from the observation area to another area can be estimated for each estimation target area.

Further, it is preferred that the terminal quantity estimation device further includes a commuter number estimation means for estimating the number of commuters unable to get home who are difficult to return from the observation area to the estimation target area based on the number of people for each estimation target area estimated by the people number estimation means and the observation area. In this case, it is possible to estimate the number of commuters unable to get home who are difficult to return from the observation area to the estimation target area among people who are present in the observation area during the analysis target period. It is thereby possible to predict commuters unable to get home who are difficult to return from the observation area to the estimation target area in the event of a disaster, for example, using the location data of mobile terminals.

Further, it is preferred that the estimation target terminal selection means selects mobile terminals remaining after excluding the mobile terminals of users estimated as living in the observation area or analysis target terminals whose address information in the location data corresponding to the analysis target terminals is within the observation area from the analysis target terminals as the mobile terminals to serve as a target of terminal quantity estimation by the terminal quantity estimation means. In this case, among the analysis target terminals that are present in the observation area during the analysis target period, mobile terminals of users who are estimated as living in the observation area or analysis target terminals whose address information is in the observation area are excluded. In other words, mobile terminals that are none of mobile terminals of users estimated as living in the observation area or analysis target terminals whose address information is in the observation area are selected. It is thereby possible to more accurately estimate the number of mobile terminals of users who return from the observation area to another area among users of mobile terminals that are present in the observation area during the analysis target period.

Further, it is preferred that the terminal quantity estimation device further includes an analysis target acquisition means for acquiring location data in which the location acquisition time information is within an analysis target period to be analyzed and the location information is within an analysis target area to be analyzed as analysis target location data, and an analysis target terminal extraction means for extracting analysis target terminals to be analyzed based on the analysis target location data acquired by the analysis target acquisition means, wherein the estimation target terminal selection means estimates mobile terminals of users living in the observation area based on the expected stay time, and extracts mobile terminals of users estimated as living in the observation area from the analysis target terminals extracted by the analysis target terminal extraction means, and selects the extracted mobile terminals as the mobile terminals to serve as a target of terminal quantity estimation by the terminal quantity estimation means. In this case, mobile terminals of users who live in the observation area can be estimated by acquiring the observation target location data in which the observation target period during which the stay is to be observed is a specified period of time in late night hours, for example, and using the expected stay time obtained from the feature quantity calculated based on the observation target location data. Further, among the analysis target terminals that are present in the analysis target area during the analysis target period, mobile terminals of users who live in the observation area are extracted, and the number of extracted mobile terminals is calculated. Specifically, among users of mobile terminals that are present in the analysis target area during the analysis target period, the number of mobile terminals of users who return from the analysis target area to the observation area, which is the place of residence, that is, the number of mobile terminals of users who have entered the analysis target area from the observation area, which is the place of residence, can be estimated. It is thereby possible to predict those who return from the analysis target area to the observation area, which is the place of residence, in the event of a disaster, for example, using the location data of mobile terminals.

Further, it is preferred that the terminal quantity estimation device further includes a people number estimation means for estimating the number of people living in the observation area among people present in the analysis target area during the analysis target period based on the number of mobile terminals estimated by the terminal quantity estimation means, and a ratio of the number of in-the-service-area terminals whose address information is one observation target area in a predetermined wide area and a population on basis of statistical data in one observation target area included in the wide area. In this case, among the analysis target terminals that are present in the analysis target area during the analysis target period, the number of mobile terminals of users who live in the observation area is estimated, and the estimated number of mobile terminals is converted into the number of people. Thus, among people who are present in the analysis target area during the analysis target period, the number of people who return from the analysis target area to the observation area, which is the place of residence, can be estimated. Note that, by setting a plurality of observation areas and estimating the number of people living in the observation area for each observation area by the people number estimation means, it is possible to estimate the number of people who return from the analysis target area to each observation area.

Further, it is preferred that the terminal quantity estimation device further includes a commuter number estimation means for estimating the number of commuters unable to get home who are difficult to return from the estimation target area to the observation area based on the number of people living in the observation area among people present in the analysis target area during the analysis target period estimated by the people number estimation means, and the estimation target area. In this case, among people who are present in the analysis target area during the analysis target period, the number of commuters unable to get home who are difficult to return from the analysis target area to the observation area can be estimated. It is thereby possible to predict commuters unable to get home who are difficult to return from the analysis target area to the observation area, which is the place of residence, in the event of a disaster, for example, using the location data of mobile terminals.

Further, it is preferred that the location data further contains address information of a user of the mobile terminal, and the estimation target terminal selection means extracts the mobile terminals of users estimated as living in the observation area or analysis target terminals whose address information in the location data corresponding to the analysis target terminals is within the observation area from the analysis target terminals, and selects the extracted mobile terminals as the mobile terminals to serve as a target of terminal quantity estimation by the terminal quantity estimation means. In this case, among the analysis target terminals that are present in the analysis target area during the analysis target period, mobile terminals of users who are estimated as living in the observation area or analysis target terminals whose address information is within the observation area are extracted. In other words, mobile terminals that correspond to at least one of mobile terminals of users who are estimated as living in the observation area and analysis target terminals whose address information in the location data corresponding to the analysis target terminal is within the observation area are extracted. It is thereby possible to more accurately estimate the number of mobile terminals of users who return from the analysis target area to the observation area, which is the place of residence, among users of mobile terminals that are present in the analysis target area during the analysis target period.

Further, it is preferred that the location data acquired by the location data acquisition means contains first registration location data containing first location information registered by the mobile terminal and second registration location data containing second location information registered by the mobile terminal, the observation target acquisition means acquires the second registration location data in which the location acquisition time information is within an observation target period where stay is to be observed and the location information is within an observation area to be observed as the observation target location data, and the terminal quantity estimation device further includes a first stay time distribution calculation means for calculating a first stay time distribution representing a relationship between a stay time of a mobile terminal staying in the observation area and the number of terminals for each stay time based on the first registration location data, a second stay time distribution calculation means for calculating a second stay time distribution representing a relationship between a stay time of a mobile terminal staying in the observation area and the number of terminals for each stay time based on the second registration location data, a correction factor calculation means for calculating a correction factor for correcting the number of mobile terminals based on a correlation between the first stay time distribution and the second stay time distribution, and a terminal quantity correction means for correcting the number of mobile terminals estimated by the terminal quantity estimation means by using the correction factor calculated by the correction factor calculation means. In this case, the observation target location data is acquired from the second registration location data by the observation target acquisition means, and, based on the observation target location data, the number of mobile terminals that have registered the second registration location data is estimated by the terminal quantity estimation means. Further, the correction factor is calculated based on the correlation between the first stay time distribution calculated on the basis of the first registration location data and the second stay time distribution calculated on the basis of the second registration location data. In this manner, by calculating the correction factor based on the correlation between the first stay time distribution and the second stay time distribution, the correction factor can correct the number of mobile terminals estimated on the basis of the second registration location data based on the first registration location data. Thus, by correcting the number of mobile terminals that have registered the second registration location data with use of the correction factor, it is possible to estimate the number of mobile terminals more accurately.

Further, it is preferred that the terminal quantity estimation device further includes a population estimation means for estimating a population of one user attribute based on the number of mobile terminals estimated by the terminal quantity estimation means, and a ratio of the number of in-the-service-area terminals having the one user attribute in a predetermined wide area and a population on basis of statistical data in the one user attribute included in the wide area. In this case, it is possible to estimate a population based on the ratio of the number of in-the-service-area terminals and the population and the corrected number of mobile terminals.

Further, it is preferred that the terminal quantity estimation device further includes a before and after location data acquisition means for acquiring, for certain first location data of the observation target location data, location acquisition time information of second location data immediately before the first location data and location acquisition time information of third location data immediately after the first location data among location data containing the same identification information as the first location data, wherein the feature quantity calculation means calculates a feature quantity for the first location data based on two or more of a location acquisition time of the first location data, a location acquisition time of the second location data and a location acquisition time of the third location data. In this case, it is possible to calculate a feature quantity based on the location acquisition time information of the location data.

## Advantageous Effects of Invention

According to the present invention, it is possible to estimate the number of mobile terminals that have been staying in an observation area for a desired period of time.

## Brief Description of Drawings

Fig. 1 is a diagram showing a system configuration of a communication system according to a first embodiment.
Fig. 2 is a diagram showing a configuration of a terminal quantity estimation device.
Fig. 3 is a diagram showing location data transmission timing for each mobile terminal.
Fig. 4 is a diagram showing a specific example of a terminal quantity estimation process in an estimation target period.

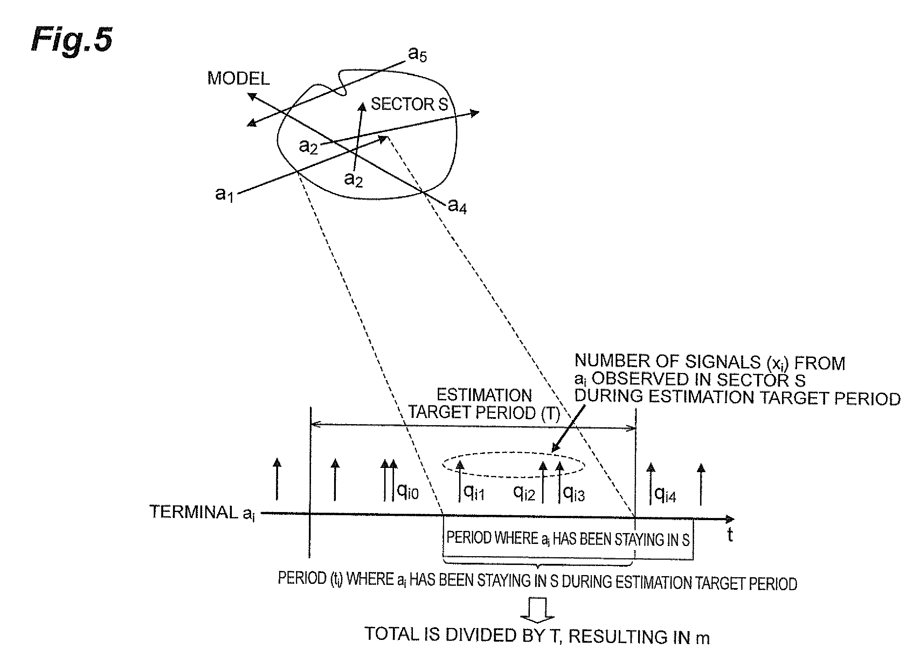

Fig. 5 is a diagram to describe a concept of terminal quantity estimation.
Fig. 6 is a diagram to describe a calculation method for terminal quantity estimation.
Fig. 7 is a flowchart showing a terminal quantity estimation process for mobile terminals.
Fig. 8 is a flowchart showing a feature quantity calculation process.
Fig. 9 is a diagram showing a configuration of an alternative example of a terminal quantity estimation device.
Fig. 10 is a flowchart showing an alternative example of a terminal quantity estimation process for mobile terminals.
Fig. 11 is a diagram showing a configuration of an alternative example of a terminal quantity estimation device.
Fig. 12 is a diagram showing a configuration of a terminal quantity estimation device according to second and third embodiments.
Fig. 13 is a diagram showing location data transmission timing for each mobile terminal.
Fig. 14 is a diagram showing a relationship between an analysis target terminal and a mobile terminal of a user living in an analysis target area.
Fig. 15 is a diagram showing an example of classification of staying people.
Fig. 16 is a diagram showing an example of data output from an output portion.
Fig. 17 is a flowchart showing a process of creating an estimated residence terminal list.
Fig. 18 is a flowchart showing a process of estimating commuters unable to get home.

Fig. 19 is a diagram showing a relationship between an analysis target terminal and a mobile terminal of a user living in an observation area.

Fig. 20 is an example of aggregation of those who return to an observation area.

Fig. 21 is a flowchart showing a process of estimating commuters unable to get home.

Fig. 22 is a diagram showing a configuration of a terminal quantity estimation device according to a fourth embodiment.

Fig. 23 is a diagram showing an example of location registration signal location data and GPS signal location data.

Fig. 24 is a diagram showing a procedure of calculating a location registration signal stay time distribution.

Fig. 25 is a diagram showing a bar graph of a location registration signal stay time distribution.

Fig. 26 is a diagram showing a bar graph of a GPS signal stay time distribution.

Fig. 27 is a diagram showing an approximate curve of a bar graph of a GPS information stay time distribution.

Fig. 28 is a diagram showing a relationship between a location registration signal stay time distribution and a GPS signal stay time distribution when calculating a correction factor.

Fig. 29 is a diagram showing a corrected terminal quantity distribution of mobile terminals for each stay time.

Fig. 30 is a flowchart showing a terminal quantity estimation process for mobile terminals.

Fig. 31 is a flowchart showing a process of calculating a correction factor.

Fig. 32 is a diagram showing a configuration of an alternative example of a terminal quantity estimation device.

Fig. 33 is a diagram showing a terminal quantity distribution of mobile terminals at each time.

Fig. 34 is a diagram showing a terminal quantity distribution of mobile terminals for each stay time.

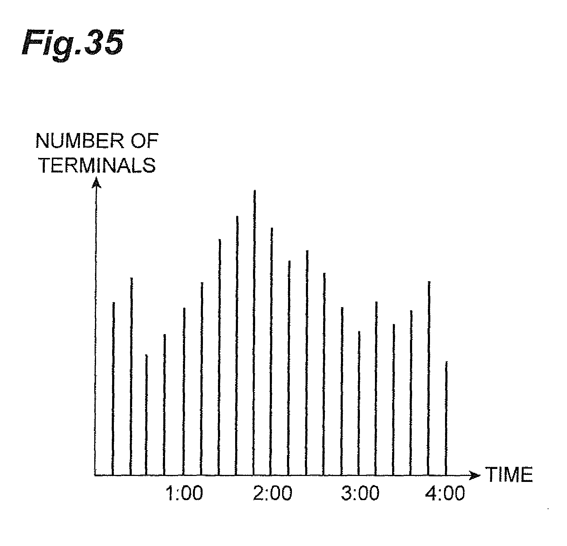

Fig. 35 is a diagram showing a terminal quantity distribution of mobile terminals at each time.

## Description of Embodiments

Preferred embodiments of the present invention are described hereinafter with reference to the appended drawings. Where possible, the same elements are denoted by the same reference numerals and repeated explanation thereof is omitted.

[First Embodiment]

[Configuration of Communication System]

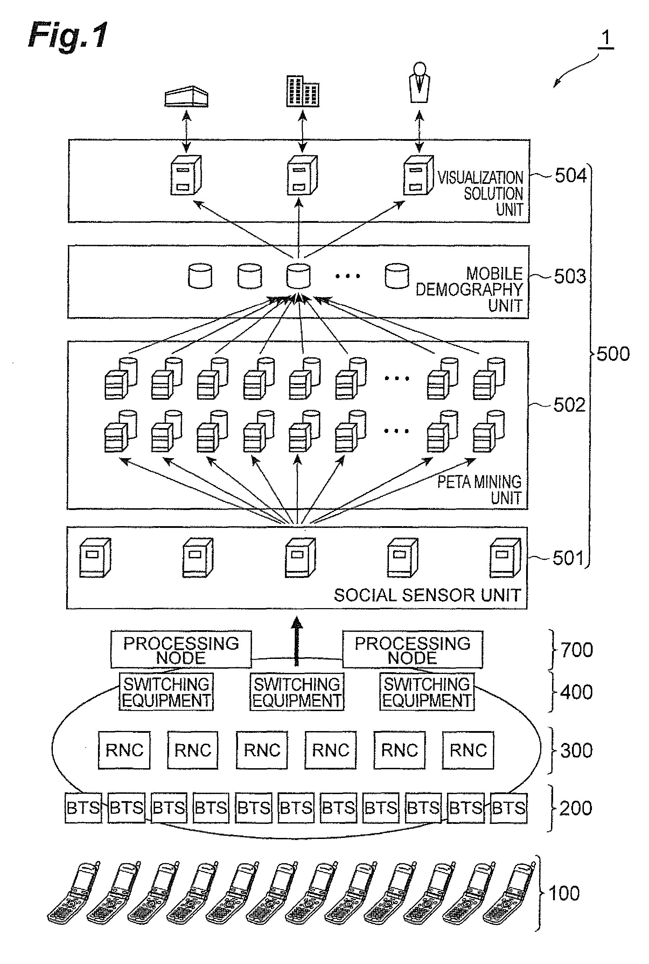

Fig. 1 is a system configuration diagram of a communication system 1 according to a first embodiment. As shown in Fig. 1, the communication system 1 includes a mobile terminal 100, a BTS (Base Transceiver Station) 200, an RNC (Radio Network Controller) 300, a switching equipment 400, various types of processing nodes 700, and a control center 500. Further, the control center 500 includes a social sensor unit 501, a peta mining unit 502, a mobile demography unit 503, and a visualization solution unit 504.

The switching equipment 400 collects location information, which is described later, of a mobile terminal 100 through the BTS 200 and the RNC 300. The RNC 300 can measure the location of the mobile terminal 100 using a delay value in an RRC connection request signal when communication connection is performed with the mobile terminal 100. The switching equipment 400 can receive the location information of the mobile terminal 100 measured in this manner when the mobile terminal 100 executes communication connection. The switching equipment 400 stores the received location information and outputs the collected location information to the control center 500 at predetermined timing or in response to a request from the control center 500.

The various types of processing nodes 700 acquire location information of the mobile terminal 100 through the RNC 300 and the switching equipment 400, perform recalculation of the location or the like in some cases, and output the collected location information to the control center 500 at predetermined timing or in response to a request from the control center 500.

As the location information of the mobile terminal 100 according to this embodiment, a sector number indicating a location sector that is obtained by a location registration signal, location measurement data obtained by a GPS system or a location information acquisition system by PRACH PD and the like may be used. The location data of the mobile terminal 100 contains the location information, identification information for identifying the mobile terminal (for example, information such as a line number associated with a mobile terminal), and location acquisition time information indicating the time when the location information is acquired. Note that, in the case of using a line number as the identification information, it is preferred to perform anonymization using a value associated with the line number (for example, a hash value of the line number etc.) rather than using the line number as it is.

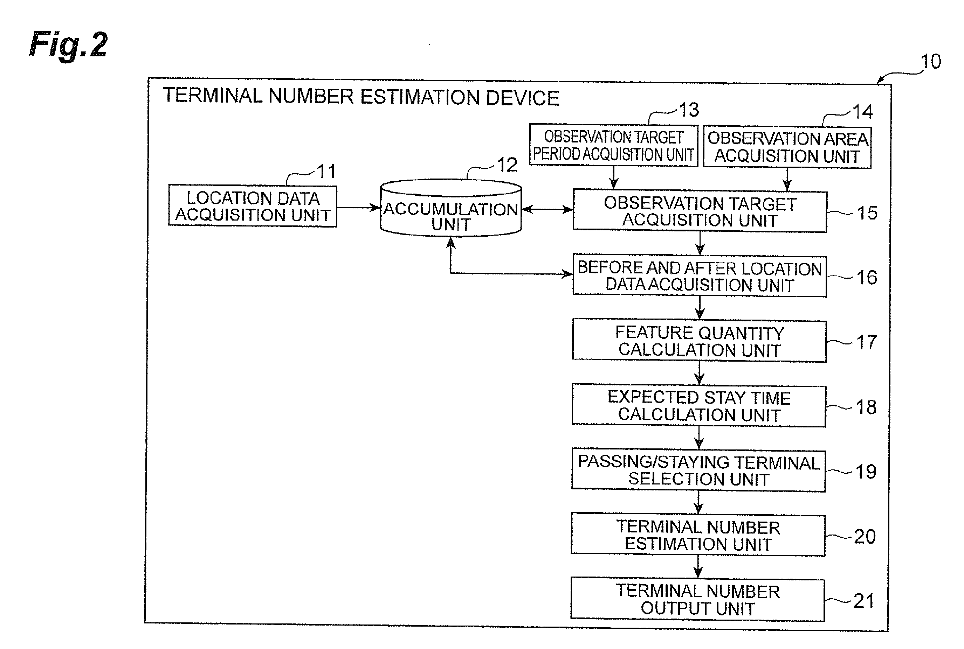

The control center 500 includes the social sensor unit 501, the peta mining unit 502, the mobile demography unit 503, and the visualization solution unit 504 as described above, and each unit performs statistical processing using the location information of the mobile terminal 100. Note that a terminal quantity estimation device 10 (Fig. 2), which is described later, can be configured by the control center 500, for example.

The social sensor unit 501 is a server device that collects data containing the location information of the mobile terminal 100 and the like from each switching equipment 400 and various types of processing nodes 700, or offline. The social sensor unit 501 is configured to be able to receive data output from the switching equipment 400 and the various types of processing nodes 700 at regular intervals or acquire data from the switching equipment 400 and the various types of processing nodes 700 according to the timing predetermined in the social sensor unit 501.

The peta mining unit 502 is a server device that converts the data received from the social sensor unit 501 into a predetermined data format. For example, the peta mining unit 502 performs sorting using the user ID as a key or sorting by area.

The mobile demography unit 503 is a server device that performs aggregation processing of the data processed in the peta mining unit 502, which is, counting of each item. For example, the mobile demography unit 503 can count the number of users located in a certain area or perform aggregation of the area distribution.

The visualization solution unit 504 is a server device that processes the data aggregated in the mobile demography unit 503 into visible. For example, the visualization solution unit 504 can map the aggregated data onto a map. The data processed in the visualization solution unit 504 is provided to corporations, government and other public offices or individuals and used for retail development, road traffic survey, disaster risk management, environmental protection and the like. Note that the statistically processed information is processed so as not to identify individuals and the like to avoid invasion of privacy as a matter of course.

It should be noted that the social sensor unit 501, the peta mining unit 502, the mobile demography unit 503 and the visualization solution unit 504 are server devices as described above, and they have a basic configuration of a typical information processing device (specifically, CPU, RAM, ROM, input device such as keyboard and mouse, communication device that performs communication with the outside, storage device that stores information, output device such as display and printer) as a matter of course, though not shown.

[Configuration of Terminal quantity Estimation Device]

A terminal quantity estimation device according to the first embodiment is described hereinafter. Fig. 2 shows a functional block diagram of the terminal quantity estimation device 10. As shown in Fig. 2, the terminal quantity estimation device 10 includes a location data acquisition portion (location data acquisition means) 11, an accumulation portion 12, an observation target period acquisition portion 13, an observation area acquisition portion 14, an observation target acquisition portion (observation target acquisition means) 15, a before and after location data acquisition portion (before and after location data acquisition means) 16, a feature quantity calculation portion (feature quantity calculation means) 17, an expected stay time calculation portion (expected stay time calculation means) 18, a passing/staying terminal selection portion (estimation target terminal selection means) 19, a terminal quantity estimation portion (terminal quantity estimation means) 20, and a terminal quantity output portion 21.

The function of each portion of the terminal quantity estimation device 10 of Fig. 2 is described hereinafter. The location data acquisition portion 11 acquires the above-described location data from the outside and stores them into the accumulation portion 12. Note that the location data acquisition portion 11 is not necessarily placed in the terminal quantity estimation device 10, and the location data acquired by a location data acquisition portion that is outside of the terminal quantity estimation device 10 may be input to the terminal quantity estimation device 10 through a storage medium, for example. The accumulation portion 12 stores the location data over a plurality of points of time about a plurality of users (mobile terminals). The observation target period acquisition portion 13 acquires observation target period information containing a set of the start time and the end time for grasping the state of stay. The observation area acquisition portion 14 acquires observation area information associated with one or a plurality of location information. The observation area information is given as a sector number, latitude and longitude, a geographical range (for example, cities and towns) or the like, for example, and the observation area acquisition portion 14 preferably has a database that manages information that associates the form of presentation of the acquired observation area information and the form of presentation of the location information (for example, correspondence information between a sector number and latitude and longitude etc.).

The observation target acquisition portion 15 acquires, as observation target location data, the location data whose location acquisition time information is within the observation target period and whose location information is within the observation area to be observed. Note that the observation target location data may be narrowed down by a given condition (such as an age group of mobile terminal users etc.). The observation target location data serves as a target of feature quantity calculation by the feature quantity calculation portion 17.

The before and after location data acquisition portion 16 acquires, for the observation target location data (which is referred to hereinafter as "first location data"), location acquisition time information of location data immediately before the first location data (hereinafter as "second location data") and location acquisition time information of location data immediately after the first location data (hereinafter as "third location data") among location data containing the same identification information as the first location data. Note that the before and after location data acquisition portion 16 does not necessarily acquire the whole of the second or third location data and may at least acquire the location acquisition time information contained in the location data.

The feature quantity calculation portion 17 calculates a feature quantity for each of the first location data. For example, the feature quantity calculation portion 17 calculates a difference between the location acquisition time of the second location data and the location acquisition time of the third location data as a feature quantity of the first location data. Further, when the location acquisition time of the second location data is an abnormal value, which is the case where a difference between the location acquisition time of the first location data and the location acquisition time of the second location data is larger than a specified reference value (for example, one hour) in this example, the feature quantity calculation portion 17 calculates the feature quantity of the first location data by using the time that is earlier than the location acquisition time of the first location data by a predetermined time (for example, one hour) as the location acquisition time of the third location data. Likewise, when the location acquisition time of the third location data is an abnormal value, which is the case where a difference between the location acquisition time of the first location data and the location acquisition time of the third location data is larger than a specified reference value (for example, one hour) in this example, the feature quantity calculation portion 17 calculates the feature quantity of the first location data by using the time that is later than the location acquisition time of the first location data by a predetermined time (for example, one hour) as the location acquisition time of the third location data. Such a process that is performed when the location acquisition time of the second or third location data is an abnormal value is not essential; however, by performing the above process, when the acquisition time interval of the location data becomes abnormally long due to the fact that the mobile terminal 100 is located outside of an area or the mobile terminal 100 is power off, it is possible to prevent the abnormally long acquisition time interval from causing serious effects.

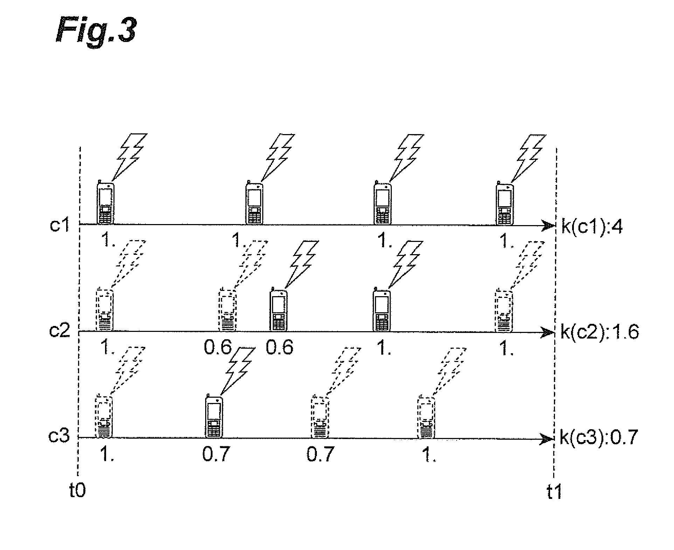

The expected stay time calculation portion 18 calculates the total value of the feature quantities calculated by the feature quantity calculation portion 17 as an expected stay time (in units of time) indicating a stay time for each of the identification information of a mobile terminal. A specific example of the expected stay time is described. Fig. 3 is a diagram showing location data transmission timing for each mobile terminal. Fig. 3 shows the timing when each of three mobile terminals (with identification information af $c_1$, $c_2$ and $c_3$) has transmitted the location data (it is assumed that the location data is transmitted at the timing when the mobile terminal is represented by a solid line or a dotted line). Further, the location data that is transmitted when the mobile terminal is represented by a solid line indicates the case where it is transmitted from the inside of an observation area to be observed, and the location data that is transmitted when the mobile terminal is represented by a dotted line indicates the case where it is transmitted from the outside of an observation area to be observed. Further, the numeric shown under the mobile terminal represented by a solid line or a dotted line indicates a feature quantity for the location data that is transmitted at the timing when the mobile terminal is represented. The observation target period is time t0 to time t1. For example, in the case of calculating the expected stay time of the mobile terminal with the identification information of $c_2$ shown in Fig. 3, the total value 1.6(=0.6+1) of the feature quantities for the location data transmitted from the inside of an observation area to be observed is calculated as the expected stay time $k(c_2)$. Likewise, the expected stay time $k(c_1)$ of the mobile terminal with the identification information of $c_1$ is 4(=1+1+1+1), and the expected stay time $k(c_3)$ of the mobile terminal with the identification information of $c_3$ is 0.7

The passing/staying terminal selection portion 19 sorts the mobile terminals into those have passed through the observation area to be observed and those are staying in the observation area to be observed during the observation target period. Specifically, the passing/staying terminal selection portion 19 selects a mobile terminal whose expected stay time calculated by the expected stay time calculation portion 18 is less than a predetermined passing/staying determination threshold as a passing mobile terminal that passes through the observation area and selects a mobile terminal whose expected stay time is equal to or more than the passing/staying determination threshold as a staying mobile terminal that stays in the observation area for a period of the passing/staying determination threshold or longer. Note that the passing/staying determination threshold represents a time (in units of time). The passing mobile terminal and the staying mobile terminal serve as a target of estimation of the number of mobile terminals in the terminal quantity estimation portion 20. In this embodiment, the passing/staying determination threshold is "1", and the mobile terminals with the identification information of $c_1$ and $c_2$ shown in Fig. 3 are selected as the staying mobile terminal, and the mobile terminal with the identification information of $c_3$ is selected as the passing mobile terminal.

The terminal quantity estimation portion 20 estimates the number of passing mobile terminals and staying mobile terminals that are selected as the estimation target by the passing/staying terminal selection portion 19. Note that the terminal quantity estimation portion 20 may estimate the number of both of the passing mobile terminals and the staying mobile terminals selected by the passing/staying terminal selection portion 19 or calculate the number of either one of them.

First, the case where the terminal quantity estimation portion 20 estimates the number of staying mobile terminals is described. When the terminal quantity estimation portion 20 estimates the number of staying mobile terminals, it estimates the number of staying mobile terminals during a predetermined estimation target period to be observed. A specific example of terminal quantity estimation process during the estimation target period is described hereinafter.

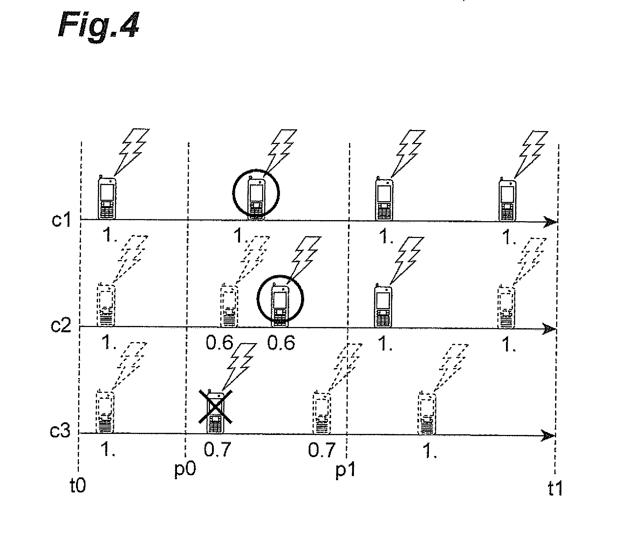

Fig. 4 is a diagram showing a specific example of a terminal quantity estimation process in an estimation target period. Note that, it is assumed in Fig. 4 that the mobile terminals with the identification information of c1 and c2 are selected as the staying mobile terminal as described with reference to Fig. 3. Further, Fig. 4 shows the case where the estimation target period (time p0 to p1) is included in the observation target period (time t0 to t1). As shown in Fig. 4, the terminal quantity estimation portion 20 extracts the feature quantity 1 and the feature quantity 0.6 (the feature quantities of the observation target location data where the mobile terminals are indicated by circles in Fig. 4), which are the feature quantities of the observation target location data of the mobile terminals with the identification information of c1 and c2 and whose location acquisition time information is within the estimation target period p0 to p1, and calculates the total value 1.6 of the extracted feature quantities. Then, the terminal quantity estimation portion 20 divides the calculated total value of the feature quantities by twice the time length of the estimation target period (time p1-time p0) to thereby obtain the number of staying mobile terminals.

Note that, although the example of calculating the number of passing mobile terminals and staying mobile terminals by using the total value of the feature quantities calculated for sorting between passing and staying is described above, the feature quantity for terminal quantity calculation may be calculated separately based on the observation target location data of each of passing mobile terminals and staying mobile terminals, and the number of passing mobile terminals and staying mobile terminals may be calculated respectively based on the calculated feature quantity for terminal quantity calculation.

Further, although the case where the estimation target period (time p0 to p1) is included in the observation target period (time t0 to tl), which is the case of time t0<time p0<time p1<time t1, is described above, the estimation target period may be outside the observation target period (for example, time t0<time t1<time p0<time p1), and the observation target period and the estimation target period may be the same (t0=p0, t1=p1).

Further, a specific example of the number of staying mobile terminals estimated by the terminal quantity estimation portion 20 is the number of mobile terminals of visitors to an event venue (observation area) with an event time of time t0 to t1 (observation target period) whose stay time is a specified time or more (the expected stay time is a specified value or more) during the time p0 to p1 (estimation target period), for example. Another specific example is the number of mobile terminals when users of mobile terminals who have been in an event venue (observation area) with an event time of time t0 to t1 (observation target period) (which are users of mobile terminals with the expected stay time of (time t1-t0) or more) keep staying the same venue after that, for example.

Next, the case where the terminal quantity estimation portion 20 estimates the number of passing mobile terminals is described. Note that, when the terminal quantity estimation portion 20 estimates the number of passing mobile terminals, it estimates the number of passing mobile terminals during a predetermined estimation target period to be observed, just like the case when estimating the number of staying mobile terminals described above. As shown in Fig. 4, the terminal quantity estimation portion 20 extracts the feature quantity 0.7 (the feature quantity of the observation target location data where the mobile terminals are indicated by cross in Fig. 4), which is the feature quantity of the observation target location data of the mobile terminal with the identification information of c3 selected as the passing mobile terminal and whose location acquisition time information is within the estimation target period p0 to p1, and calculates the total value of the extracted feature quantities (which is 0.7 in this example). Then, the terminal quantity estimation portion 20 divides the calculated total value of the feature quantities by twice the time length of the estimation target period (time p1-time p0) to thereby obtain the number of passing mobile terminals.

Note that the above-described estimation method of the number of mobile terminals in the terminal quantity estimation portion 20 is one example, and it is not limited to a specific method, and various methods may be used. For example, as another terminal quantity estimation method, the method disclosed in Japanese Patent Application No. 2010-221456 filed in advance by the present applicant or the like may be used. This method includes a series of steps in which an information analysis device receives location information indicating a location of a user, positioning time information when the location information is obtained, and point data containing a user ID from the outside, extracts point data whose positioning time is just before a target time and point data whose positioning time is just after the target time from the point data for each user, makes interpolation between a position indicated by the point data just before the target time and a position indicated by the point data just after the target time for each user and thereby estimates a location of the user at the target time, and calculates a population distribution in units of specified calculation target areas at the target time based on the estimated location of each user, and this method may be applied to the terminal quantity estimation.

The terminal quantity output portion 21 outputs the number of passing mobile terminals and the number of staying mobile terminals estimated by the terminal quantity estimation portion 20. The output may be done in various ways, such as display output, audio output and print output. Note that, in the terminal quantity estimation device 10, the observation target acquisition portion 15, the feature quantity calculation portion 17, the expected stay time calculation portion 18, the passing/staying terminal selection portion 19 and the terminal quantity estimation portion 20 are essential elements, and the other elements are not necessarily included in the terminal quantity estimation device 10.

[Concept and Calculation Method of Terminal Quantity Estimation]

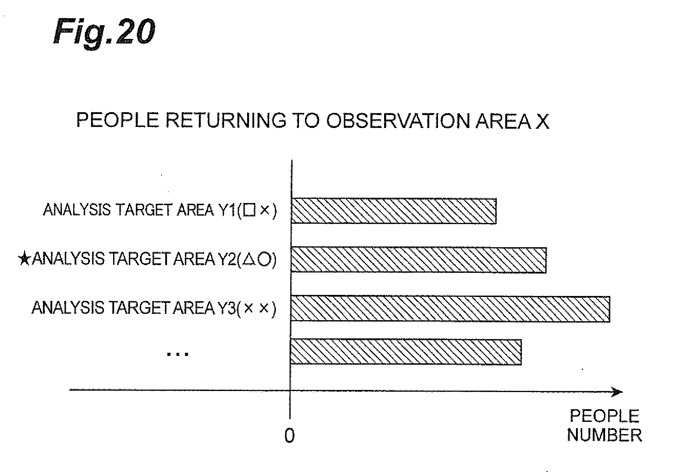

The concept and a calculation method of terminal quantity estimation are described hereinafter. As shown in the model of Fig. 20, assume that, during a certain estimation target period (with a length T), n number of terminals $a_1$, $a_2$,..., $a_n$ pass through an area S and the stay time of each terminal $a_i$ in the area S during the estimation target period is $t_i$ ($0 < t_i \leq T$). At this time, the number of mobile terminals m located in the area S (in practice, the average value of the number of terminals m located in the area S during the estimation target period) is represented by the following equation (1).

[Number (1)]

[数 1]

$$m = \sum_{i=1}^{n} t_i / T \qquad (1)$$

Specifically, a result of dividing the total of the stay time $t_i$ of each terminal $a_i$ in the area S during the estimation target period by the length T of the estimation target period is estimated as the number of terminals m. Note that, although the true value of the stay time $t_i$ of each terminal $a_i$ in the area S during the estimation target period is not observable, each terminal $a_i$ transmits a signal (for example, a location registration signal containing location registration information), and the signal is observable.

If the signal that is transmitted by the terminal $a_i$ in the area S during the estimation target period is

[Number (2)]

[数 2]

$$q_{i1}, \quad q_{i2}, ..., \quad q_{ix_i}$$

(where $x_i$ is the total number of signals transmitted by the terminal $a_i$ in the area S during the estimation target period) in order of time, the estimation of the number of mobile terminals is to estimate the value of m from the observed signals $q_{ij}$ (j is an integer from 1 to $x_i$).

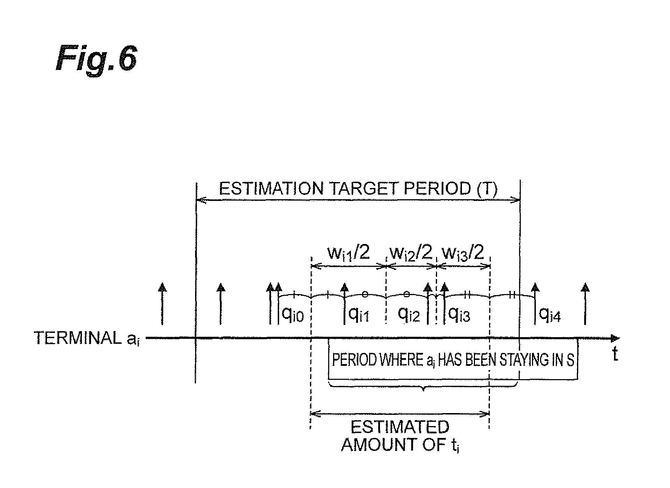

A calculation method for the terminal quantity estimation is described with reference to Fig. 6. Assume that the density of transmitting the signals $q_{ij}$ from the terminal $a_i$ (which is the number of signals per unit time) is $p_i$. At this time, when the probability that the signals are transmitted is independent of sector, an expected value $E(x_i)$ of the total number $x_i$ of signals transmitted by the terminal $a_i$ in the sector S during the estimation target period is $E(x_i) = t_i \times p_i$, and the expected value $E(t_i)$ of the stay time $t_i$ of the terminal $a_i$ in the sector S during the estimation target period is represented by the following equation (2).

$$E(t_i) = x_i / p_i \qquad (2)$$

When the transmitted time of the signals $q_{ij}$ is $u_{ij}$, the density $p_{ij}$ of the signals $q_{ij}$ is represented by the following equation (3).

$$p_{ij} = 2 / (u_{i(j+1)} - u_{i(j-1)}) \qquad (3)$$

When the signal $q_{ij}$ is a signal related to the first location data, the signal $q_{i(j-1)}$ corresponds to a signal related to the second location data, and the signal $q_{i(j+1)}$ corresponds to a signal related to the third location data. In this embodiment, a difference between the transmitted time $u_{i(j-1)}$ of the signal $q_{i(j-1)}$ related to the second location data and the transmitted time $u_{i(j+1)}$ of the signal $q_{i(j+1)}$ related to the third location data, which is $(u_{i(j+1)}-u_{i(j-1)})$ of the above equation (3), is used as a feature quantity $w_{ij}$ of the first location data (feature quantity $w_{ij}=u_{i(j+1)}-u_{i(j-1)}$). Accordingly, the above equation (3) can be represented as follows.

$$p_{ij}=2/(u_{i(j+1)}-u_{i(j-1)})=2/w_{ij} \qquad (4)$$

Because the density $p_i$ is given as

[Number (3)]

[数3]

$$p_i = x_i \Big/ E\ (t_i)\ = (x_i \Big/ \sum_{j=1}^{x_i} w_{ij}) \times 2 \qquad (5)$$

the estimated value E(m) of the number of mobile terminals m can be calculated by the following equation (6):

[Number (4)]

[数4]

$$E\ (m)\ = (\sum_{i=1}^{n} \sum_{j=1}^{x_i}(w_{ij}/2))\ /T = (\sum_{i=1}^{n} \sum_{j=1}^{x_i} w_{ij})\ /2T \qquad (6)$$

As shown in the example of Fig. 4, assume that, during the period which is within the estimation target period and in which the terminal $a_i$ stays in the sector S, the terminal $a_i$ transmits the signals $q_{i1}$, $q_{i2}$ and $q_{i3}$ and transmits the signal $q_{i0}$ immediately before the signals $q_{i1}$ and transmits the signals $q_{i4}$ immediately after the signal $q_{i3}$, and the transmitted times of the signals $q_{i0}$, $q_{i1}$, $q_{i2}$, $q_{i3}$ and $q_{i4}$ are $u_{i0}$, $u_{i1}$, $u_{i2}$, $u_{i3}$ and $u_{i4}$, respectively, the above concept is equivalent of estimating the stay time $t_i$ of the terminal $a_i$ in the sector S during the estimation target period as a period from (a midpoint between $u_{i0}$ and $u_{i1}$) to (a midpoint between $u_{i3}$ and $u_{i4}$). Note that the terminal $a_i$ transmits the signal $q_{i4}$ during the stay in the sector S, though it is not within the estimation target period. However, the estimation is not made assuming that the end time of the stay time $t_i$ is the same as the end time of the estimation target period T. The unbiasedness of the estimated amount of the stay time $t_i$ is thereby maintained.

[Terminal Quantity Estimation Process]

A terminal quantity estimation process according to the terminal quantity estimation method of the present invention is described hereinafter. It is assumed that a sector number of a sector where a mobile terminal is located is given as the location information contained in the location data of the mobile terminal.

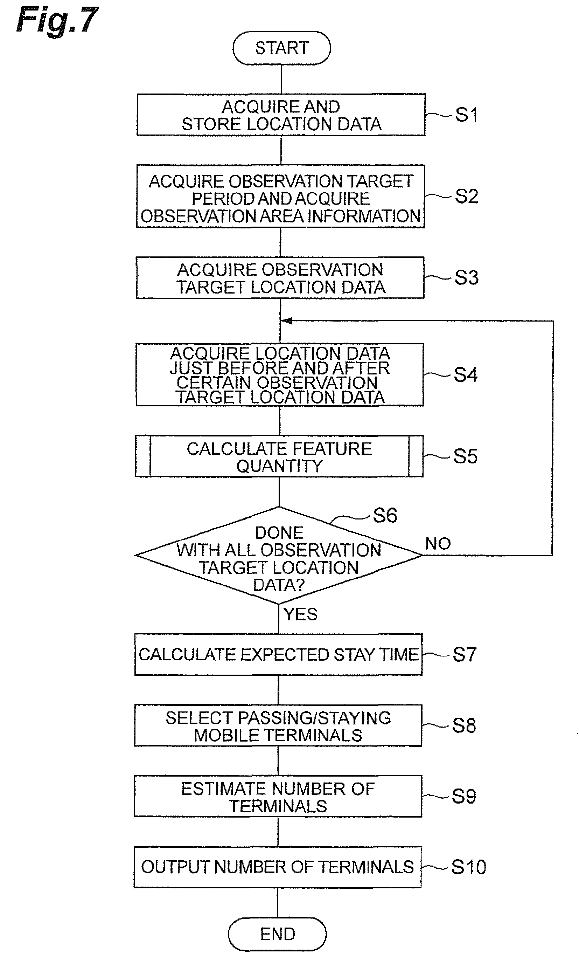

As shown in Fig. 7, the location data acquisition portion 11 first acquires location data from the outside and stores the location data into the accumulation portion 12 (Step S1 in Fig. 7: location data acquisition step). The accumulation portion 12 thereby stores the location data over a plurality of points of time about a plurality of users (mobile terminals). Note that, after the processing of Step S1, the processing of Step S2 and the subsequent steps may be carried after some time interval. In other words, Step S1 may be executed as a preparation for the processing of Step S2 and the subsequent steps.

Next, the observation target period acquisition portion 13 acquires the observation target period information containing a set of the start time and the end time, and the observation area acquisition portion 14 acquires the observation area information associated with one or a plurality of location information (Step S2). In this example, it is assumed that a set of the start time t0 and the end time t1 is acquired as the observation target period information, and a sector number S is acquired as the observation area information.

Next, the observation target acquisition portion 15 acquires one or a plurality of location data containing the location acquisition time information between the start time t0 and the end time t1 and further containing the location information associated with the sector number S as the observation area information (for example, the location information is the sector number S) as observation target location data from the accumulation portion 12 (Step S3: observation target acquisition step). Thus, the observation target acquisition portion 15 acquires the location data that matches the following conditions as the observation target location data.

Condition 1: The location acquisition time is between the start time t0 and the end time t1, i.e., within the observation target period

Condition 2: The location information is the sector S

Then, for each of the acquired observation target location data, the processing of the following Steps S4 and S5 is performed. In Step S4, the before and after location data acquisition portion 16 acquires, for the location data (first location data) for which a feature quantity is to be obtained among the observation target location data, location acquisition time information of location data immediately before the first location data (second location data) and location acquisition time information of location data immediately after the first location data (third location data) among the location data containing the same identification information as the first location data.

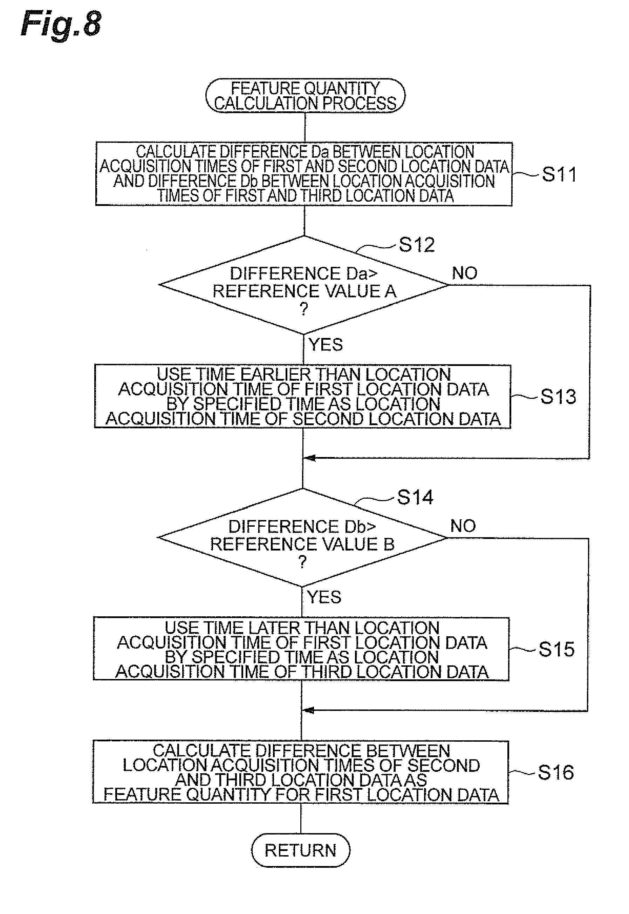

Then, in Step S5 (feature quantity calculation step), the feature quantity calculation portion 17 calculates the feature quantity of the first location data. This processing is described with reference to Fig. 8. It is assumed in this example that the location acquisition times of the first, second and third location data are $z1$, $z2$ and $z3$, respectively. Further, a specified reference value to serve as a reference for determining that the location acquisition time $z2$ of the second location data is an abnormal value (a reference value for a difference between the location acquisition times of the first and second location data) is a reference value A (for example, one hour), and a specified reference value to serve as a reference for determining that the location acquisition time $z3$ of the third location data is an abnormal value (a reference value for a difference between the location acquisition times of the first and third location data) is a reference value B (for example, one hour).

The feature quantity calculation portion 17 calculates a difference between the location acquisition times of the first and second location data (which is a difference between times $z1$ and $z2$) Da and a difference between the location acquisition times of the first and third location data (which is a difference between times $z1$ and $z3$) Db (Step S11 in Fig. 8). Then, the feature quantity calculation portion 17 determines whether the difference Da between the location acquisition times of the first and second location data is larger than the specified reference value A (for example, one hour) (Step S 12) and, when the difference Da is larger than the reference value A, it uses the time that is earlier than the location acquisition time $z1$ of the first location data by a predetermined time (for example, one hour) as the location acquisition time $z2$ of the second location data (Step S13). Next, the feature quantity calculation portion 17 determines whether the difference Db between the location acquisition times of the first and third location data is larger than the specified reference value B (for example, one hour) (Step S 14) and, when the difference Db is larger than the reference value B, it uses the time that is later than the location acquisition time $z1$ of the first location data by a predetermined time (for example, one hour) as the location acquisition time $z3$ of the third location data (Step S15). Then, the feature quantity calculation portion 17 calculates a difference between the location acquisition time $z2$ of the second location data and the location acquisition time $z3$ of the third location data as the feature quantity for the first location data (Step S16). The processing of Steps S4 and S5 for one observation target location data (first location data) thereby ends.

After that, the processing of Steps S4 and S5 described above is performed for each of the observation target location data, and when the processing is done with all of the observation target location data (Yes in Step S6), the process proceeds to Step S7.

In Step S7, the expected stay time calculation portion 18 calculates the expected stay time indicating the stay time based on the calculated feature quantity (expected stay time calculation step). Then, the passing/staying terminal selection portion 19 selects the mobile terminal whose feature quantity is less than the passing/staying determination threshold as the passing mobile terminal that passes through the observation area, and selects the mobile terminal whose feature quantity is equal to or more than the passing/staying determination threshold as the staying mobile terminal that stays in the observation area for a period of the passing/staying determination threshold or longer (Step S8: estimation target terminal selection step).

Then, the terminal quantity estimation portion 20 estimates the number of passing mobile terminals and staying mobile terminals selected by the passing/staying terminal selection portion 19 (Step S9: terminal quantity estimation step). Further, the terminal quantity output portion 21 outputs the number of terminals obtained by the estimation (Step S10).

As described above, according to the first embodiment, the expected stay time calculation portion 18 calculates the expected stay time in the observation area and, based on the expected stay time, the passing/staying terminal selection portion 19 selects the mobile terminals as a target of terminal quantity estimation. Then, the terminal quantity estimation portion 20 estimates the number of mobile terminals calculated as the estimation target. In this manner, the terminal quantity estimation device 10 can estimate the number of mobile terminals that have been staying in the observation area for a desired time period.

Further, the passing/staying terminal selection portion 19 extracts the passing mobile terminals that pass through the observation area by using the passing/staying determination threshold, and thereby the terminal quantity estimation portion 20 can estimate the number of passing mobile terminals.

Furthermore, the passing/staying terminal selection portion 19 extracts the staying mobile terminals that stay in the observation area by using the passing/staying determination threshold, and thereby the terminal quantity estimation portion 20 can estimate the number of staying mobile terminals.

[Alternative Example of Terminal Quantity Estimation Process according to First Embodiment]

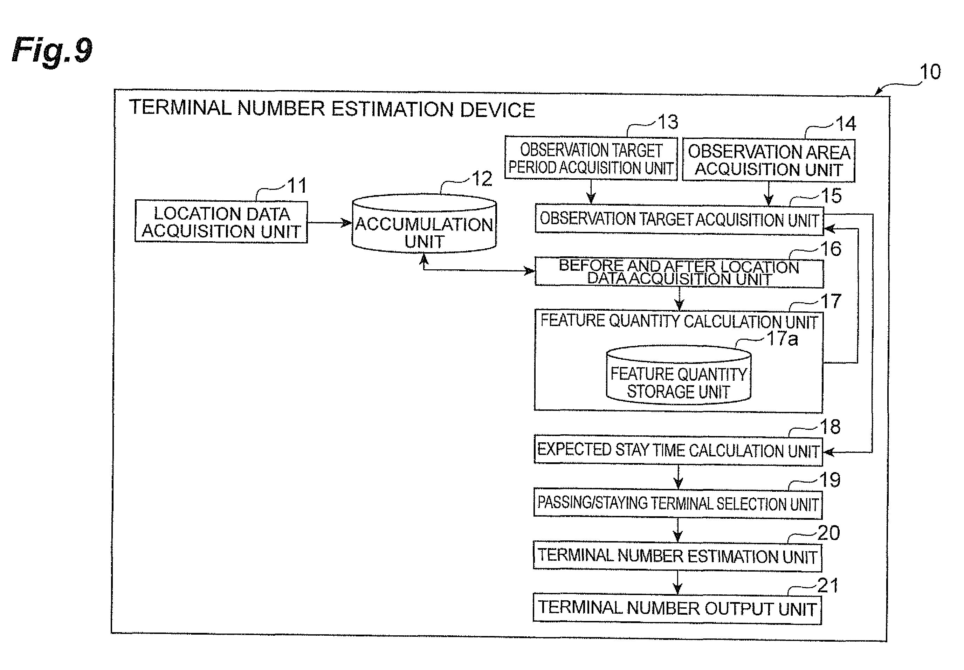

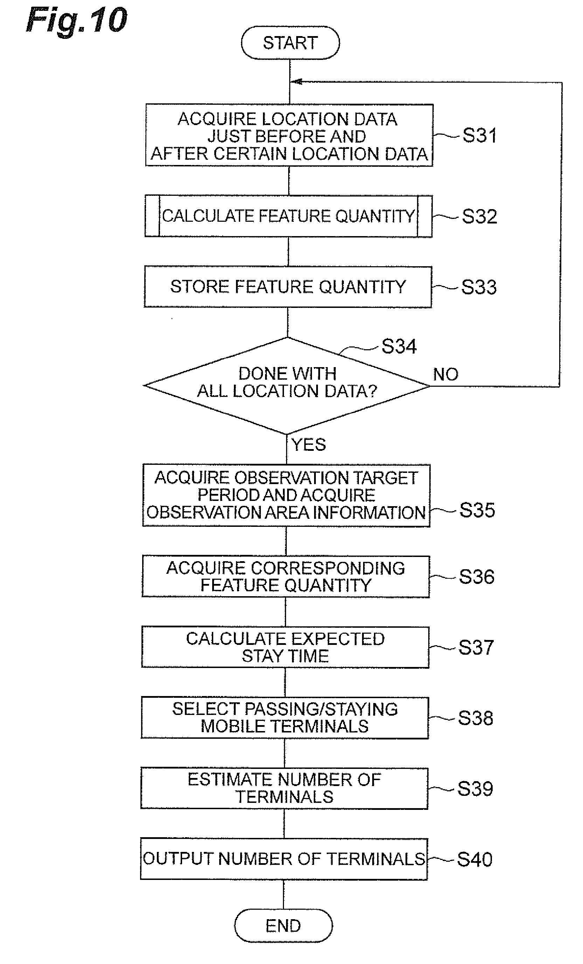

An alternative example of the process of estimating the number of passing mobile terminals and staying mobile terminals is described hereinafter. In the above-described terminal quantity estimation process of passing mobile terminals and staying mobile terminals, the location data for which the feature quantity is calculated is limited to the observation target location data; however, as an alternative example, after calculating the feature quantities for all of the acquired location data, the feature quantity to be used for estimation may be selected among them. Fig. 9 shows a configuration example of the terminal quantity estimation device 10 according to this alternative example, and Fig. 10 shows a terminal quantity estimation process of mobile terminals.

Specifically, as shown in Fig. 9, the terminal quantity estimation device 10 according to this alternative example includes the same elements as in the first embodiment (Fig. 2) described above, and the functions of the respective elements are substantially the same, and therefore differences from the first embodiment (Fig. 2) are mainly described below.

The before and after location data acquisition portion 16 acquires, for each of the first location data which are all the location data acquired by the location data acquisition portion 11, the location acquisition time information of each of the second location data (location data immediately before the first location data) and the third location data (location data immediately after the first location data). Note that the location data acquired by the location data acquisition portion 11 may be accumulated in the accumulation portion 12 after being acquired by the location data acquisition portion 11 or may be transmitted from the location data acquisition portion 11 to the before and after location data acquisition portion 16 without being accumulated in the accumulation portion 12. In other words, the before and after location data acquisition portion 16 may read the location acquisition time information of the second and third location data from the accumulation portion 12 or receive them from the location data acquisition portion 11. Either method may be employed logically.

The feature quantity calculation portion 17 calculates the feature quantities of the first location data, which are all the location data acquired by the location data acquisition portion 11. Because the calculation result is an enormous amount, it is preferred that the feature quantity calculation portion 17 includes a feature quantity storage portion 17a for storing the feature quantities as the calculation result as shown in Fig. 9, so that the feature quantities as the calculation result are stored in the feature quantity storage portion 17a. Note that, in this alternative example also, the feature quantity calculation portion 17 calculates a difference between the location acquisition times of the second and third location data as the feature quantity of the first location data, and processing is performed when the location acquisition time of the second or third location data is an abnormal value as shown in Fig. 8, which is the same as in the above-described first embodiment.

The observation target acquisition portion 15 extracts the feature quantities corresponding to the location data whose location acquisition time is within the observation target period and location information is within the observation area to be observed, among the feature quantities stored in the feature quantity storage portion 17a.

The expected stay time calculation portion 18 calculates, based on the feature quantities extracted by the observation target acquisition portion 15, the total value of the feature quantities as the expected stay time (in portions of time) for each of the identification information of the mobile terminal.

The passing/staying terminal selection portion 19 sorts the mobile terminals into passing mobile terminals and staying mobile terminals based on the expected stay time calculated by the expected stay time calculation portion 18 in the same manner as in the first embodiment described above. The terminal quantity estimation portion 20 estimates the number of passing mobile terminals and staying mobile terminals selected as the estimation target by the passing/ staying terminal selection portion 19 in the same manner as in the first embodiment described above. The terminal quantity output portion 21 outputs the number of passing mobile terminals and the number of staying mobile terminals estimated by the terminal quantity estimation portion 20.

A terminal quantity estimation process according to the alternative example is described hereinafter. It is assumed that a sector number of a sector where a mobile terminal is located is given as the location information contained in the location data of the mobile terminal.

As shown in Fig. 10, the processing of Steps S31 to S33 is performed for each of all the location data. In Step S31, the before and after location data acquisition portion 16 acquires, for one location data (first location data) for which a feature quantity is to be obtained, location acquisition time information of location data immediately before the first location data (second location data) and location acquisition time information of location data immediately after the first location data (third location data) among the location data containing the same identification information as the first location data. Note that the before and after location data acquisition portion 16 does not necessarily acquire the whole of the second or third location data and may acquire at least the location acquisition time information contained in the second or third location data. Then, in Step S32, the feature quantity calculation portion 17 calculates the feature quantity of the first location data in the procedure shown in Fig. 8, which is the same as in the first embodiment described above. The processing of Step S32 is the same as the processing of Step S5 in Fig. 7 in the first embodiment described above and not repeatedly described. After that, the feature quantity obtained in Step S32 is stored into the feature quantity storage portion 17a (Step S33).

The processing of Steps S31 to S33 for one location data (first location data) thereby ends.

After that, the processing of Steps S31 to S33 is performed for each of all the location data. When the processing of Steps S31 to S33 ends for all the location data (Yes in Step S34), the feature quantities of all the location data are calculated and stored in the feature quantity storage portion 17a. In this manner, the feature quantities of all the location data can be calculated and stored in advance before performing the terminal quantity estimation.

In the following step S35, the observation target period acquisition portion 13 acquires the observation target period information containing a set of the observation start time and the observation end time, and the observation area acquisition portion 14 acquires the observation area information associated with one or a plurality of location information. It is assumed in this example that a set of the observation start time t0 and the observation end time t1 is acquired as the observation target period information, and a sector number S is acquired as the observation area information.

Then, the observation target acquisition portion 15 extracts the feature quantities corresponding to the location data whose location acquisition time is within the observation target period and location information is within the observation area to be observed, among the feature quantities of all the location data calculated beforehand and stored in the feature quantity storage portion 17a (Step S36).

After that, in the same manner as Steps S7 to S10 of Fig. 7 according to the first embodiment described above, the expected stay time calculation portion 18 calculates the expected stay time indicating the stay time (Step S37), and the passing/staying terminal selection portion 19 selects passing mobile terminals and staying mobile terminals (Step S38). Then, the terminal quantity estimation portion 20 estimates the number of passing mobile terminals and staying mobile terminals (Step S39), and the terminal quantity output portion 21 outputs the number terminals obtained by the estimation (Step S40). The number of passing mobile terminals and staying mobile terminals can be thereby estimated.

In the above-described alternative example, the feature quantities of all the location data are calculated and stored in advance, and therefore the terminal quantity estimation device 10 can reduce the interval from when acquiring the observation target period information and the observation area information and starting the terminal quantity estimation process to when obtaining the terminal quantity as the estimation result.

Note that, in the process of Fig. 10, the processing of Step S35 is not necessarily performed after Step S34, and the processing of Step S31 to S34 and the processing of Step S35 may be performed in parallel.


[Alternative Example of Terminal Quantity Estimation Device according to First Embodiment]


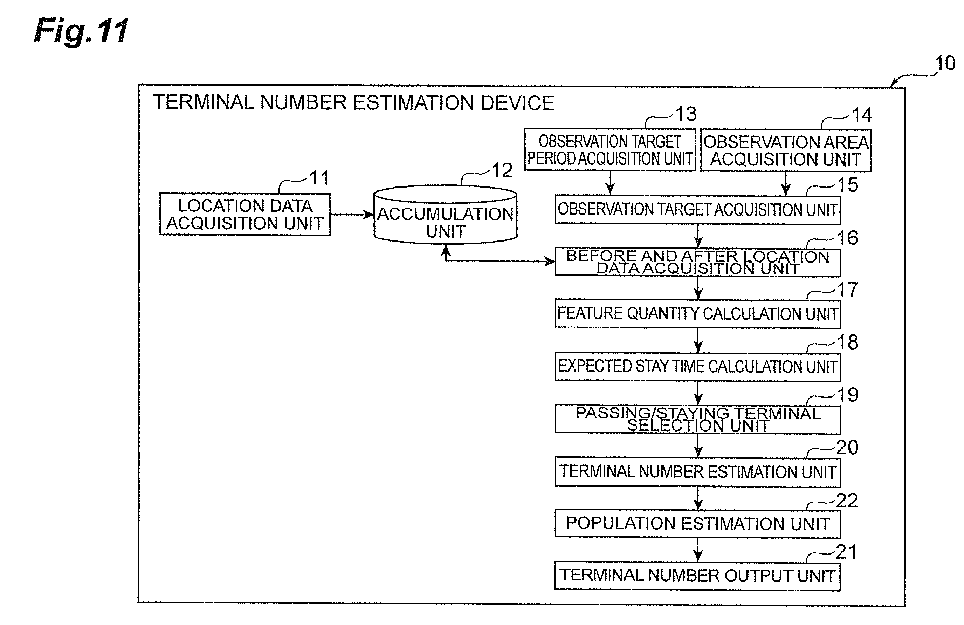

The terminal quantity estimation device 10 according to the above-described first embodiment may further include a population estimation portion (population estimation means) 22 that estimates the population in the observation area during the estimation target period as shown in Fig. 11. The population estimation portion 22 estimates the population of one user attribute based on the ratio of the number of in-the-service-area terminals having the one user attribute in a predetermined wide area and the population on the basis of statistical data in one user attribute included in the wide area. One user attribute includes a gender, age group, address attribute and the like.

To be more specific, the population estimation portion 22 estimates the population based on the ratio of the number of in-the-service-area terminals whose address information is one administrative district area in a predetermined wide area and the population on the basis of statistical data in one administrative district area included in the wide area (for example, the ratio of the number of mobile terminals whose address information is the observation area (equivalent to the administrative district area) in a wide area (for example, all over Japan) including the observation area during the estimation target period and the population on the basis of statistical data whose address is the observation area (for example, Tokyo)) and the number of terminals obtained by the terminal quantity estimation portion 20. For example, when the above ratio is (the number of terminals/population), the population estimation portion 22 divides the number of terminals by the ratio and thereby estimates the population of the observation area during the estimation target period, and the terminal quantity output portion 21 outputs the obtained population.

Note that the ratio of the number of terminals and the population may be "terminal contact ratio", which is the ratio of "the number of contract terminals of a specific carrier for which the location information is obtained" to "the population in an area of a predetermined range". For the above-described ratio (including the terminal contact ratio), it is preferred to calculate a ratio for each area, a ratio for each gender, a ratio for each age group and the like and use them for estimation of the population. Further, the population may be estimated by calculating the ratio of the number of in-the-service-area terminals across the country during the estimation target period and the population or a certain fixed value. Furthermore, a previously calculated ratio may be used instead of the estimation target period.

To be more specific, the terminal quantity estimation device 10 further includes an enlargement factor storage means that stores an enlargement factor for converting the number of terminals into a population, and the population estimation portion 22 may estimate at least one of the population located in the observation area during the observation period and the population in each unit of population estimation, which is a unit of estimating a population, based on the feature quantity, the observation period length and the enlargement factor for the observation target location data. The "unit of population estimation" may be an attribute, place, time period or the like, for example. Further, the enlargement factor may be stored in the enlargement factor storage means for use, or it may be derived as follows. As the enlargement factor, the inverse number of "the product of the in-the-service-area rate and the ownership rate of terminals (which is the ratio of the number of in-the-service-area terminals to the population)" may be used as an example. The "in-the-service-area rate" is the ratio of the number of in-the-service-area terminals to the number of contracts of terminals, and the "ownership rate" is the ratio of the number of contracts to the population. It is preferred that the enlargement factor is derived for each unit of population estimation, though not limited thereto.

Further, the enlargement factor may be derived by using the number of terminals (in-the-service-area terminals) estimated based on the feature quantity and the observation period length as follows, for example. Specifically, by obtaining the feature quantity form the location data and aggregating the number of terminals in each unit of enlargement factor calculation based on the feature quantity and the observation period length, user number pyramid data is obtained, and further population pyramid data in the same unit of enlargement factor calculation calculated previously as statistical data (for example, basic resident register etc.) is acquired. Then, the acquisition rate of location data (i.e. the number of in-the-service-area terminals/population) in the unit of enlargement factor calculation is calculated from the user number pyramid data and the population pyramid data. The "acquisition rate of location data (i.e. the number of in-the-service-area terminals/population)" corresponds to the "product of the in-the-service-area rate and the ownership rate of terminals". The inverse number of the obtained "acquisition rate of location data" can be derived as the enlargement factor. The unit of enlargement factor calculation for calculating the enlargement factor may be on the basis of prefecture in address (which is an administrative district area, such as cities and towns), age group of every 5 or 10 years, gender, time period of every one hour or the like, or a combination of two or more may be used. For example, when the unit of enlargement factor calculation is "males in their twenties living in Tokyo", user number pyramid data is obtained by extracting the location data corresponding to males in their twenties who live in Tokyo (whose address information in user attribute is Tokyo) and counting the number of terminals, and population pyramid data for the males in their twenties living in Tokyo is acquired from statistical data. In this case, Japan is a wide area, and an administrative district area included in the wide area is Tokyo. Note that, when obtaining the user number pyramid data, for the condition of "living in Tokyo", the location data whose address information in user attribute is Tokyo, not only the location data of users who are located in Tokyo, are extracted. Then, the acquisition rate of location data (i.e. the number of in-the-service-area terminals/population) in the unit of enlargement factor calculation (which is males in their twenties living in Tokyo in this example) is calculated from the user number pyramid data and the population pyramid data, and the inverse number of the obtained "acquisition rate of location data" can be derived as the enlargement factor. Note that, although the unit of enlargement factor calculation and the unit of population estimation are equal in this description, this is just an example and it is not limited thereto.

In this manner, the population in the observation area during the observation target period can be estimated and output in consideration of the number of terminals from which the location data cannot be obtained (for example, power-off terminals, out-of-area terminals etc.).

Further, in the alternative example of the terminal quantity estimation device according to the first embodiment, address information of a user of a mobile terminal corresponding to identification information contained in location data may be further associated with the location data and stored in the accumulation portion 12, and the number of passing mobile terminals and staying mobile terminals may be estimated based on the location data of each address information, and the number of passing people and the number of staying people may be estimated based on the estimated number of terminals. Note that the address information is information related to the place of residence of a mobile terminal user which has been registered by the user. In this case, only the number of people who have certain address information among the number of passing people in the observation area can be estimated, or only the number of people who have certain address information among the number of staying people who stay in the observation area can be estimated. Alternatively, the number of passing people in the observation area may be estimated for each address of mobile terminal users (for example, for each prefecture, city/town etc.), or the number of staying people in the observation area may be estimated for each address of mobile terminal users. Further, in this case also, when calculating the population from the number of terminals, it is preferred to calculate a ratio for each area, a ratio for each gender, a ratio for each age group and the like and use them for estimation of the population. It is thereby possible to obtain a distribution by gender or a distribution by age group.

Further, in the first embodiment and each alternative example of the first embodiment, the mobile terminals whose expected stay time is within a specified range may be selected as the estimation target, and the population may be calculated from the number of the selected mobile terminals. Because the expected stay time indicates the time of staying in the observation area, by setting the expected stay time to be within a specified range, the number of people who stay in the observation area during the specified range can be estimated. Further, in this case also, when calculating the population from the number of terminals, it is preferred to calculate a ratio for each area, a ratio for each gender, a ratio for each age group and the like and use them for estimation of the population. It is thereby possible to obtain a distribution by gender or a distribution by age group.

Further, in the first embodiment, as another method of calculating the number of passing mobile terminals in the terminal quantity estimation portion 20, the number of mobile terminals selected as passing mobile terminals by the passing/staying terminal selection portion 19 may be calculated by directly counting it based on the identification information of the passing mobile terminals. Likewise, as another method of calculating the number of staying mobile terminals in the terminal quantity estimation portion 20, the number of mobile terminals selected as staying mobile terminals by the passing/staying terminal selection portion 19 may be calculated by directly counting it based on the identification information of the staying mobile terminals.

Further, although a method that the passing/staying terminal selection portion 19 sorts the mobile terminals based on whether the expected stay time is equal to or more than the passing/staying determination threshold or less than that and selects them as mobile terminals as a target of terminal quantity estimation is described in the first embodiment, the estimation target mobile terminals may be selected by another method. For example, the mobile terminals whose expected stay time is between two predetermined passing/staying determination thresholds may be selected as the estimation target mobile terminals. In this case, the number of staying mobile terminals that stay in the observation area for a specified length of time can be estimated. Then, by sequentially selecting mobile terminals by changing the two passing/staying determination thresholds, the number of staying mobile terminals for each specified staying time (for example, staying time of 0 to 1 hour, 1 to 2 hours, 2 to 3 hours etc.) can be estimated. The estimation result can be output as a graph representing a relationship between each staying time length and the number of mobile terminals in the staying time length.

[second Embodiment]

A second embodiment is described hereinbelow. This embodiment is to estimate commuters unable to get home who return from a certain analysis target area to another area. Note that a commuter unable to get home is a person who has difficulty in getting home because the place of residence (home) is far from the current position and public transportation is unavailable in the event of a disaster. Further, the system configuration of a communication system according to the second embodiment is the same as the system configuration of the communication system according to the first embodiment in Fig. 1 and not redundantly described.

[Configuration of Terminal Quantity Estimation Device]

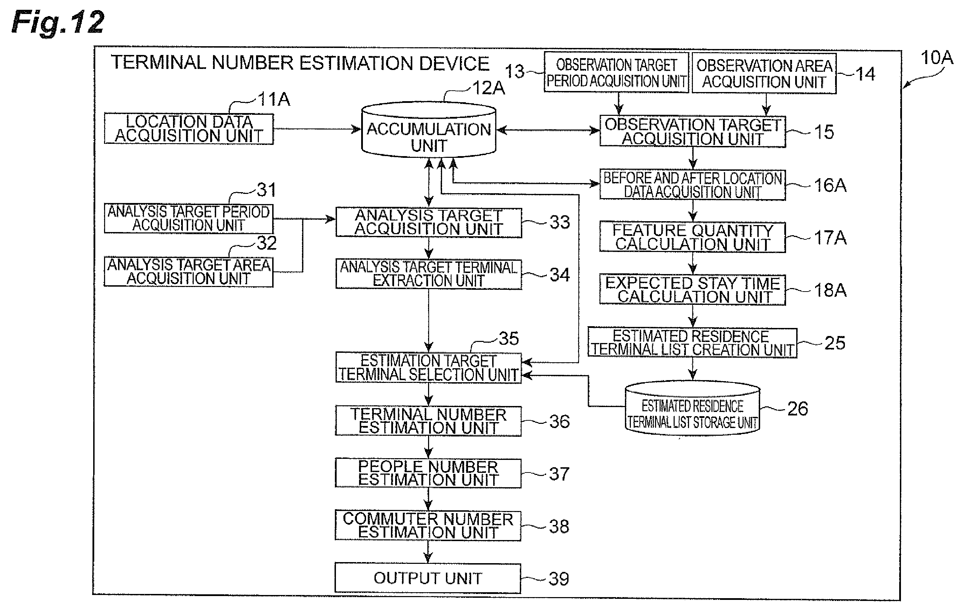

Fig. 12 shows a functional block configuration of a terminal quantity estimation device 10A. As shown in Fig. 1, the terminal quantity estimation device 10A includes a location data acquisition portion (location data acquisition means) 11A, an accumulation portion 12A, an observation target period acquisition portion 13, an observation area acquisition portion 14, an observation target acquisition portion (observation target acquisition means) 15, a before and after location data acquisition portion (before and after location data acquisition means) 16A, a feature quantity calculation portion (feature quantity calculation means) 17A, an expected stay time calculation portion (expected stay time calculation means) 18A, an estimated residence terminal list creation portion (estimated residence terminal list creation means) 25, an estimated residence terminal list storage portion (estimated residence terminal list storage means) 26, an analysis target period acquisition portion 31, an analysis target area acquisition portion 32, an analysis target acquisition portion (analysis target acquisition means) 33, an analysis target terminal extraction portion (analysis target terminal extraction means) 34, an estimation target terminal selection portion (estimation target terminal selection means) 35, a terminal quantity estimation portion (terminal quantity estimation means) 36, a population estimation portion (population estimation means) 37, a commuter quantity estimation portion (commuter quantity estimation means) 38, and an output portion 39.

The location data acquisition portion 11A acquires location data from the outside just like the location data acquisition portion 11 according to the first embodiment, associates address information of a user of a mobile terminal corresponding to identification information contained in the location data to the acquired location data and stores them into the accumulation portion 12A. Note that the address information is information about the place of residence of a user of a mobile terminal that has been registered beforehand by the user. The address information is stored in an accumulation portion, which is not shown, in the state associated with the identification information of the mobile terminal and can be acquired by the location data acquisition portion 11 A.

The accumulation portion 12A stores the location data over a plurality of points of time about a plurality of users (mobile terminals). The observation target period acquisition portion 13 acquires observation target period information containing a set of the start time and the end time for grasping the state of residence. Note that the observation target period information acquired by the observation target period acquisition portion 13 may be information during late night hours in a specified day, information during late night hours in a plurality of days for the last one month and the like, for example. The observation area acquisition portion 14 acquires observation area information associated with one or a plurality of location information. The observation area information is given as a sector number, latitude and longitude, a geographical range (for example, cities and towns) or the like, for example, and the observation area acquisition portion 14 preferably has a database that manages information that associates the form of presentation of the acquired observation area information and the form of presentation of the location information (for example, correspondence information between a sector number and latitude and longitude etc.).

The observation target acquisition portion 15 acquires, as residence estimation target location data, the location data whose location acquisition time information is within the observation target period and whose location information is within the observation area where the state of residence is to be grasped. Note that the residence estimation target location data may be further narrowed down by a given condition (such as an age group of mobile terminal users etc.). The residence estimation target location data serves as a target of feature quantity calculation by the feature quantity calculation portion 17A. Although the location data acquired by the observation target acquisition portion 15 serves as a basis for calculation of the number of mobile terminals in the first embodiment, the location data acquired by the observation target acquisition portion 15 is used to create an estimated residence terminal list, which is described later, in the second embodiment.

The before and after location data acquisition portion 16A acquires, for the residence estimation target location data (which is referred to as "first location data"), location acquisition time information of location data immediately before the first location data (which is referred to as "second location data") and location acquisition time information of location data immediately after the first location data (which is referred to as "third location data") among location data containing the same identification information as the first location data, just like the before and after location data acquisition portion 16 in the first embodiment. Note that the before and after location data acquisition portion 16A does not necessarily acquire the whole of the second or third location data and may acquire at least the location acquisition time information contained in the location data.

The feature quantity calculation portion 17A calculates a feature quantity for each of the first location data. The feature quantity calculation process in the feature quantity calculation portion 17A is the same as that of the feature quantity calculation portion 17 in the first embodiment and thus not redundantly described.

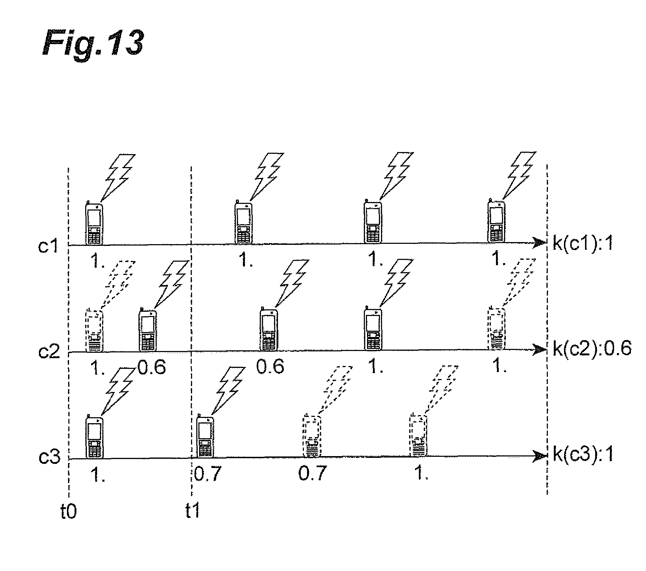

The expected stay time calculation portion 18A calculates the total value of the feature quantities calculated by the feature quantity calculation portion 17A as an expected stay time (in portions of time) indicating a stay time for each of the identification information of mobile terminals, just like the expected stay time calculation portion 18 in the first embodiment. A specific example of the expected stay time is described hereinafter. Fig. 13 is a diagram showing the timing when each of three mobile terminals (with the identification information of c1, c2 and c3) has transmitted the location data (it is assumed that the location data is transmitted at the timing when the mobile terminal is represented by a solid line or a dotted line). Further, the location data that is transmitted when the mobile terminal is represented by a solid line indicates the case where it is transmitted from the inside of an observation area where the state of residence is to be grasped, and the location data that is transmitted when the mobile terminal is represented by a dotted line indicates the case where it is transmitted from the outside of the observation area. Further, the numeric shown under the mobile terminal represented by a solid line or a dotted line indicates a feature quantity for the location data that is transmitted at the timing when the mobile terminal is represented. The observation target period is time t0 to time t1. The observation target period may be late night hours (such as a period from 1am to 4am), for example. Note that, although only one observation target period is shown in Fig. 13, in the case where the late night hours in a plurality of days are used as the observation target period, for example, a plurality of periods are set as the observation target period.

In the case of calculating the expected stay time of a certain mobile terminal, the expected stay time calculation portion 18A calculates the total value of the feature quantities transmitted from the observation area where the state of residence is to be grasped during the observation target period from time t0 to time t1. For example, in the case of calculating the expected stay time of the mobile terminal with the identification information of c2 shown in Fig. 13, the total value 0.6 of the feature quantities for the location data transmitted from the inside of the observation area where the state of residence is to be grasped during the observation target period from time t0 to time t1 is calculated as the expected stay time k(c2). Likewise, the expected stay time k(c1) of the mobile terminal with the identification information of c1 is 1, and the expected stay time k(c3) of the mobile terminal with the identification information of c3 is 1.

The estimated residence terminal list creation portion 25 estimates mobile terminals owned by users who live in the observation area and creates a list. Specifically, the estimated residence terminal list creation portion 25 selects a mobile terminal whose expected stay time calculated by the expected stay time calculation portion 18A is less than a predetermined threshold as a mobile terminal that passes through the observation area, and selects a mobile terminal whose expected stay time is equal to or more than the predetermined threshold as a mobile terminal that is owned by a user who lives in the observation area. Note that, when information of late night hours of a plurality of days is acquired as the observation target period information in the observation target period acquisition portion 13, and the expected stay time calculated by the expected stay time calculation portion 18A is a plurality of days, the total value of the expected stay time calculated for a plurality of days is compared with the predetermined threshold and then mobile terminals passing through the observation area and mobile terminals owned by users living in the observation area are selected in the above manner. By setting the observation target period used when calculating the expected stay time to a certain time period at late night, users of mobile terminals for which the total value of the expected stay time during the time period is equal to or more than the threshold can be estimated as users living in the observation area.

Further, the estimated residence terminal list creation portion 25 creates an estimated residence terminal list indicating mobile terminals owned by users living in an observation area for each of observation areas. Note that, when creating the estimated residence terminal list for a certain observation area, the estimated residence terminal list creation portion 25 can create a list containing only the identification information of mobile terminals owned by users living in the observation area or a list in which information as to whether it is a mobile terminal owned by a user living in the observation area is added to the identification information of all mobile terminals existing in the observation area (mobile terminals passing through the observation area and mobile terminals owned by users living the an observation area). The estimated residence terminal list creation portion 25 stores the created estimated residence terminal list into the estimated residence terminal list storage portion 26.

The estimated residence terminal list storage portion 26 stores the estimated residence terminal list for each of observation areas.

The analysis target period acquisition portion 31 acquires analysis target period information containing a set of the start time and the end time for estimating the number of commuters unable to get home. Note that the analysis target period information acquired by the analysis target period acquisition portion 31 may be information of a certain time period of a specified day or information of a certain time period of a plurality of days. The analysis target period is a period that is different in principle from the observation target period used in the observation target period acquisition portion 13, The analysis target area acquisition portion 32 acquires analysis target area information for which the estimation of commuters unable to get home is to be performed. The analysis target area information in this example is given as latitude and longitude, polygon information containing latitude and longitude, an identifier (address code) indicating a geographical range (for example, cities and towns or a range partitioned into meshes) or the like, and the analysis target area acquisition portion 32 preferably has a database that manages information that associates the form of presentation of the acquired area information and the form of presentation of the location information (for example, correspondence information between an identifier and latitude and longitude etc.). Note that, in this embodiment, the observation area used in the above-described observation area acquisition portion 14 is set as the analysis target area for which the estimation of commuters unable to get home is to be performed. Thus, the analysis target area acquisition portion 32 acquires the observation area information as the analysis target area information.

The analysis target acquisition portion 33 acquires, as analysis target location data, from the accumulation portion 12, the location data whose location acquisition time information is within the analysis target period and whose location information is within the analysis target area, which is an area where the estimation of commuters unable to get home is to be performed.

The analysis target terminal extraction portion 34 extracts analysis target terminals for which the analysis on commuters unable to get home is to be performed based on the analysis target location data acquired by the analysis target acquisition portion 33. The analysis target terminal extraction portion 34 extracts mobile terminals corresponding to the analysis target location data as the analysis target terminals. Mobile terminals can be specified from the analysis target location data by using the identification information of the mobile terminals contained in the analysis target location data. It is thereby possible to extract the mobile terminals whose location information is within the analysis target area and whose location acquisition time information is within the analysis target period as the analysis target terminals.

Note that, although the analysis target terminal extraction portion 34 extracts the mobile terminals included in the analysis target location data as the analysis target terminals in the above example, the analysis target terminals may be extracted using another method. For example, as described in the before and after location data acquisition portion 16A, the feature quantity calculation portion 17A and the expected stay time calculation portion 18A, the analysis target terminals may be extracted by calculating a feature quantity for the analysis target location data, calculating the expected stay time based on the calculated feature quantity, and extracting the mobile terminals whose expected stay time during the analysis target period is equal to or more than a predetermined threshold.

The estimation target terminal selection portion 35 excludes mobile terminals of users living in the analysis target area from the analysis target terminals extracted by the analysis target terminal extraction portion 34, and selects the remaining mobile terminals as the mobile terminals to serve as the estimation target of commuters unable to get home. The mobile terminals of users living in the analysis target area are mobile terminals whose address information in the location data corresponding to the analysis target terminal is within the analysis target area (which is the same as the observation area in this embodiment), or mobile terminals that are determined as mobile terminals of users who are living in the observation area (which is the same as the analysis target area in this embodiment) based on the estimated residence terminal list stored in the estimated residence terminal list storage portion 26. In other words, the mobile terminals of users living in the analysis target area are mobile terminals that correspond to at least one of mobile terminals whose address information in the location data corresponding to the analysis target terminal is within the analysis target area and mobile terminals determined as mobile terminals of users living in the observation area based on the estimated residence terminal list stored in the estimated residence terminal list storage portion 26. The mobile terminals owned by users living in the analysis target area are thereby excluded from the mobile terminals located in the analysis target area.

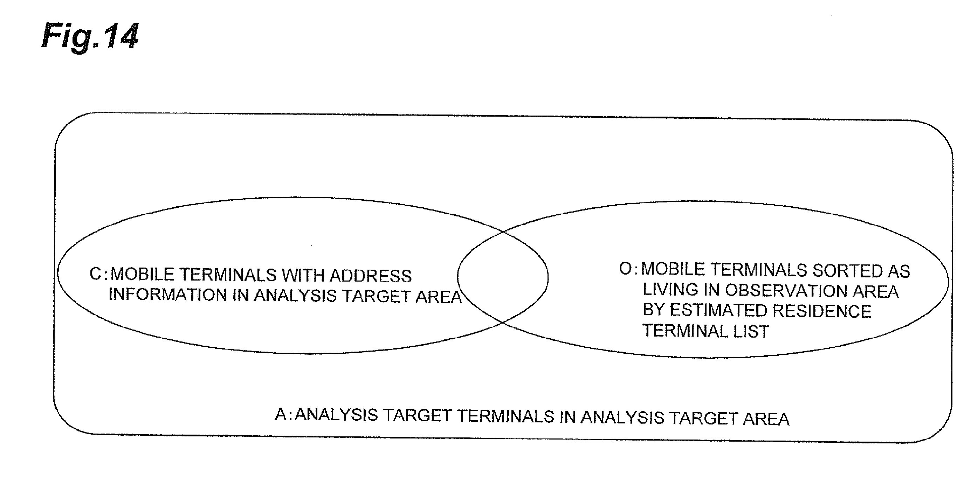

A specific example of mobile terminals selected by the estimation target terminal selection portion 35 is described. In Fig. 14, analysis target terminals within the analysis target area extracted by the analysis target terminal extraction portion 34 are represented by "A", mobile terminals whose address information in the location data is within the analysis target area are represented by "C", and mobile terminals sorted as living in the observation area by the estimated residence terminal list are represented by "O". The estimation target terminal selection portion 35 selects mobile terminals excluding the mobile terminals C whose address information is within the analysis target area and the mobile terminals O sorted as living in the observation area by the estimated residence terminal list from among the analysis target terminals A as mobile terminals to serve as the estimation target of commuters unable to get home. In other words, the estimation target terminal selection portion 35 selects mobile terminals which are none of the mobile terminals C and the mobile terminals O among the analysis target terminals A as the mobile terminals to serve as the estimation target of commuters unable to get home. The mobile terminals which are none of the mobile terminals C and the mobile terminals O are mobile terminals owned by users who live outside the observation area (which is the same as the analysis target area in this embodiment).

The terminal quantity estimation portion 36 estimates the number of mobile terminals selected as the estimation target of commuters unable to get home by the estimation target terminal selection portion 35 for each address information (each estimation target area). Note that, because the address information is associated with the location data used when selecting the mobile terminals to serve as the estimation target of commuters unable to get home (which is the location data stored in the accumulation portion 12A) as described above, the number of mobile terminals can be estimated for each address information by using the address information. When estimating the number of mobile terminals for "each address information", the estimation may be made for each address information (for example, each city or town) associated with the location data or for each area predetermined for estimating the number of mobile terminals, which is different from each address information associated with the location data. Further, at the time of estimating the number of mobile terminals in the terminal quantity estimation portion 36 also, the estimation of the number of mobile terminals may be made by calculating a feature quantity for each location data and using the calculated feature quantity as in the terminal quantity estimation portion 20 according to the first embodiment described above. In this case, the terminal quantity estimation portion 36 estimates the number of mobile terminals based on the feature quantity corresponding to each estimation target period by shifting the estimation target period by one hour each, for example. It is thereby possible to estimate the number of mobile terminals for each time period.

The people number estimation portion 37 estimates the number of people to serve as the estimation target of commuters unable to get home for each address information based on the ratio of the number of in-the-service-area terminals whose address information is one administrative district area (estimation target area) in a predetermined wide area and the population on the basis of statistical data in one administrative district area (estimation target area) included in the wide area, and the number of mobile terminals to serve as the estimation target of commuters unable to get home estimated by the terminal quantity estimation portion 36. The ratio of the number of in-the-service-area terminals and the population is the same as the one used in the above-described alternative example of the terminal quantity estimation device and thus not redundantly described. The number of people who are present in the analysis target area during the analysis target period and whose home address is different from the analysis target area is thereby estimated for each address information.

The commuter quantity estimation portion 38 estimates commuters unable to get home who are difficult to return from the analysis target area to the place of residence indicated by the address information and the number of those commuters based on the number of people for each address information estimated by the people number estimation portion 37 and the analysis target area information. In this estimation, people whose distance between the analysis target area and the place of residence indicated by the address information is a specified threshold or more are estimated as commuters unable to get home. On the other hand, people whose distance between the analysis target area and the place of residence indicated by the address information is less than the specified threshold are estimated as neighbouring residents who live near the analysis target area and are able to get home. Further, because the number of people to serve as the estimation target of commuters unable to get home is estimated for each address information, the commuter quantity estimation portion 38 can estimate the number of commuters unable to get home for each address information.

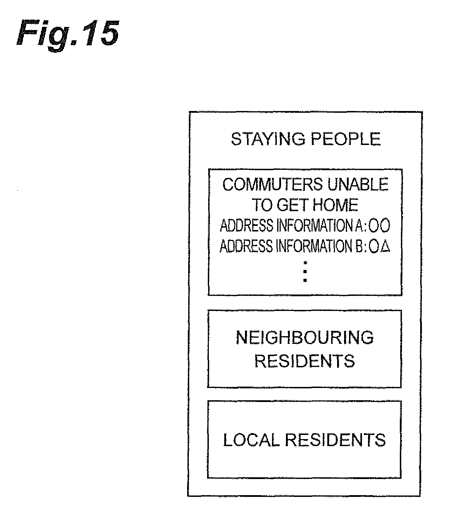

It is thereby possible to estimate each of local residents who live in the analysis target area, neighbouring residents who live near the analysis target area, and commuters unable to get home who stay in the analysis target area as shown in Fig. 15, from those who are staying in the analysis target area in the event of a disaster. Note that the number of neighbouring residents may be also estimated for each address information.

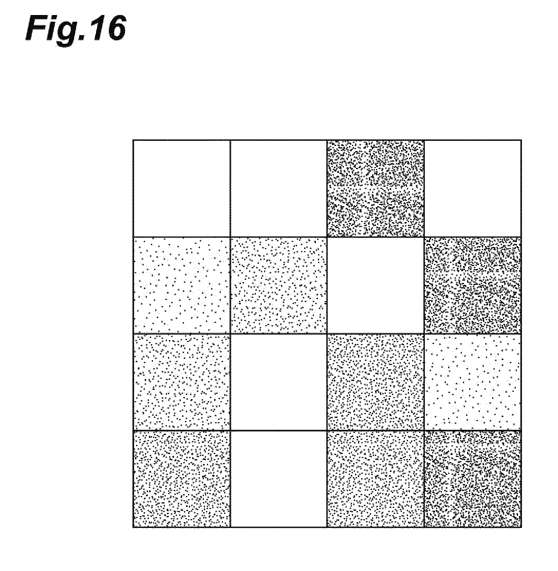

The output portion 39 outputs information about the number of commuters unable to get home estimated by the commuter quantity estimation portion 38 or the like in a specified data format. The output may be done in various ways, such as display output, audio output and print output. For example, when the number of commuters unable to get home is estimated for each of a plurality of analysis target areas, the output portion 39 may generate and output data in map form where an area with a large number of staying commuters unable to get home is represented by dark color and an area with a small number of staying commuters unable to get home is represented by pale color for each area partitioned into meshes as shown in Fig. 16.

[Estimated Residence Terminal List Creation Process]

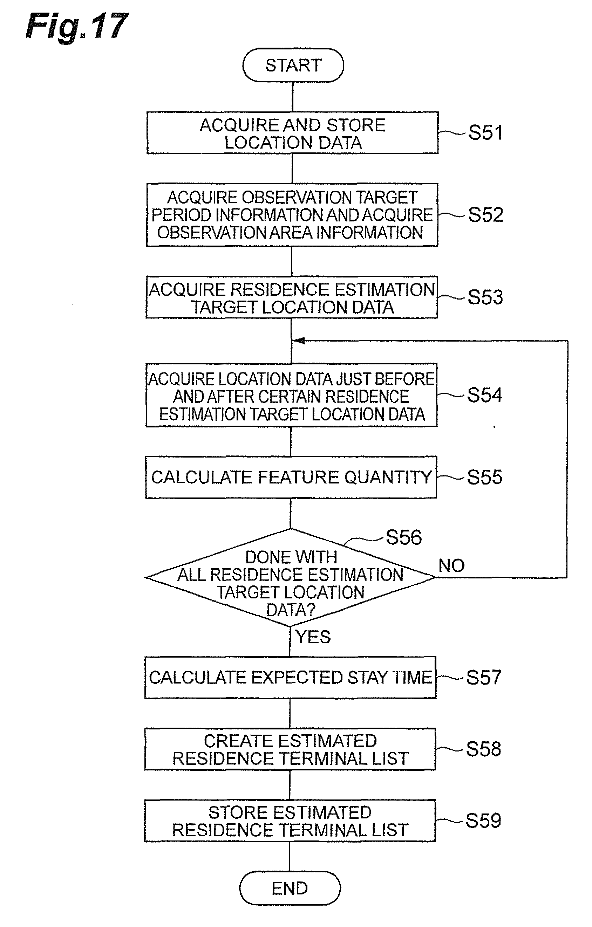

An estimated residence terminal list creation process according to the second embodiment is described hereinbelow. As shown in Fig. 17, the location data acquisition portion 11A first acquires location data and stores them into the accumulation portion 12A (Step S51 in Fig. 17). The accumulation portion 12A thereby stores the location data over a plurality of points of time about a plurality of users (mobile terminals). Note that, after the processing of Step S51, the processing of Step S52 and the subsequent steps may be carried after some time interval. In other words, Step S51 may be executed as a preparation for the processing of Step S52 and the subsequent steps.

Next, the observation target period acquisition portion 13 acquires the observation target period information containing a set of the start time and the end time, and the observation area acquisition portion 14 acquires the observation area information associated with one or a plurality of location information (Step S52).

Next, the observation target acquisition portion 15 acquires the location data whose location acquisition time information is within the observation target period and whose location information is the observation area as the residence estimation target location data from the accumulation portion 12A (Step S53).

Then, for each of the acquired observation target location data, the processing of the following Steps S54 to S57 is performed. The processing of the Steps S54 to S57 is the same as the processing of Step S4 to acquire the before and after location data, Step S5 to calculate a feature quantity, Step S6 to determine whether the calculation of a feature quantity has ended for all the location data, and Step S7 to calculate the expected stay time in the first embodiment, and the detailed description thereof is omitted.

Then, the estimated residence terminal list creation portion 25 selects mobile terminals whose expected stay time is equal to or more than a determination threshold as mobile terminals owned by users who live in the observation area, and creates the estimated residence terminal list based on the selected mobile terminals (Step S58). Then, the estimated residence terminal list creation portion 25 stores the created estimated residence terminal list into the estimated residence terminal list storage portion 26 (Step S59). In this manner, by calculating a feature quantity based on the location data and obtaining the expected stay time based on the calculated feature quantity, mobile terminals owned by users who live in the observation area can be estimated. Then, based on the mobile terminals owned by users who live in the observation area, the estimated residence terminal list can be created.

[Estimation Process of Commuters Unable To Get Home]

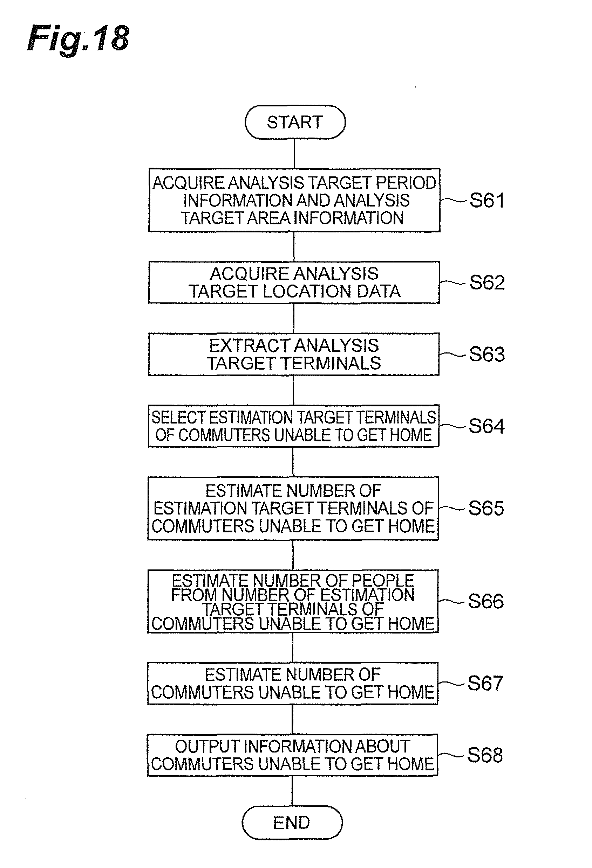

Hereinafter, a process to estimate commuters unable to get home according to the second embodiment is described. The process to estimate commuters unable to get home is performed after the above-described estimated residence terminal list creation process. As shown in Fig. 18, the analysis target period acquisition portion 31 first acquires the analysis target period information containing a set of the start time and the end time to perform the estimation of commuters unable to get home, and the analysis target area acquisition portion 32 acquires the analysis target area information (which is the same as the observation area information in this embodiment) for which the estimation of commuters unable to get home is to be performed (Step S61). Then, the analysis target acquisition portion 33 acquires the location data whose location acquisition time information is within the analysis target period and whose location information is within the analysis target area as the analysis target location data from the accumulation portion 12A (Step S62). Then, the analysis target terminal extraction portion 34 extracts the analysis target terminals to serve as the target of analysis on commuters unable to get home based on the analysis target location data acquired by the analysis target acquisition portion 33 (Step S63).

After that, the estimation target terminal selection portion 35 excludes mobile terminals of users living in the analysis target area from the analysis target terminals and selects the remaining mobile terminals as the mobile terminals to serve as the estimation target of commuters unable to get home (Step S64). Then, the terminal quantity estimation portion 36 estimates the number of mobile terminals selected as the estimation target of commuters unable to get home for each address information (Step S65). After that, the people number estimation portion 37 estimates the number of people to serve as the estimation target of commuters unable to get home for each address information from the number of mobile terminals to serve as the estimation target of commuters unable to get home estimated by the terminal quantity estimation portion 36 (Step S66).

Then, the commuter quantity estimation portion 38 estimates commuters unable to get home and the number of those commuters based on the number of people for each address information estimated by the people number estimation portion 37 and the analysis target area information (Step S67). Then, the output portion 39 outputs information about the commuters unable to get home or the like (Step S68).

As described above, according to the second embodiment, mobile terminals of users who live in the observation area can be estimated by acquiring the residence estimation target location data in which the observation target period during which the stay is to be observed is a specified period of time in late night hours, for example, and using the expected stay time obtained from the feature quantity calculated based on the residence estimation target location data. Further, among the analysis target terminals that are present in the analysis target area during the analysis target period, mobile terminals of users who live in the observation area (which is the same as the analysis target area in this example) are excluded, and the number of remaining mobile terminals is calculated. Specifically, among users of mobile terminals that are present in the analysis target area during the analysis target period, the number of mobile terminals of users who return from the analysis target area to another area, which is, the number of mobile terminals of users who have entered the analysis target area from another area, can be estimated. It is thereby possible to predict those who return from the analysis target area, which is a target of analysis, to another area in the event of a disaster, for example, using the location data of mobile terminals.

Further, among the analysis target terminals that are present in the analysis target area during the analysis target period, the number of remaining mobile terminals after excluding mobile terminals of users who live in the analysis target area is estimated for each address information of the location data. Then, the number of mobile terminals estimated for each address information is converted into the number of people. Thus, among people who are present in the analysis target area during the analysis target period, the number of people who return from the analysis target area to another area can be estimated for each address information as home address.

Further, among people who are present in the analysis target area during the analysis target period, the number of commuters unable to get home who are difficult to return home from the analysis target area can be estimated. It is thereby possible to predict commuters unable to get home who are difficult to return from the analysis target area, which is a target of analysis, to another area in the event of a disaster, for example, using the location data of mobile terminals.

Furthermore, among the analysis target terminals that are present in the analysis target area during the analysis target period, mobile terminals of users who live in the analysis target area or analysis target terminals whose address information is within the analysis target area are excluded. It is thereby possible to more accurately estimate the number of people who return from the analysis target area to another area among people who are present in the analysis target area during the analysis target period.

Note that, although the commuter quantity estimation portion 38 estimates commuters unable to get home after the people number estimation portion 37 estimates the number of people from the number of mobile terminals selected as the estimation target of commuters unable to get home in the second embodiment described above, the estimation of the number of people may be performed in reverse order. Specifically, after the commuter quantity estimation portion 38 estimates the number of mobile terminals of commuters unable to get home from the mobile terminals selected as the estimation target of commuters unable to get home, the people number estimation portion 37 may estimate the number of people from the number of mobile terminals of commuters unable to get home.

Further, in the second embodiment, when calculating the number of commuters unable to get home or the like from the number of mobile terminals, it is preferred to calculate the ratio by gender, the ratio by age group or the like and use it for the estimation of a population. It is thereby possible to obtain the distribution of commuters unable to get home or the like by gender or by age group.

[Third Embodiment]

A third embodiment is described hereinbelow. This embodiment is to estimate how many and in which analysis target area residents living in a certain observation area are staying during the analysis target period. Further, the system configuration of a communication system according to the third embodiment is the same as the system configuration of the communication system according to the first embodiment in Fig. 1 and not redundantly described.

[Configuration of Terminal Quantity Estimation Device]

The functional configuration of the terminal quantity estimation device 10A according to the third embodiment is substantially the same as functional configuration according to the second embodiment shown in Fig. 12, and therefore differences from the terminal quantity estimation device 10A according to the second embodiment are mainly described below. In the terminal quantity estimation device 10A according to the third embodiment, information acquired as the analysis target area by the analysis target area acquisition portion 32 and processing performed by the estimation target terminal selection portion 35 are particularly different from those of the terminal quantity estimation device 10A according to the second embodiment. Note that, the estimation target terminal selection portion 35 performs the processing described in the second embodiment when the information acquired as the analysis target area information by the analysis target area acquisition portion 32 is the same as the observation area information, and it performs the processing according to the this embodiment when the information acquired as the analysis target area information by the analysis target area acquisition portion 32 is different from the observation area information. Further, the elements that perform the same processing as the elements in the second embodiment are not described in detail. Note that the configuration where the estimated residence terminal list creation portion 25 creates the estimated residence terminal list based on the location data is the same as that of the second embodiment. Hereinafter, a configuration to estimate a configuration to estimate commuters unable to get home by using the estimated residence terminal list created by the estimated residence terminal list creation portion 25 is described.

The analysis target period acquisition portion 31 acquires the analysis target period information containing a set of the start time and the end time for estimating the number of commuters unable to get home. The analysis target area acquisition portion 32 acquires the analysis target area information for which the estimation of commuters unable to get home is to be performed. Note that, in this embodiment, the analysis target area acquisition portion 32 acquires information about the analysis target area that is different from the observation area as the analysis target area information, differently from the second embodiment.

The analysis target acquisition portion 33 acquires, as the analysis target location data, from the accumulation portion 12, the location data whose location acquisition time information is within the analysis target period and whose location information is within the analysis target area, which is an area where the estimation of commuters unable to get home is to be performed.

The analysis target terminal extraction portion 34 extracts the analysis target terminals for which the analysis on commuters unable to get home is to be performed based on the analysis target location data acquired by the analysis target acquisition portion 33.

The estimation target terminal selection portion 35 selects mobile terminals of users who live in the observation area among the analysis target terminals extracted by the analysis target terminal extraction portion 34 as mobile terminals to serve as the estimation target of commuters unable to get home. The mobile terminals of users who live in the observation area are mobile terminals whose address information in the location data corresponding to the analysis target terminal is within the observation area or mobile terminals that are determined as mobile terminals of users who are living in the observation area based on the estimated residence terminal list stored in the estimated residence terminal list storage portion 26. In other words, the mobile terminals of users living in the analysis target area are mobile terminals that correspond to at least one of mobile terminals whose address information in the location data corresponding to the analysis target terminal is within the analysis target area and mobile terminals determined as mobile terminals of users living in the observation area based on the estimated residence terminal list stored in the estimated residence terminal list storage portion 26. The mobile terminals owned by users living in the observation area are thereby excluded from the mobile terminals located in the analysis target area.

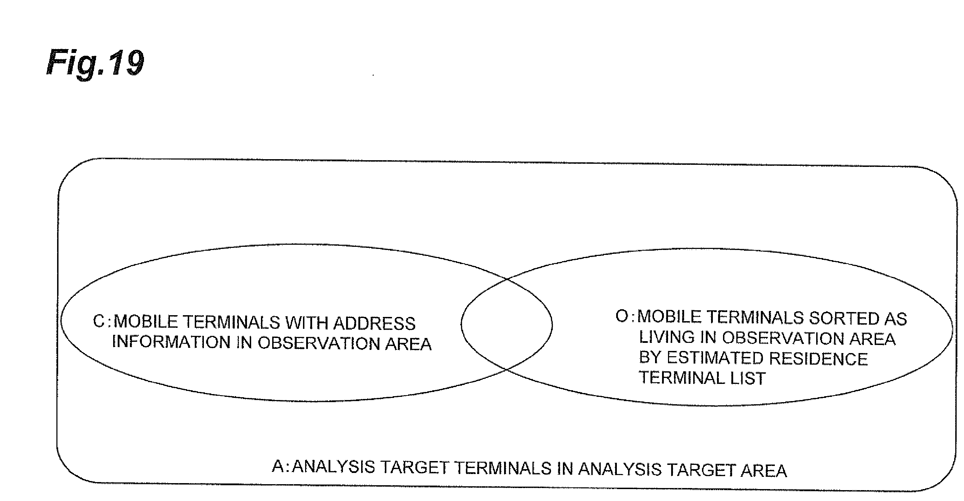

A specific example of mobile terminals selected by the estimation target terminal selection portion 35 is described. In Fig. 19, analysis target terminals within the analysis target area extracted by the analysis target terminal extraction portion 34 are represented by "A", mobile terminals whose address information in the location data is within the observation area are represented by "C", and mobile terminals sorted as living in the observation area by the estimated residence terminal list are represented by "O". The estimation target terminal selection portion 35 selects the mobile terminals C whose address information is within the observation area or the mobile terminals O sorted as living in the observation area by the estimated residence terminal list among the analysis target terminals A as mobile terminals to serve as the estimation target of commuters unable to get home. In other words, the estimation target terminal selection portion 35 selects mobile terminals which corresponds to at least one of the mobile terminals C and the mobile terminals O among the analysis target terminals A as the mobile terminals to serve as the estimation target of commuters unable to get home.

The terminal quantity estimation portion 36 estimates the number of mobile terminals selected as the estimation target of commuters unable to get home by the estimation target terminal selection portion 35. Note that, at the time of estimating the number of mobile terminals in the terminal quantity estimation portion 36 also, the estimation of the number of mobile terminals may be made by calculating a feature quantity for each location data and using the calculated feature quantity as in the terminal quantity estimation portion 20 according to the first embodiment described above. In this case, the terminal quantity estimation portion 36 estimates the number of mobile terminals based on the feature quantity corresponding to each estimation target period by shifting the estimation target period by one hour each, for example. It is thereby possible to estimate the number of mobile terminals for each time period.

The people number estimation portion 37 estimates the number of people based on the ratio of the number of in-the-service-area terminals whose address information is one administrative district area in a predetermined wide area and the population on the basis of statistical data in one administrative district area included in the wide area, and the number of mobile terminals to serve as the estimation target of commuters unable to get home estimated by the terminal quantity estimation portion 36. The number of people who are present in the analysis target area during the analysis target period and whose home is in the observation area is thereby estimated. It is thereby possible to estimate how many of those living in the observation area are staying in the analysis target area during the analysis target period.

The commuter quantity estimation portion 38 determines whether people whose home is in the observation area are commuters unable to get home or not based on the distance between the observation area and the analysis target area for which the analysis of commuters unable to get home is performed. Further, when those who return from the analysis target area to the observation area, which is home, are determined as commuters unable to get home, the commuter quantity estimation portion 38 estimates the number of people who return from the analysis target area to the observation area estimated by the people number estimation portion 37 as the number of commuters unable to get home.

Note that, in this embodiment, the terminal quantity estimation device 10A estimates how many and in which analysis target area residents living in a certain observation area are staying during the analysis target period. Specifically, the analysis target area acquisition portion 32 sequentially acquires different areas as the analysis target area for which the estimation of commuters unable to get home is performed, and performs the above processing for each analysis target area, and thereby the people number estimation portion 37 can estimate the number of people who return from each analysis target area to the observation area.

Therefore, as shown in Fig. 20, it is possible to estimate how many people who return to an observation area X are staying in which analysis target area Y1, Y2, ... during the analysis target period in the event of a disaster, for example. Further, because commuters unable to get home who are difficult to return from each analysis target area Y2, Y2, ... to the observation area X, which is home, are estimated by the commuter quantity estimation portion 38, it is possible to estimate whether those who return from which analysis target area Y1, Y2, ... to the observation area X are commuters unable to get home and its number. Note that, an area where commuters unable to get home are staying is marked with a star in Fig. 20, for example, and those who return from the analysis target area Y2 to the observation area X are commuters unable to get home in this example.

The output portion 39 outputs information about the number of commuters unable to get home estimated by the commuter quantity estimation portion 38 or the like in a specified data format.

[Estimated Residence Terminal List Creation Process]

An estimated residence terminal list creation process according to the third embodiment is the same as the estimated residence terminal list creation process according to the second embodiment described with reference to Fig. 17 and not redundantly described.

[Estimation Process of Commuters Unable To Get Home]

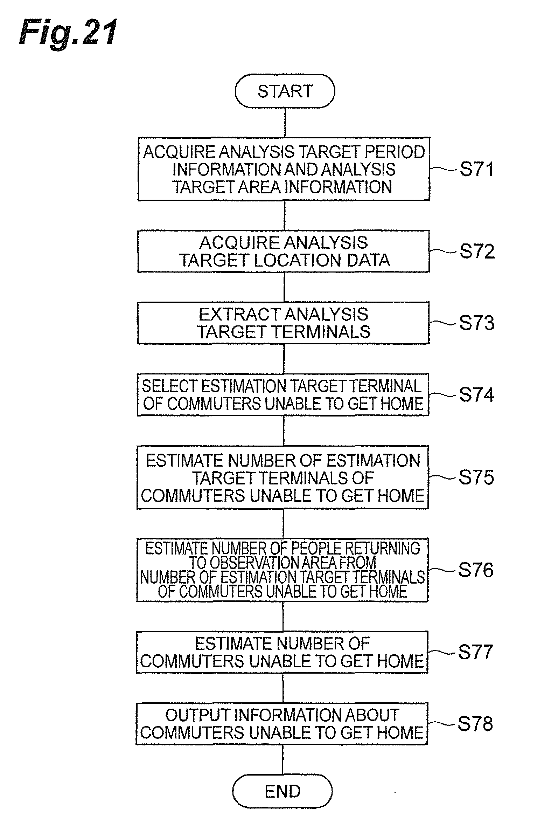

Hereinafter, a process to estimate commuters unable to get home according to the third embodiment is described. As shown in Fig. 21, the analysis target period acquisition portion 31 first acquires the analysis target period information containing a set of the start time and the end time to perform the estimation of commuters unable to get home, and the analysis target area acquisition portion 32 acquires the analysis target area information for which the estimation of commuters unable to get home is to be performed (Step S71). Then, the analysis target acquisition portion 33 acquires the location data whose location acquisition time information is within the analysis target period and whose location information is within the analysis target area as the analysis target location data from the accumulation portion 12A (Step S72). Then, the analysis target terminal extraction portion 34 extracts the analysis target terminals to serve as the target of analysis on commuters unable to get home based on the analysis target location data acquired by the analysis target acquisition portion 33 (Step S73).

After that, the estimation target terminal selection portion 35 selects mobile terminals of users living in the observation area from the analysis target terminals as the mobile terminals to serve as the estimation target of commuters unable to get home (Step S74). Then, the terminal quantity estimation portion 36 estimates the number of mobile terminals selected as the estimation target of commuters unable to get home (Step S75). After that, the people number estimation portion 37 estimates the number of people who returns to the observation area from the number of mobile terminals to serve as the estimation target of commuters unable to get home estimated by the terminal quantity estimation portion 36 (Step S76).

Then, the commuter quantity estimation portion 38 determines whether those who return to the observation area are commuters unable to get home or not based on the distance between the observation area and the analysis target area for which the analysis of commuters unable to get home is performed. When they are determined as commuters unable to get home, the commuter quantity estimation portion 38 estimates the number of commuters unable to get home (Step S77). Then, the output portion 39 outputs information about the commuters unable to get home or the like (Step S78).

As described above, according to the third embodiment, mobile terminals of users who live in the observation area can be estimated by acquiring the residence estimation target location data in which the observation target period during which the stay is to be observed is a specified period of time in late night hours, for example, and using the expected stay time obtained from the feature quantity calculated based on the residence estimation target location data. Further, among the analysis target terminals that are present in the analysis target area during the analysis target period, mobile terminals of users who live in the observation area are extracted, and the number of extracted mobile terminals is calculated. Specifically, among users of mobile terminals that are present in the analysis target area during the analysis target period, the number of mobile terminals of users who return from the analysis target area to the observation area which is the place of residence, that is, the number of mobile terminals of users who have entered the analysis target area from the observation area being the place of residence, can be estimated. It is thereby possible to predict those who return from the analysis target area to the observation area in the event of a disaster, for example, using the location data of mobile terminals.

Further, among the analysis target terminals that are present in the analysis target area during the analysis target period, the number of mobile terminals of users who live in the observation area is estimated, and the estimated number of mobile terminals is converted into the number of people. Thus, among people who are present in the analysis target area during the analysis target period, the number of people who return from the analysis target area to the observation area being the place of residence can be estimated.

Further, among people who are present in the analysis target area during the analysis target period, commuters unable to get home who are difficult to return from the analysis target area to the observation area, which is home, and the number of those commuters can be estimated. It is thereby possible to predict commuters unable to get home who are difficult to return from the analysis target area to the observation area in the event of a disaster, for example, using the location data of mobile terminals. It is thereby possible to estimate how many and in which analysis target area residents living in a certain observation area are staying during the analysis target period.

Furthermore, among the analysis target terminals that are present in the analysis target area during the analysis target period, mobile terminals of users who live in the observation area or analysis target terminals whose address information is within the observation area are extracted. It is thereby possible to more accurately estimate the number of mobile terminals of users who return from the analysis target area to the observation area, which is the place of residence, among users of mobile terminals that are present in the analysis target area during the analysis target period.

Note that, although the commuter quantity estimation portion 38 estimates commuters unable to get home after the people number estimation portion 37 estimates the number of people from the number of mobile terminals selected as the estimation target of commuters unable to get home in the third embodiment described above, the estimation of the number of people may be performed in reverse order. Specifically, after the commuter quantity estimation portion 38 estimates commuters unable to get home from the mobile terminals selected as the estimation target of commuters unable to get home, the people number estimation portion 37 may estimate the number of people from the number of mobile terminals.

Further, in the third embodiment, although the estimation target terminal selection portion 35 selects the mobile terminals C whose address information is within the observation area or the mobile terminals O sorted as living in the observation area by the estimated residence terminal list as mobile terminals to serve as the estimation target of commuters unable to get home as shown in Fig. 19, only the mobile terminals O sorted as living in the observation area by the estimated residence terminal list may be selected as mobile terminals to serve as the estimation target of commuters unable to get home. In this case also, it is possible to estimate those who return to the observation area, which is the place of residence, from the analysis target area based on the estimated residence terminal list.

Further, in the third embodiment, the estimation target terminal selection portion 35 may select the mobile terminals C whose address information is within the observation area and the mobile terminals O sorted as living in the observation area by the estimated residence terminal list as mobile terminals to serve as the estimation target of commuters unable to get home as shown in Fig. 19. In this case, it is possible to more accurately estimate mobile terminals of users whose place of residence is in the observation area.

Further, in the third embodiment, when calculating the number of commuters unable to get home or the like from the number of mobile terminals, it is preferred to calculate the ratio by gender, the ratio by age group or the like and use it for the estimation of a population. It is thereby possible to obtain the distribution of commuters unable to get home or the like by gender or by age group.

[Fourth Embodiment]

A fourth embodiment is described hereinbelow. This embodiment is to calculate a correction factor based on location data containing a location registration signal and location data containing a GPS signal, and corrects the number of mobile terminals estimated from the location data on the basis of the GPS signal. The system configuration of a communication system according to the fourth embodiment is the same as the system configuration of the communication system according to the first embodiment in Fig. 1, and the description of the system configuration is omitted.

[Configuration of Terminal Quantity Estimation Device]

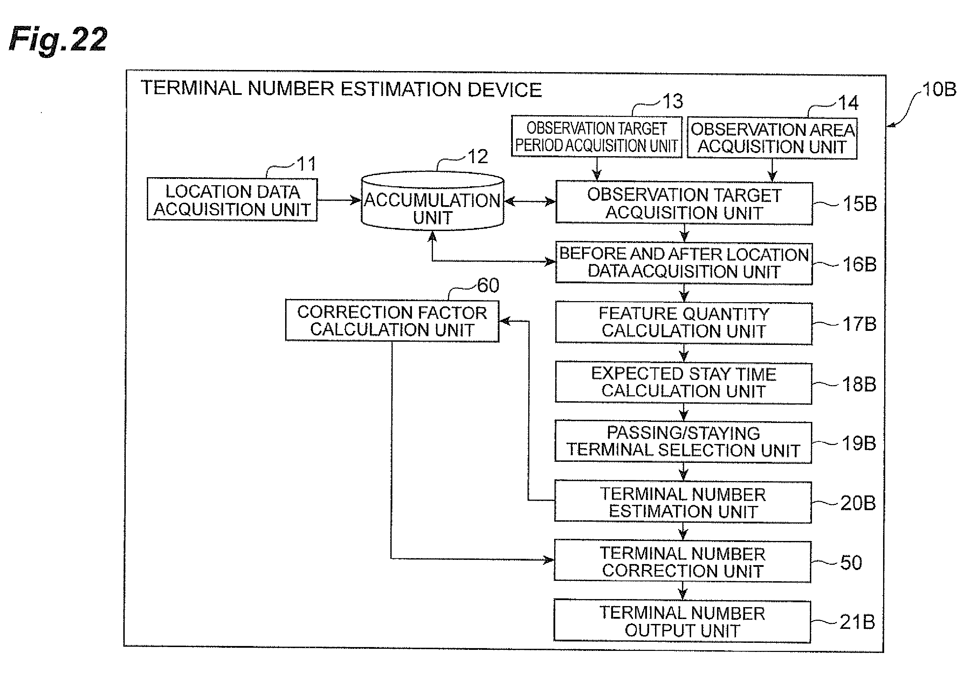

A terminal quantity estimation device according to the fourth embodiment is described hereinafter. Fig. 22 shows a functional block diagram of a terminal quantity estimation device 10B according to the fourth embodiment. As shown in Fig. 22, the terminal quantity estimation device 10B includes a location data acquisition portion (a location data acquisition means) 11, an accumulation portion 12, an observation target period acquisition portion 13, an observation area acquisition portion 14, an observation target acquisition portion (observation target acquisition means) 15B, a before and after location data acquisition portion (before and after location data acquisition means) 16B, a feature quantity calculation portion (feature quantity calculation means) 17B, an expected stay time calculation portion (expected stay time calculation means) 18B, an estimation target terminal selection portion (estimation target terminal selection means) 19B, a terminal quantity estimation portion (terminal quantity estimation means, first stay time distribution calculation means, second stay time distribution calculation means) 20B, a terminal quantity correction portion (terminal quantity correction means) 50, a terminal quantity output portion 21B, and a correction factor calculation portion (correction factor calculation means) 60.

In the terminal quantity estimation device 10B according to the fourth embodiment, the same elements as in the terminal quantity estimation device 10 according to the first embodiment are denoted by the same reference symbols and detailed description thereof is omitted.

The location data acquisition portion 11 acquires location data from the outside and stores them into the accumulation portion 12. The location data in this case contains location registration signal location data (first registration location data) containing location information (first location information) calculated based on a location registration signal and GPS signal location data (observation target location data, second registration location data) containing location information (second location information) obtained by a GPS system. The location registration signal is transmitted from a mobile terminal at a certain cycle and further transmitted from a mobile terminal under a first condition such as at the time of moving across the area of influence of an antenna of the BTS 200, at the transmission by a mobile terminal and at the power-on/off of a mobile terminal, for example. Note that the cycle of transmission of a location registration signal transmitted at a certain cycle is about one hour in this embodiment. Further, the location information obtained by a GPS system is acquired under a second condition such as at the time when a user of a mobile terminal uses GPS and when a mobile terminal automatically uses GPS in order to grasp the current location. The timing when the GPS signal location data is generated is shorter than the timing when the location registration signal location data, which is generated based on the location registration signal transmitted from a mobile terminal at a certain cycle, is generated. This is because the interval to use GPS when a mobile terminal automatically uses GPS in order to grasp the current location or a user uses GPS is shorter than the interval to transmit the location registration signal.

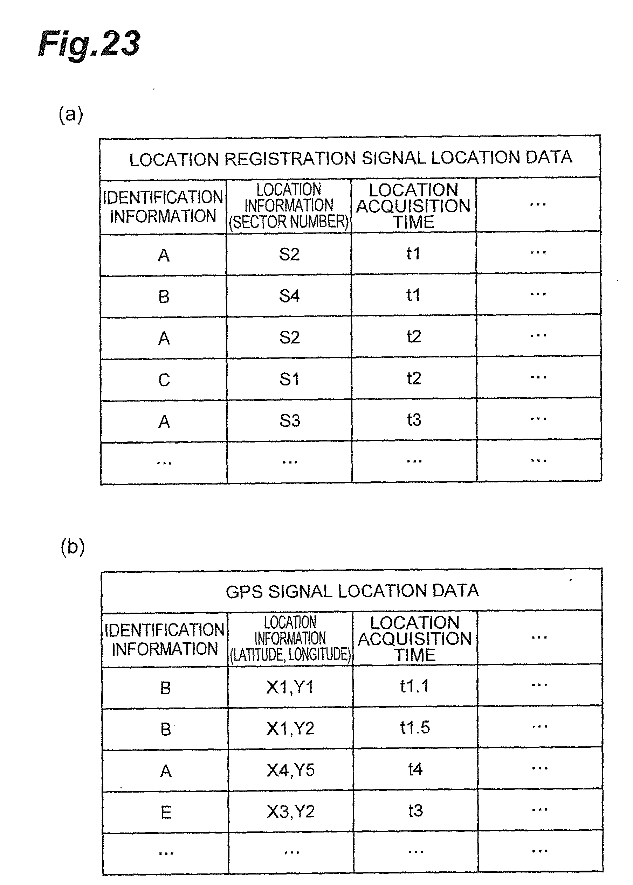

Fig. 23(a) shows an example of the location registration signal location data, and Fig. 23(b) shows an example of the GPS signal location data. As shown in Fig. 23(a), the location registration signal location data contains identification information of a mobile terminal, location information (sector number) obtained by the location registration signal, and location acquisition time when the location information is acquired. For example, the location registration signal location data of a mobile terminal with the identification information "B" has the sector number "S4" and the location acquisition time "t1". Further, as shown in Fig. 23(b), the GPS signal location data contains identification information of a mobile terminal, location information (latitude and longitude) obtained by use of GPS, and location acquisition time when the location information is acquired. For example, the GPS signal location data of a mobile terminal with the identification information "A" has the latitude and longitude "X4,Y5" and the location acquisition time "t4".

The accumulation portion 12 stores the location registration signal location data and the GPS signal location data over a plurality of points of time about a plurality of users (mobile terminals).

The observation target acquisition portion 15B acquires the location registration signal location data whose location acquisition time is within the observation target period and whose location information is within the observation area to be observed from the location registration signal location data stored in the accumulation portion 12. The location registration signal location data is used as a basis for calculating a correction factor, which is described later.

Further, the observation target acquisition portion 15B acquires the GPS signal location data whose location acquisition time is within the observation target period and whose location information is within the observation area to be observed from the GPS signal location data stored in the accumulation portion 12. The GPS signal location data is used as a basis for calculating a terminal quantity distribution of mobile terminals and also for calculating a correction factor, which is described later.

After the location registration signal location data is acquired by the observation target acquisition portion 15B, the before and after location data acquisition portion 15B acquires the location data before and after the location registration signal location data in the same manner as the before and after location data acquisition portion 16 in the first embodiment, and the feature quantity calculation portion 17B calculates a feature quantity for each location registration signal location data. Then, the expected stay time calculation portion 18B calculates the expected stay time based on the location registration signal location data in the same manner as the expected stay time calculation portion 18 in the first embodiment.

Further, after the GPS signal location data is acquired by the observation target acquisition portion 15B, the before and after location data acquisition portion 16B acquires the location data before and after the GPS signal location data in the same manner as the before and after location data acquisition portion 16 in the first embodiment, and the feature quantity calculation portion 17B calculates a feature quantity for each GPS signal location data. Then, the expected stay time calculation portion 18B calculates the expected stay time based on the GPS signal location data in the same manner as the expected stay time calculation portion 18 in the first embodiment.

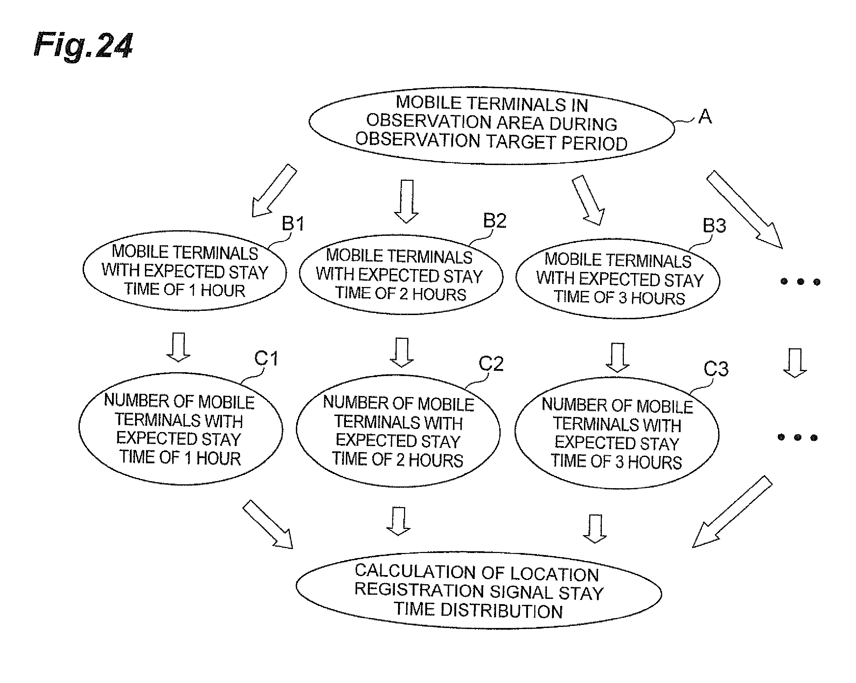

The estimation target terminal selection portion 19B divides mobile terminals into groups for each stay time by using the expected stay time on the basis of the location registration signal calculated by the expected stay time calculation portion 18B. Specifically, the estimation target terminal selection portion 19B first divides mobile terminals into groups for each expected stay time, such as a group of mobile terminals with the expected stay time calculated by the expected stay time calculation portion 18B of 1 hour, a group of mobile terminals with the expected stay time of 2 hours, and a group of mobile terminals with the expected stay time of 3 hours and the like. Specifically, as shown in Fig. 24, mobile terminals whose location acquisition time information is within the observation target period and whose location information is within the observation area to be observed are divided into groups B1, B2, B3, ... for each expected stay time based on the expected stay time. Because the location registration signal is transmitted from a mobile terminal basically about every hour, it is considered that the grouping is preferably performed in accordance with the transmission cycle of the location registration signal. However, the interval of the grouping does not necessarily coincide with the transmission cycle of the location registration signal, and the grouping may be performed at any interval.

Then, the terminal quantity estimation portion 20B estimates the number of mobile terminals C1, C2, C3, ... for each of the groups B1, B2, B3, ... as shown in Fig. 24. The estimation of the number of terminals is performed using a feature quantity during the estimation target period, just like the terminal quantity estimation process in the terminal quantity estimation portion 20 according to the first embodiment. Note that the estimation target period used when the terminal quantity estimation portion 20B estimates the number of mobile terminals is the observation target period acquired by the observation target period acquisition portion 13.

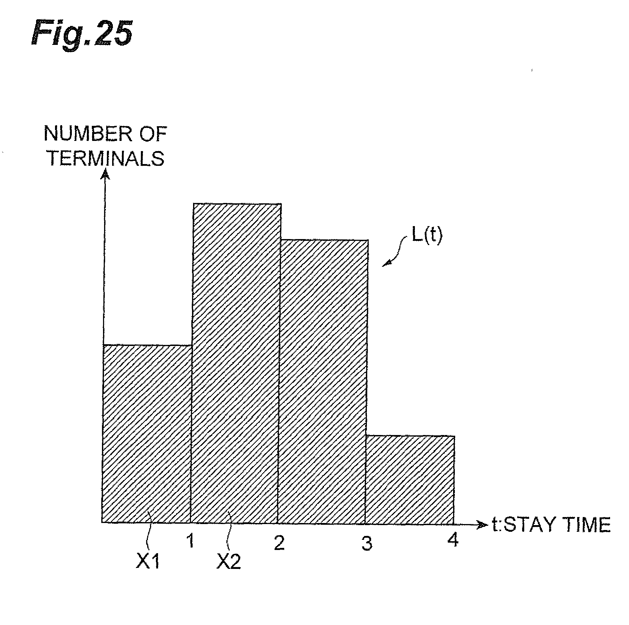

Then, the terminal quantity estimation portion 20B calculates a location registration signal stay time distribution (first stay time distribution) representing the relationship between the stay time of a mobile terminal staying in the observation area and the number of terminals for each stay time based on the estimated number of mobile terminals. The location registration signal stay time distribution can be represented by a bar graph in which the horizontal axis is the stay time and the vertical axis is the number of mobile terminals as shown in Fig. 25. Note that, in Fig. 25, the stay time in the horizontal axis corresponds to the expected stay time. In Fig. 25, the number of mobile terminals with the stay time of 1 hour (the number of terminals indicated by the bar X1) corresponds to the number of terminals C1 in Fig. 24, and the number of mobile terminals with the stay time of 2 hours (the number of terminals indicated by the bar X2) corresponds to the number of terminals C2 in Fig. 24.

Note that, in the location registration signal stay time distribution shown in Fig. 25, the bar X1 indicating the number of mobile terminals with the stay time of 1 hour represents the number of mobile terminals whose expected stay time satisfies a period of 0 hour to less than 1 hour during the observation target period. Alternatively, it may represent the number of mobile terminals whose expected stay time is 1 hour. Alternatively, it may represent the number of mobile terminals whose expected stay time satisfies a period of 30 minutes to less than 1 hour 30 minutes. Likewise, the bar X2 indicating the number of mobile terminals with the stay time of 2 hours represents the number of mobile terminals whose expected stay time satisfies a period of 1 hour to less than 2 hours during the observation target period and for which the location registration signal is acquired during the estimation target period.

Further, the terminal quantity estimation portion 20B calculates an expression L(t) for calculating the number of mobile terminals in the location registration signal stay time distribution shown in Fig. 25. The expression L(t) corresponds to the bar graph shown in Fig. 25 and can be calculated as a function with a variable of the stay time t.

Further, the estimation target terminal selection portion 19B divides mobile terminals into groups for each stay time by using the expected stay time on the basis of the GPS signal calculated by the expected stay time calculation portion 18B. Specifically, the estimation target terminal selection portion 19B first divides mobile terminals into groups for each expected stay time, such as a group of mobile terminals with the expected stay time calculated by the expected stay time calculation portion 18B of 5 minutes, a group of mobile terminals with the expected stay time of 10 minutes, and a group of mobile terminals with the expected stay time of 15 minutes and the like, just like the case of performing grouping using the expected stay time on the basis of the location registration signal. It is considered that the grouping in this case is preferably performed in units of 5 minutes by taking the timing of generation of the GPS signal location data or the like into account. However, the interval of the grouping is not limited to 5 minutes, and the grouping may be performed at any interval.

Next, the terminal quantity estimation portion 20B estimates the number of mobile terminals for each of the groups. The estimation of the number of terminals is performed using a feature quantity during the estimation target period, just like the terminal quantity estimation process in the terminal quantity estimation portion 20 according to the first embodiment. Note that the estimation target period used when the terminal quantity estimation portion 20B estimates the number of mobile terminals is the observation target period acquired by the observation target period acquisition portion 13.

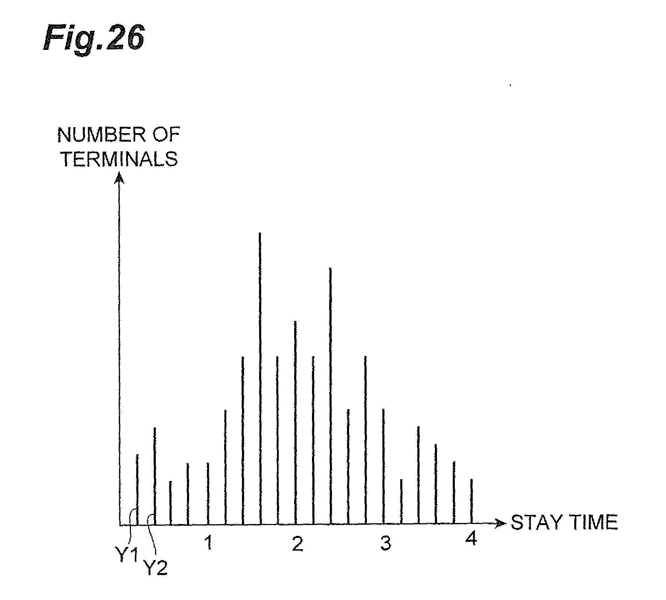

Then, the terminal quantity estimation portion 20B calculates a GPS signal stay time distribution (second stay time distribution) representing the relationship between the stay time of a mobile terminal staying in the observation area and the number of terminals for each stay time, just like the case of the location registration signal stay time distribution. The GPS signal stay time distribution can be represented by a bar graph in which the horizontal axis is the stay time and the vertical axis is the number of mobile terminals as shown in Fig. 26. Note that, in Fig. 26, the stay time in the horizontal axis corresponds to the expected stay time.

In the GPS signal stay time distribution shown in Fig. 26, the bar Y1 indicating the number of mobile terminals with the stay time of 5 minutes represents the number of mobile terminals whose expected stay time satisfies a period of 0 minute to less than 5 minutes during the observation target period, the mobile terminals using GPS during the estimation target period. Likewise, the bar Y2 indicating the number of mobile terminals with the stay time of 10 minutes represents the number of mobile terminals whose expected stay time satisfies a period of 5 minutes to less than 10 minutes during the observation target period, the mobile terminals using GPS during the estimation target period. Note that, in Fig. 26, the number of bars is shown to be smaller than the actual number (12 bars per hour in the case of grouping every 5 minutes) to simplify the graph.

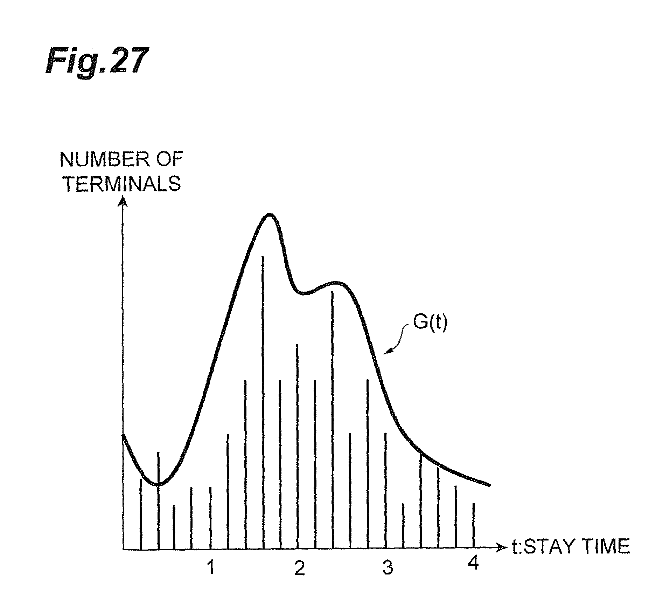

Then, the terminal quantity estimation portion 20B calculates an approximate curve G(t) for the number of mobile terminals in each stay time in the GPS signal stay time distribution as shown in Fig. 27. The GPS signal location data can be acquired when a mobile terminal having GPS function uses GPS, and it is assumed that the acquired number is small and varies largely. Thus, by calculating the approximate curve, the effect of variations or the like can be reduced. Note that the approximate curve G(t) can be calculated as a function with a variable of the stay time t.

As described above, in the terminal quantity estimation portion 20B, the location registration signal stay time distribution on the basis of the location registration signal location data (cf. Fig. 25) and the GPS signal stay time distribution on the basis of the GPS signal location data (cf. Fig. 27) are obtained in the terminal quantity estimation portion 20B. Note that the location registration signal stay time distribution and the GPS signal stay time distribution are used for calculating a correction factor for correcting the number of mobile terminals, as described in detail later. Further, the GPS signal stay time distribution is used as basic data for calculating the number of mobile terminals for each stay time, which, when corrected, becomes the corrected number of mobile terminals for each stay time.

The correction factor calculation portion 60 calculates a correction factor for correcting the number of mobile terminals based on the correlation between the location registration signal stay time distribution and the GPS signal stay time distribution calculated by the terminal quantity estimation portion 20B. When the mobile terminals that have transmitted the location registration signal is a population parameter, the mobile terminals using GPS is considered as a sample for the population parameter. Accordingly, the location registration signal stay time distribution that is generated based on the location registration signal transmitted from the mobile terminals as a population parameter and the GPS signal stay time distribution generated based on use of GPS by the mobile terminals as a sample for the population parameter have a correlation.

Specifically, the correction factor calculation portion 60 first determines a correction factor calculation target period that is used for calculating a correction factor from the location registration signal stay time distribution and the GPS signal stay time distribution. As the correction factor calculation target period, a period with a large number of mobile terminals is set by reference to the location registration signal stay time distribution (Fig. 25), for example. In this embodiment, the correction factor calculation target period is 1 hour to less than 3 hours. However, the correction factor calculation target period is not limited thereto, and a value not on the basis of the GPS signal stay time distribution may be set. The correction factor calculation portion 60 calculates the total number of mobile terminals whose stay time is within the correction factor calculation target period (1 hour to less than 3 hours) in the location registration signal stay time distribution. Using the expression L(t) for calculating the number of mobile terminals, this is represented by the left-hand side of the following equation (7).

[Number (5)]

[数5]

$$\sum_{t=1}^{3} L(t) = k \cdot \sum_{t=1}^{3} G(t) \qquad (7)$$

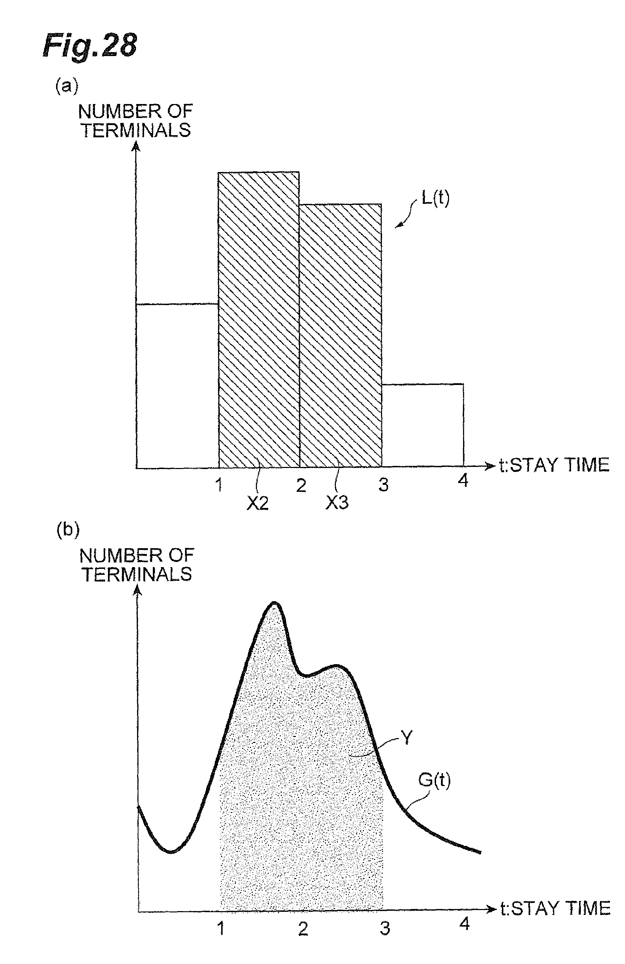

Specifically, in the bar graph representing the location registration signal stay time distribution shown in Fig. 28(a), the sum of the area of the bar X2 representing the number of mobile terminals with the stay time of 1 hour to less than 2 hours and the area of the bar X3 representing the number of mobile terminals with the stay time of 2 hours to less than 3 hours is calculated.

Next, the correction factor calculation portion 60 calculates the total number of mobile terminals whose stay time is within the correction factor calculation target period (1 hour to less than 3 hours) in the GPS signal stay time distribution. Using the approximate curve G(t), this is represented by the expression where "k" is eliminated from the right-hand side of the above equation (7). Specifically, in the graph representing the approximate curve G(t) shown in Fig. 28(b), the area of the region Y between the approximate curve G(t) during the stay time of 1 to 3 hours and the horizontal axis is calculated.

Then, the correction factor calculation portion 60 calculates the value of the factor k that satisfies the above equation (7) in order to find a correlation between the location registration signal stay time distribution and the GPS signal stay time distribution. The factor k is a  correction factor k for correcting the number of mobile terminals based on the correlation between the location registration signal stay time distribution and the GPS signal stay time distribution.

After calculating the correction factor k, the correction factor calculation portion 60 outputs the calculated correction factor to the terminal quantity correction portion 50. The terminal quantity correction portion 50 acquires the correction factor k calculated by the correction factor calculation portion 60 and further acquires the approximate curve G(t) in the GPS signal stay time distribution calculated by the terminal quantity estimation portion 20B. Then, the terminal quantity correction portion 50 multiplies the approximate curve G(t) by the correction factor k as shown in the following expression (8) and thereby corrects the terminal quantity distribution of mobile terminals for each stay time.

$$k \times G(t) \qquad (8)$$

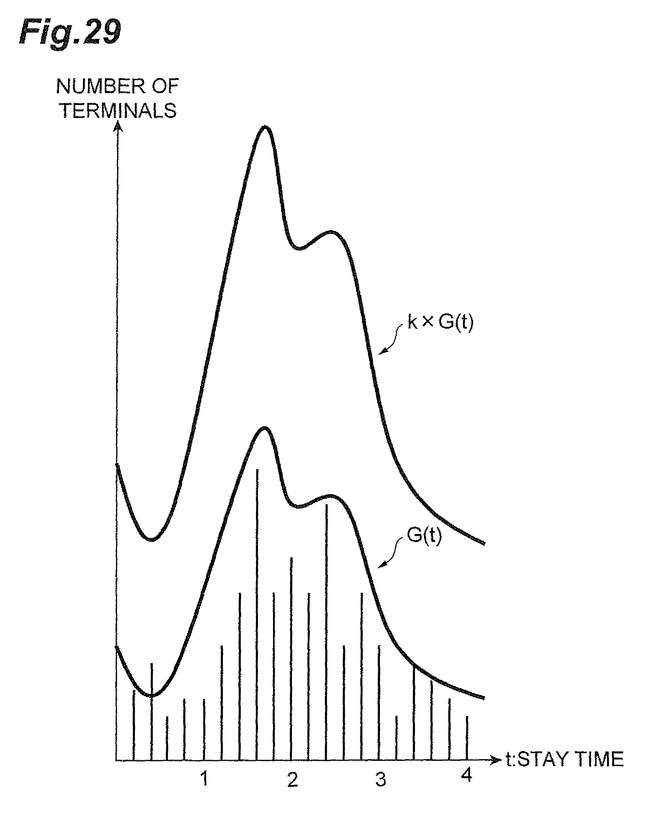

Further, the corrected terminal quantity distribution of mobile terminals for each stay time can be represented by a graph shown in Fig. 29.

The terminal quantity output portion 21B outputs the corrected terminal quantity distribution for each stay time corrected by the terminal quantity correction portion 50.

[Calculation Process of Terminal Quantity Distribution of Mobile Terminals for Each Stay Time]

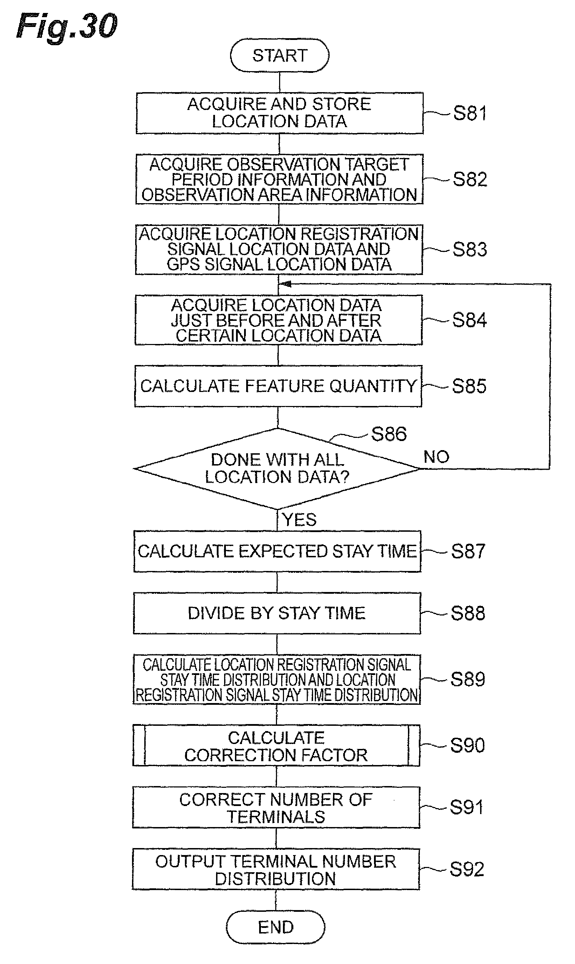

The process of calculating the terminal quantity distribution of mobile terminals for each stay time in this embodiment is described hereinafter. s shown in Fig. 30, the location data acquisition portion 11 first acquires the location data containing the location registration signal  location data and the GPS signal location data from the outside and stores them into the accumulation portion 12 (Step S81).

Next, the observation target period acquisition portion 13 acquires the observation target period information containing a set of the start time and the end time, and the observation area acquisition portion 14 acquires the observation area information associated with one or a plurality of location information (Step S82).

Next, the observation target acquisition portion 15B acquires the location registration signal location data and the GPS signal location data whose location acquisition time is within the observation target period and whose location information is within the observation area to be observed from the GPS signal location data stored in the accumulation portion 12 (Step S83).

Then, the processing of the following Steps S84 to S87 is performed for each of the acquired location registration signal location data and GPS signal location data. The processing of Steps S84 to S87 is the same as the processing of Step S4 to acquire the before and after location data, Step S5 to calculate a feature quantity, Step S6 to determine whether the calculation of a feature quantity has ended for all the location data, and Step S7 to calculate the expected stay time in the first embodiment, and the detailed description thereof is omitted.

After that, the estimation target terminal selection portion 19B divides mobile terminals into groups for each stay time by using the expected stay time on the basis of the location registration signal and divides mobile terminals into groups for each stay time by using the expected stay time on the basis of the GPS signal (Step S88). Then, the

29

terminal quantity estimation portion 20B estimates the number of mobile terminals in each group and calculates the expression L(t) representing the location registration signal stay time distribution and the approximate curve G(t) of the GPS signal stay time distribution (Step S89).

Then, the correction factor calculation portion 60 calculates a correction factor based on the expression L(t) representing the location registration signal stay time distribution and the approximate curve G(t) of the GPS signal stay time distribution (Step S90). The terminal quantity correction portion 50 corrects the terminal quantity distribution of mobile terminals for each stay time by using the correction factor k and the approximate curve G(t) (Step S91). Then, the terminal quantity output portion 21B outputs the corrected terminal quantity distribution for each stay time corrected by the terminal quantity correction portion 50 (Step S92).

[Calculation Process of Correction Factor k]

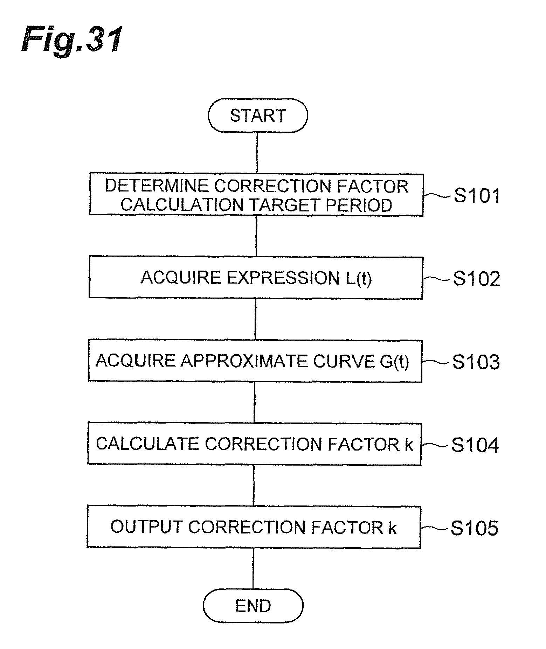

The process of calculating the correction factor k in Step S90 of Fig. 30 is described hereinafter in detail. As shown in Fig. 31, the correction factor calculation portion 60 determines the correction factor calculation target period used for calculating the correction factor (Step S101). Then, the correction factor calculation portion 60 acquires the expression L(t) representing the location registration signal stay time distribution and the approximate curve G(t) of the GPS signal stay time distribution from the terminal quantity estimation portion 20B (Step S102, S103).

Then, the correction factor calculation portion 60 calculates the correction factor k using the correction factor calculation target period, the expression L(t) and the approximate curve G(t) in accordance with the above expression (7) (Step S104). After calculating the correction factor k, the correction factor calculation portion 60 outputs the calculated correction factor k to the terminal quantity correction portion 50 (Step S 105).

As described above, according to the fourth embodiment, the terminal quantity estimation portion 20B calculates the location registration signal stay time distribution on the basis of the location registration signal location data and the GPS signal stay time distribution on the basis of the GPS signal location data. Then, using the expression L(t) representing the location registration signal stay time distribution and the approximate curve G(t) of the GPS signal stay time distribution, the correction factor calculation portion 60 calculates the correction factor k. The correction factor k is used to correct the number of mobile terminals for each stay time which is estimated based on the GPS signal location data, based on the location registration signal location data. Therefore, the terminal quantity correction portion 50 corrects the number of mobile terminals for each stay time which is calculated based on the GPS signal location data by using the correction factor k, and it is thereby possible to more accurately estimate the terminal quantity distribution of mobile terminals for each stay time.

[Alternative Example of Terminal Quantity Estimation Device according to Fourth Embodiment]

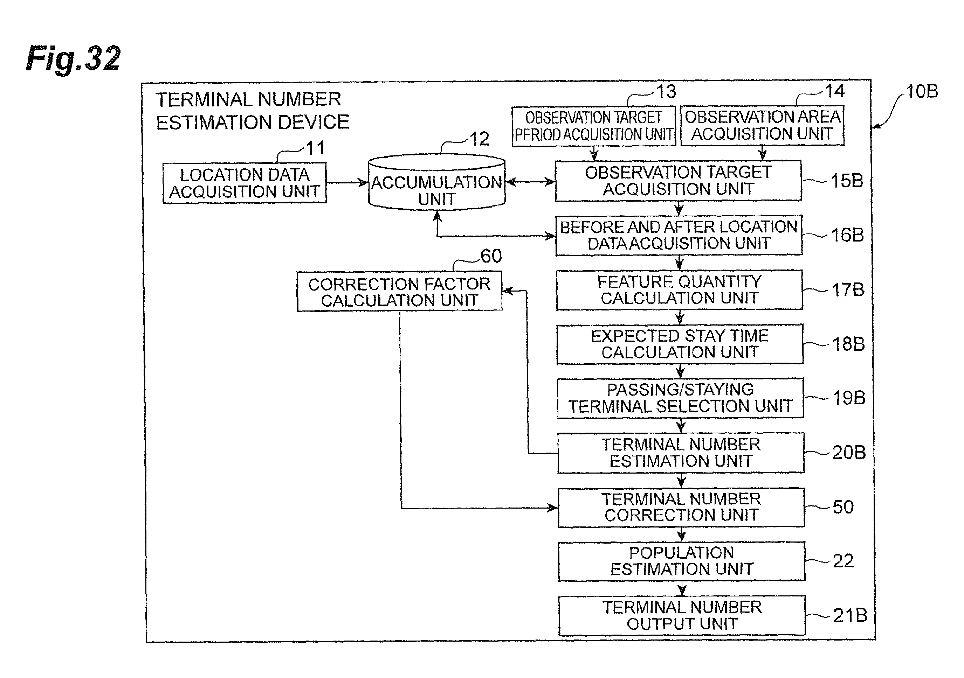

The terminal quantity estimation device 10B according to the fourth embodiment described above may further include a population estimation portion (population estimation means) 22 that estimates the population in the observation area during the estimation target period as shown in Fig. 32, just like the alternative example of the terminal quantity estimation device 10 according to the first embodiment. The population estimation portion 22 estimates the population based on the ratio of the number of terminals whose address information is one administrative district area in a predetermined wide area and the population on the basis of statistical data in one administrative district area included in the wide area (for example, the ratio of the number of mobile terminals in a wide area (for example, all over Japan) including the observation area during the estimation target period and the population of the administrative district area (for example, Tokyo)) and the number of terminals obtained by the terminal quantity correction portion 50. It is thereby possible to estimate the number of people for each stay time from the terminal quantity distribution of mobile terminals for each stay time.

Note that the ratio of the number of terminals and the population may be "terminal contact ratio", which is the ratio of "the number of contract terminals of a specific carrier for which the location information is obtained" to "the population in an area of a predetermined range". For the above-described ratio (including the terminal contact ratio), it is preferred to calculate a ratio for each area, a ratio for each gender, a ratio for each age group and the like and use them for estimation of the population. Further, the population may be estimated by calculating the ratio of the number of in-the-service-area terminals across the country during the estimation target period and the population or a certain fixed value. Furthermore, a previously calculated ratio may be used instead of the estimation target period.

Further, in the alternative example of the terminal quantity estimation device according to the fourth embodiment, address information of a user of a mobile terminal corresponding to identification information contained in location data may be further associated with the location data and stored in the accumulation portion 12, and the terminal quantity distribution of mobile terminals for each stay time may be estimated based on the location data of each address information, and the population may be estimated based on the estimated terminal quantity distribution. In this case, the population distribution of people who have certain address information for each stay time can be estimated. Further, in this case also, when calculating the population from the number of terminals, it is preferred to calculate a ratio for each area, a ratio for each gender, a ratio for each age group and the like and use them for estimation of the population. It is thereby possible to obtain a distribution by gender or a distribution by age group.

Further, although the terminal quantity correction portion 50 corrects the GPS signal stay time distribution using the correction factor k in the fourth embodiment, the location registration signal stay time distribution may be corrected. In this case, the stay time distribution can be corrected by dividing the location registration signal stay time distribution by the correction factor k.

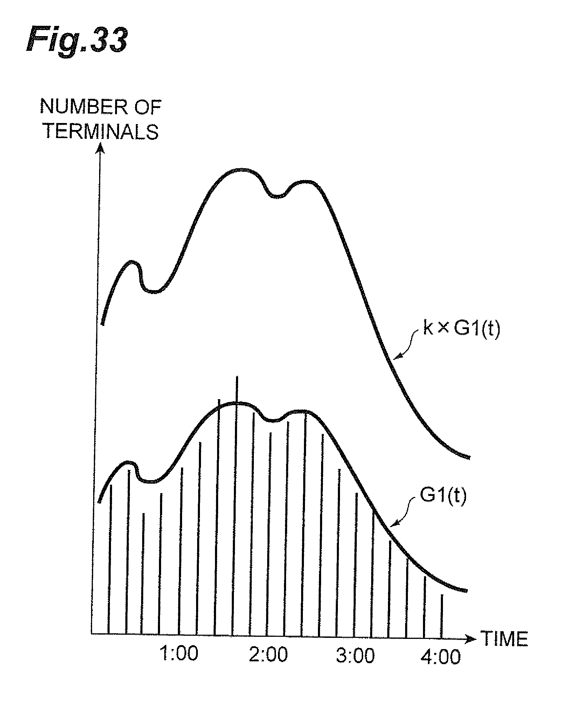

Furthermore, although the terminal quantity estimation portion 20B calculates the GPS signal stay time distribution representing the relationship between the stay time of a mobile terminal and the number of mobile terminals for each stay time, and the terminal quantity correction portion 50 corrects the GPS signal stay time distribution by using the correction factor in the fourth embodiment, the target of correction is not limited to the GPS signal stay time distribution representing the relationship between the stay time of a mobile terminal and the number of mobile terminals for each stay time. For example, as shown in Fig. 33, a distribution representing how many of the mobile terminals staying in the observation area for a specified period of time have been staying at each time during the observation target period may be used. Specifically, in Fig. 33, only the mobile terminals that have been staying for a specified period of time are shown. The distribution can be calculated as a function with a variable of the time t. When calculating this distribution, the estimation target terminal selection portion 19B first extracts mobile terminals whose stay time is a specified period of time (for example, mobile terminals staying for 1 to 3 hours) by using the expected stay time generated based on the GPS location data. Then, the terminal quantity estimation portion 20B estimates the number of terminals by using the feature quantity during the estimation target period in the same manner as in the terminal quantity estimation process in the terminal quantity estimation portion 20 in the first embodiment. Note that, the estimation target period used when the terminal quantity estimation portion 20B estimates the number of mobile terminals is the interval of 5 minutes, and the number of mobile terminals is estimated by shifting the estimation target period by 5 minutes each during the observation period. It is thereby possible to calculate a distribution representing how many of the mobile terminals staying in the observation area for a specified period of time have been staying at each time during the observation target period (which is time of every 5 minutes in this example). By calculating the approximate curve G(t) of the calculated distribution and multiplying the approximate curve G(t) by the correction factor k calculated by the correction factor calculation portion 60, the number of mobile terminals at each time is corrected. Note that, when correcting the terminal quantity distribution of mobile terminals staying in the observation area for a specified period of time (for example, for 1 to 3 hours) at each time by the correction factor k, the correction factor k is calculated by using the specified period of time (for example, for 1 to 3 hours) during which the mobile terminals for which the terminal quantity distribution at each time is calculated have been staying in the observation area as the correction factor calculation target period used when calculating the correction factor k. It is thereby possible to more accurately calculate the terminal quantity distribution of the mobile terminals that have been staying in the observation area for a specified period of time at each time during the observation target period.

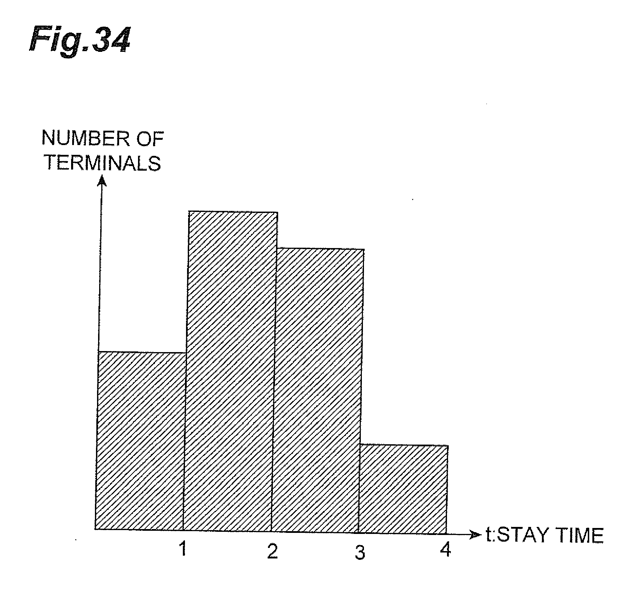

Further, in the terminal quantity estimation device 10 according to the first embodiment also, it is possible to calculate the distribution of the number of mobile terminals for each stay time, just like the location registration signal stay time distribution shown in Fig. 25 calculated in the fourth embodiment. Specifically, the passing/staying terminal selection portion 19 according to the first embodiment divides mobile terminals into groups for each stay time (for example, every one hour) by using the expected stay time of each mobile terminal calculated by the expected stay time calculation portion 18. Then, the terminal quantity estimation portion 20 estimates the number of mobile terminals for each group. Note that the estimation target period that is used when the terminal quantity estimation portion 20 estimates the number of mobile terminals is the observation target period. It is thereby possible to obtain the terminal quantity distribution of mobile terminals for each stay time in the terminal quantity estimation device 10 according to the first embodiment also as shown in Fig. 34.

Further, in the terminal quantity estimation device 10 according to the first embodiment also, it is possible to calculate the terminal quantity distribution of mobile terminals at each time as shown in Fig. 33 for each of staying mobile terminals and passing mobile terminals. Specifically, when the terminal quantity estimation portion 20 according to the first embodiment estimates the number of staying mobile terminals at each time, for example, the number of mobile terminals for each time period can be estimated by estimating the number of mobile terminals based on the feature quantity corresponding to each estimation target period by shifting the estimation target period by 5 minutes each. It is thereby possible to calculate a distribution representing how many of the mobile terminals staying in the observation area has been staying at each time during the observation target period. By performing the same processing, the terminal quantity distribution at each time can be calculated for passing mobile terminals as well.

Further, in the above first and fourth embodiments, the terminal quantity estimation portion 20, 20B may estimate a value obtained by dividing the feature quantity $w_{ij}$ for each location data by 2, calculating the sum of (feature quantity $w_{ij}/2$) and dividing the calculated sum by the estimation target period length T as the number of terminals as is obvious from the above equation (6). However, the calculation method that divides the sum of feature quantity $w_{ij}$ for each location

data by twice the estimation target period length T as in the above embodiments has an advantage of reducing the processing load because the number of times of division is significantly smaller.

Furthermore, a calculation method of a feature quantity that is calculated for obtaining the expected stay time is also not limited to the above method. For example, the location data acquired at each time period of 0 to 1 o'clock, 1 to 2 o'clock, ..., and 23 to 24 o'clock is counted for each mobile terminal, and the inverse number of the number of location data at each time period for each mobile terminal is set as a weight on the location data in each time period. The value of weight can be used as the feature quantity described in the above embodiments.

An alternative example of the feature quantity is described hereinafter. In the above-described embodiments, an example in which a time difference between the location data before and after the location data for which the feature quantity is to be obtained (the first location data) (which is a time difference between the second location data and the third location data) is calculated as the feature quantity of the first location data is described. In this case, the feature quantity can be represented as the following equation (9). Note that the following equation (9) is deformation of the above equation (4), and it is equivalent of the equation (4) (i.e. the concept of the equation (4) is unchanged).

$$w_{ij} = u_{i(j+1)} - u_{i(j-1)} \qquad (9)$$

This alternative example is another variation of the calculation method of the feature quantity that is calculated in the feature quantity calculation portion 17.

In this alternative example, when calculating the feature quantity of the first location data, the feature quantity calculation portion 17 takes type information (for example, the generation factor (generation timing) of the location data, which is described later) for the second location data and the third location data into consideration. Specifically, the feature quantity calculation portion 17 calculates a value obtained by multiplying a time difference between the third location data and the first location data by a correction factor $\alpha$ corresponding to the type information (in this example, the generation factor) of the third location data and calculates a value obtained by multiplying a time difference between the first location data and the second location data by a correction factor $\beta$ corresponding to the type information (in this example, the generation factor) of the second location data. Note that, however, the feature quantity calculation portion 17 may determine the correction factor $\alpha$ or $\beta$ in accordance with the type information of the first location data, determine the correction factor $\beta$ in accordance with the type information of the first and second location data or determine the correction factor $\alpha$ in accordance with the type information of the first and third location data. Then, the feature quantity calculation portion 17 uses the sum of the values obtained by the multiplication as the feature quantity of the first location data. The calculation of the feature quantity in the feature quantity calculation portion 17 is represented as the following equation (10).

$$w_{ij} = \alpha(u_{i(j+1)} - u_{ij}) + \beta(u_{ij} - u_{i(j-1)}) \quad (10)$$

As the type information of the second location data and the third location data, information about a generation factor of location registration information may be used when the location data is location registration information, for example, and the information about a generation factor is contained in the generated location registration information. The generation factor of the location registration information may be movement of the terminal across the location area boundary, generation based on the location registration performed periodically, execution of attachment upon power-on or the like of the terminal, execution of detachment upon power-off or a like of the terminal and so on, and set values of the correction factors $\alpha$ and $\beta$ are determined in advance corresponding to such a generation factor. Then, the feature quantity calculation portion 17 may set the correction factor $\alpha$ for the third location data in accordance with the information about the generation factor of the third location data, and set the correction factor $\beta$ for the second location data in accordance with the information about the generation factor of the second location data. Note that the correction factors $\alpha$ and $\beta$ may be both predetermined to be a value of 0 to 2. Note that, however, this numerical range is not essential.

In the case where the location of the terminal and the generation trigger of the location registration information are irrelevant such as the location registration information on the basis of periodical location registration, for example, the expected value of the stay time in the current area is considered to be the same before and after generation of the location registration information. On the other hand, in the case of the location registration information that is generated when the terminal moves across the location area boundary, it can be determined that the terminal has not been staying in the current area at least before the location registration information is generated. Therefore, assuming that the time when the terminal has been staying in the current area before the location registration information is generated is 0, and if the type information (generation factor) of the first location registration information is "across location area boundary", the correction factor β in the above equation (10) (which is the correction factor β about a time difference from the immediately previous location registration information) can be set to 0. It is thereby possible to calculate the feature quantity that more closely reflects the actual conditions.

As described above, when calculating a feature quantity of target location data (first location data), the feature quantity calculation portion 17 corrects a time difference between the second location data and the third location data, which are the location data before and after the first location data, in accordance with type information (for example, a generation factor of the location data) for the second and third location data, and calculates the feature quantity using the corrected time difference. It is thereby possible to accurately calculate the feature quantity based on the type information of the location data.

**Reference Signs List**

10, 10A...terminal quantity estimation device, 11,11A...location data acquisition portion (location data acquisition means), 15,15B...observation target acquisition portion (observation target acquisition means), 16,16A...before and after location data acquisition portion (before and after location data acquisition means), 17,17A...feature quantity calculation portion (feature quantity calculation means), 18,18A...expected stay time calculation portion (expected stay time calculation means), 19...passing/staying terminal selection portion (passing/staying terminal selection means), 19B...estimation target terminal selection portion (estimation target terminal selection means), 20,20B...terminal quantity estimation portion (terminal quantity estimation means, first stay time distribution calculation means, second stay time distribution calculation means), 22...population estimation portion (population estimation means), 25...estimated residence terminal list creation portion (estimated residence terminal list creation means), 33...analysis target acquisition portion (analysis target acquisition means), 34... analysis target terminal extraction portion (analysis target terminal extraction means), 35...estimation target terminal selection portion (estimation target terminal selection means), 36... terminal quantity estimation portion (terminal quantity estimation means), 38...commuter quantity estimation portion (commuter quantity estimation means), 50...terminal quantity correction portion (terminal quantity correction means), 60...correction factor calculation portion (correction factor calculation means)

**Claims**

1.  A terminal quantity estimation device comprising:

    location data acquisition means for acquiring location data containing identification information identifying a mobile terminal, location information about a location of the mobile terminal, and location acquisition time information when the location information is acquired;
    observation target acquisition means for acquiring location data in which the location acquisition time information is within an observation target period where stay is to be observed and the location information is within an observation area to be observed, as observation target location data;
    feature quantity calculation means for calculating a feature quantity of the observation target location data based on the location acquisition time information contained in the observation target location data acquired by the observation target acquisition means;
    expected stay time calculation means for calculating a total value of feature quantities calculated by the feature quantity calculation means, as an expected stay time representing a stay time, for each identification information of a mobile terminal;
    estimation target terminal selection means for selecting mobile terminals to serve as a target of terminal quantity estimation based on the expected stay time; and
    terminal quantity estimation means for estimating the number of mobile terminals selected by the estimation target terminal selection means.

2.  The terminal quantity estimation device according to Claim 1, wherein
    the estimation target terminal selection means extracts mobile terminals for which the expected stay time is less than a predetermined passing/staying determination threshold as passing mobile terminals passing through the observation area, and selects the extracted passing mobile terminals as the mobile terminals to serve as a target of terminal quantity estimation.

3.  The terminal quantity estimation device according to Claim 1 or 2, wherein
    the estimation target terminal selection means extracts mobile terminals for which the expected stay time is equal to or more than a predetermined passing/staying determination threshold as staying mobile terminals staying in the observation area, and selects the extracted staying mobile terminals as the mobile terminals to serve as a target of terminal quantity estimation.

4. The terminal quantity estimation device according to Claim 1 or 2, wherein
the estimation target terminal selection means extracts mobile terminals for which the expected stay time is between two predetermined passing/staying determination thresholds as staying mobile terminals staying in the observation area, and selects the extracted staying mobile terminals as the mobile terminals to serve as a target of terminal quantity estimation.

5. The terminal quantity estimation device according to any one of Claims 1 to 4, wherein
the terminal quantity estimation means estimates the number of mobile terminals within a predetermined estimation target period.

6. The terminal quantity estimation device according to Claim 5, further comprising:

population estimation means for estimating a population of one user attribute based on the number of mobile terminals estimated by the terminal quantity estimation means, and a ratio of the number of in-the-service-area terminals having the one user attribute in a predetermined wide area and a population on basis of statistical data in the one user attribute included in the wide area.

7. The terminal quantity estimation device according to Claim 5, further comprising:

population estimation means for estimating a population of one administrative district area based on the number of mobile terminals estimated by the terminal quantity estimation means, and a ratio of the number of in-the-service-area terminals whose address information is one administrative district area in a predetermined wide area and a population on basis of statistical data in one administrative district area included in the wide area.

8. The terminal quantity estimation device according to Claim 1, further comprising:

analysis target acquisition means for acquiring location data in which the location acquisition time information is within an analysis target period to be analyzed and the location information is within the observation area as analysis target location data; and
analysis target terminal extraction means for extracting analysis target terminals to be analyzed based on the analysis target location data acquired by the analysis target acquisition means,
wherein the estimation target terminal selection means
estimates mobile terminals of users living in the observation area based on the expected stay time, and selects mobile terminals remaining after excluding the mobile terminals of users estimated as living in the observation area from the analysis target terminals extracted by the analysis target terminal extraction means, as the mobile terminals to serve as a target of terminal quantity estimation by the terminal quantity estimation means.

9. The terminal quantity estimation device according to Claim 8, wherein
the location data further contains address information of a user of the mobile terminal,
the terminal quantity estimation means estimates the number of mobile terminals, for each estimation target area, based on the address information of the location data corresponding to the mobile terminal, and
the terminal quantity estimation device further includes a people number estimation means for estimating the number of people for each estimation target area based on the number of mobile terminals estimated for each estimation target area, and a ratio of the number of in-the-service-area terminals whose address information is one estimation target area in a predetermined wide area and a population on basis of statistical data in one estimation target area included in the wide area.

10. The terminal quantity estimation device according to Claim 9, further comprising:

commuter number estimation means for estimating the number of commuters unable to get home who are difficult to return from the observation area to the estimation target area, based on the number of people for each estimation target area estimated by the people number estimation means and the observation area.

11. The terminal quantity estimation device according to Claim 9 or 10, wherein

the estimation target terminal selection means selects mobile terminals remaining after excluding the mobile terminals of users estimated as living in the observation area or analysis target terminals whose address information in the location data corresponding to the analysis target terminals is within the observation area from the analysis target terminals as the mobile terminals to serve as a target of terminal quantity estimation by the terminal quantity estimation means.

**12.** The terminal quantity estimation device according to Claim 1, further comprising:

analysis target acquisition means for acquiring location data in which the location acquisition time information is within an analysis target period to be analyzed and the location information is within an analysis target area to be analyzed as analysis target location data; and
analysis target terminal extraction means for extracting analysis target terminals to be analyzed, based on the analysis target location data acquired by the analysis target acquisition means,
wherein the estimation target terminal selection means
estimates mobile terminals of users living in the observation area based on the expected stay time, and extracts mobile terminals of users estimated as living in the observation area from the analysis target terminals extracted by the analysis target terminal extraction means, and selects the extracted mobile terminals as the mobile terminals to serve as a target of terminal quantity estimation by the terminal quantity estimation means.

**13.** The terminal quantity estimation device according to Claim 12, further comprising:

people number estimation means for estimating the number of people living in the observation area among people present in the analysis target area during the analysis target period, based on the number of mobile terminals estimated by the terminal quantity estimation means, and a ratio of the number of in-the-service-area terminals whose address information is one observation target area in a predetermined wide area and a population on basis of statistical data in one observation target area included in the wide area.

**14.** The terminal quantity estimation device according to Claim 13, further comprising:

commuter number estimation means for estimating the number of commuters unable to get home who are difficult to return from the estimation target area to the observation area, based on the number of people living in the observation area among people present in the analysis target area during the analysis target period estimated by the people number estimation means, and the estimation target area.

**15.** The terminal quantity estimation device according to any one of Claims 12 to 14, wherein
the location data further contains address information of a user of the mobile terminal, and
the estimation target terminal selection means extracts the mobile terminals of users estimated as living in the observation area or analysis target terminals whose address information in the location data corresponding to the analysis target terminals is within the observation area from the analysis target terminals, and selects the extracted mobile terminals as the mobile terminals to serve as a target of terminal quantity estimation by the terminal quantity estimation means.

**16.** The terminal quantity estimation device according to Claim 1, wherein
the location data acquired by the location data acquisition means contains first registration location data containing first location information registered by the mobile terminal and second registration location data containing second location information registered by the mobile terminal,
the observation target acquisition means acquires the second registration location data in which the location acquisition time information is within an observation target period where stay is to be observed and the location information is within an observation area to be observed as the observation target location data, and
the terminal quantity estimation device further includes:

first stay time distribution calculation means for calculating a first stay time distribution representing a relationship between a stay time of a mobile terminal staying in the observation area and the number of terminals for each stay time, based on the first registration location data;
second stay time distribution calculation means for calculating a second stay time distribution representing a relationship between a stay time of a mobile terminal staying in the observation area and the number of terminals for each stay time, based on the second registration location data;

correction factor calculation means for calculating a correction factor for correcting the number of mobile terminals, based on a correlation between the first stay time distribution and the second stay time distribution; and terminal quantity correction means for correcting the number of mobile terminals estimated by the terminal quantity estimation means by using the correction factor calculated by the correction factor calculation means.

**17.** The terminal quantity estimation device according to any one of Claim 16, further comprising:

population estimation means for estimating a population of one user attribute based on the number of mobile terminals estimated by the terminal quantity estimation means, and a ratio of the number of in-the-service-area terminals having the one user attribute in a predetermined wide area and a population on basis of statistical data in the one user attribute included in the wide area.

**18.** The terminal quantity estimation device according to any one of Claims 1 to 17, further comprising:

before and after location data acquisition means for acquiring, for certain first location data of the observation target location data, location acquisition time information of second location data immediately before the first location data and location acquisition time information of third location data immediately after the first location data among location data containing the same identification information as the first location data, wherein the feature quantity calculation means calculates a feature quantity for the first location data based on two or more of a location acquisition time of the first location data, a location acquisition time of the second location data and a location acquisition time of the third location data.

**19.** A terminal quantity estimation method performed by a terminal quantity estimation device, comprising:

location data acquisition step of acquiring location data containing identification information identifying a mobile terminal, location information about a location of the mobile terminal, and location acquisition time information when the location information is acquired; observation target acquisition step of acquiring location data in which the location acquisition time information is within an observation target period where stay is to be observed and the location information is within an observation area to be observed, as observation target location data; feature quantity calculation step of calculating a feature quantity of the observation target location data based on the location acquisition time information contained in the observation target location data acquired in the observation target acquisition step; expected stay time calculation step of calculating a total value of feature quantities calculated in the feature quantity calculation step, as an expected stay time representing a stay time, for each identification information of a mobile terminal; estimation target terminal selection step of selecting mobile terminals to serve as a target of terminal quantity estimation based on the expected stay time; and terminal quantity estimation step of estimating the number of mobile terminals selected in the estimation target terminal selection step.

# Fig.1

1

504 — VISUALIZATION SOLUTION UNIT

503 — MOBILE DEMOGRAPHY UNIT

502 — PETA MINING UNIT

501 — SOCIAL SENSOR UNIT

500

PROCESSING NODE     PROCESSING NODE      700

SWITCHING EQUIPMENT    SWITCHING EQUIPMENT    SWITCHING EQUIPMENT      400

RNC  RNC  RNC  RNC  RNC  RNC      300

BTS BTS BTS BTS BTS BTS BTS BTS BTS BTS BTS      200

100

## Fig.2

TERMINAL NUMBER ESTIMATION DEVICE — 10

OBSERVATION TARGET PERIOD ACQUISITION UNIT — 13

OBSERVATION AREA ACQUISITION UNIT — 14

LOCATION DATA ACQUISITION UNIT — 11

ACCUMULATION UNIT — 12

OBSERVATION TARGET ACQUISITION UNIT — 15

BEFORE AND AFTER LOCATION DATA ACQUISITION UNIT — 16

FEATURE QUANTITY CALCULATION UNIT — 17

EXPECTED STAY TIME CALCULATION UNIT — 18

PASSING/STAYING TERMINAL SELECTION UNIT — 19

TERMINAL NUMBER ESTIMATION UNIT — 20

TERMINAL NUMBER OUTPUT UNIT — 21

EP 2 672 737 A1

# *Fig.3*

k(c1):4

k(c2):1.6

k(c3):0.7

*Fig.4*

# Fig.5

EP 2 672 737 A1

## Fig.6

ESTIMATION TARGET PERIOD (T)

$w_{i1}/2$  $w_{i2}/2$  $w_{i3}/2$

$q_{i0}$  $q_{i1}$  $q_{i2}$  $q_{i3}$  $q_{i4}$

TERMINAL $a_i$

PERIOD WHERE $a_i$ HAS BEEN STAYING IN S

$t$

ESTIMATED
AMOUNT OF $t_i$

# Fig.7

START

ACQUIRE AND
STORE LOCATION DATA — S1

ACQUIRE OBSERVATION TARGET
PERIOD AND ACQUIRE
OBSERVATION AREA INFORMATION — S2

ACQUIRE OBSERVATION
TARGET LOCATION DATA — S3

ACQUIRE LOCATION DATA
JUST BEFORE AND AFTER
CERTAIN OBSERVATION
TARGET LOCATION DATA — S4

CALCULATE FEATURE
QUANTITY — S5

DONE
WITH ALL OBSERVATION
TARGET LOCATION
DATA? — S6

NO

YES

CALCULATE EXPECTED STAY TIME — S7

SELECT PASSING/STAYING
MOBILE TERMINALS — S8

ESTIMATE NUMBER OF
TERMINALS — S9

OUTPUT NUMBER OF TERMINALS — S10

END

# Fig.8

```
        ┌─────────────────────────────┐
        │    FEATURE QUANTITY          │
        │   CALCULATION PROCESS        │
        └─────────────────────────────┘
                     │
  ┌──────────────────────────────────────────────┐
  │ CALCULATE DIFFERENCE Da BETWEEN LOCATION      │
  │ ACQUISITION TIMES OF FIRST AND SECOND         │── S11
  │ LOCATION DATA AND DIFFERENCE Db BETWEEN       │
  │ LOCATION ACQUISITION TIMES OF FIRST AND       │
  │ THIRD LOCATION DATA                           │
  └──────────────────────────────────────────────┘
                     │
            ◇ S12                    NO
          DIFFERENCE Da> ──────────────────┐
          REFERENCE VALUE A                │
               ?                           │
             │ YES                         │
  ┌──────────────────────────────────┐     │
  │ USE TIME EARLIER THAN LOCATION    │     │
  │ ACQUISITION TIME OF FIRST         │── S13│
  │ LOCATION DATA BY SPECIFIED TIME   │     │
  │ AS LOCATION ACQUISITION TIME OF   │     │
  │ SECOND LOCATION DATA              │     │
  └──────────────────────────────────┘     │
                     │◄────────────────────┘
            ◇ S14                    NO
          DIFFERENCE Db> ──────────────────┐
          REFERENCE VALUE B                │
               ?                           │
             │ YES                         │
  ┌──────────────────────────────────┐     │
  │ USE TIME LATER THAN LOCATION      │     │
  │ ACQUISITION TIME OF FIRST         │── S15│
  │ LOCATION DATA BY SPECIFIED TIME   │     │
  │ AS LOCATION ACQUISITION TIME OF   │     │
  │ THIRD LOCATION DATA               │     │
  └──────────────────────────────────┘     │
                     │◄────────────────────┘
  ┌──────────────────────────────────┐
  │ CALCULATE DIFFERENCE BETWEEN      │
  │ LOCATION ACQUISITION TIMES OF     │── S16
  │ SECOND AND THIRD LOCATION DATA AS │
  │ FEATURE QUANTITY FOR FIRST        │
  │ LOCATION DATA                     │
  └──────────────────────────────────┘
                     │
               ┌──────────┐
               │  RETURN  │
               └──────────┘
```

EP 2 672 737 A1

**Fig.9**

TERMINAL NUMBER ESTIMATION DEVICE — 10

LOCATION DATA ACQUISITION UNIT — 11

ACCUMULATION UNIT — 12

OBSERVATION TARGET PERIOD ACQUISITION UNIT — 13

OBSERVATION AREA ACQUISITION UNIT — 14

OBSERVATION TARGET ACQUISITION UNIT — 15

BEFORE AND AFTER LOCATION DATA ACQUISITION UNIT — 16

FEATURE QUANTITY CALCULATION UNIT — 17

FEATURE QUANTITY STORAGE UNIT — 17a

EXPECTED STAY TIME CALCULATION UNIT — 18

PASSING/STAYING TERMINAL SELECTION UNIT — 19

TERMINAL NUMBER ESTIMATION UNIT — 20

TERMINAL NUMBER OUTPUT UNIT — 21

## Fig.10

```
                    ┌─────────┐
                    │  START  │
                    └────┬────┘
                         │ ◄──────────────────────┐
                         ▼                         │
        ┌────────────────────────────────┐        │
        │      ACQUIRE LOCATION DATA      │        │
        │        JUST BEFORE AND          │─S31    │
        │ AFTER CERTAIN LOCATION DATA     │        │
        └────────────────┬───────────────┘        │
                         ▼                         │
        ┌────────────────────────────────┐        │
        │   CALCULATE FEATURE QUANTITY    │─S32    │
        └────────────────┬───────────────┘        │
                         ▼                         │
        ┌────────────────────────────────┐        │
        │      STORE FEATURE QUANTITY     │─S33    │
        └────────────────┬───────────────┘        │
                         ▼            S34          │
                    ◇─────────────────◇   NO       │
                   ╱   DONE WITH        ╲──────────┘
                   ╲ ALL LOCATION DATA? ╱
                    ◇─────────────────◇
                         │ YES
                         ▼
        ┌────────────────────────────────┐
        │  ACQUIRE OBSERVATION TARGET     │
        │     PERIOD AND ACQUIRE          │─S35
        │ OBSERVATION AREA INFORMATION    │
        └────────────────┬───────────────┘
                         ▼
        ┌────────────────────────────────┐
        │    ACQUIRE CORRESPONDING        │─S36
        │      FEATURE QUANTITY           │
        └────────────────┬───────────────┘
                         ▼
        ┌────────────────────────────────┐
        │      CALCULATE EXPECTED         │─S37
        │         STAY TIME               │
        └────────────────┬───────────────┘
                         ▼
        ┌────────────────────────────────┐
        │    SELECT PASSING/STAYING       │─S38
        │      MOBILE TERMINALS           │
        └────────────────┬───────────────┘
                         ▼
        ┌────────────────────────────────┐
        │      ESTIMATE NUMBER OF         │─S39
        │         TERMINALS               │
        └────────────────┬───────────────┘
                         ▼
        ┌────────────────────────────────┐
        │  OUTPUT NUMBER OF TERMINALS     │─S40
        └────────────────┬───────────────┘
                         ▼
                    ┌─────────┐
                    │   END   │
                    └─────────┘
```

## Fig.11

TERMINAL NUMBER ESTIMATION DEVICE — 10

OBSERVATION TARGET PERIOD ACQUISITION UNIT — 13

OBSERVATION AREA ACQUISITION UNIT — 14

LOCATION DATA ACQUISITION UNIT — 11

ACCUMULATION UNIT — 12

OBSERVATION TARGET ACQUISITION UNIT — 15

BEFORE AND AFTER LOCATION DATA ACQUISITION UNIT — 16

FEATURE QUANTITY CALCULATION UNIT — 17

EXPECTED STAY TIME CALCULATION UNIT — 18

PASSING/STAYING TERMINAL SELECTION UNIT — 19

TERMINAL NUMBER ESTIMATION UNIT — 20

POPULATION ESTIMATION UNIT — 22

TERMINAL NUMBER OUTPUT UNIT — 21

EP 2 672 737 A1

## Fig.12

TERMINAL NUMBER ESTIMATION DEVICE

| Block | Number |
|---|---|
| OBSERVATION TARGET PERIOD ACQUISITION UNIT | 13 |
| OBSERVATION AREA ACQUISITION UNIT | 14 |
| LOCATION DATA ACQUISITION UNIT | 11A |
| ACCUMULATION UNIT | 12A |
| OBSERVATION TARGET ACQUISITION UNIT | 15 |
| BEFORE AND AFTER LOCATION DATA ACQUISITION UNIT | 16A |
| ANALYSIS TARGET PERIOD ACQUISITION UNIT | 31 |
| ANALYSIS TARGET ACQUISITION UNIT | 33 |
| FEATURE QUANTITY CALCULATION UNIT | 17A |
| ANALYSIS TARGET AREA ACQUISITION UNIT | 32 |
| ANALYSIS TARGET TERMINAL EXTRACTION UNIT | 34 |
| EXPECTED STAY TIME CALCULATION UNIT | 18A |
| ESTIMATED RESIDENCE TERMINAL LIST CREATION UNIT | 25 |
| ESTIMATION TARGET TERMINAL SELECTION UNIT | 35 |
| TERMINAL NUMBER ESTIMATION UNIT | 36 |
| ESTIMATED RESIDENCE TERMINAL LIST STORAGE UNIT | 26 |
| PEOPLE NUMBER ESTIMATION UNIT | 37 |
| COMMUTER NUMBER ESTIMATION UNIT | 38 |
| OUTPUT UNIT | 39 |
| | 10A |

# Fig.13

Fig.14

C : MOBILE TERMINALS WITH ADDRESS INFORMATION IN ANALYSIS TARGET AREA

O : MOBILE TERMINALS SORTED AS LIVING IN OBSERVATION AREA BY ESTIMATED RESIDENCE TERMINAL LIST

A : ANALYSIS TARGET TERMINALS IN ANALYSIS TARGET AREA

EP 2 672 737 A1

# Fig.15

STAYING PEOPLE

COMMUTERS UNABLE
TO GET HOME
ADDRESS INFORMATION A:○○
ADDRESS INFORMATION B:○△
:

NEIGHBOURING
RESIDENTS

LOCAL RESIDENTS

*Fig.16*

*Fig.17*

```
                    ( START )
                        │
        ┌───────────────────────────────┐
        │      ACQUIRE AND STORE         │── S51
        │        LOCATION DATA           │
        └───────────────────────────────┘
                        │
        ┌───────────────────────────────┐
        │   ACQUIRE OBSERVATION TARGET   │
        │ PERIOD INFORMATION AND ACQUIRE │── S52
        │  OBSERVATION AREA INFORMATION  │
        └───────────────────────────────┘
                        │
        ┌───────────────────────────────┐
        │ ACQUIRE RESIDENCE ESTIMATION   │── S53
        │    TARGET LOCATION DATA        │
        └───────────────────────────────┘
                        │
                        ▼
        ┌───────────────────────────────┐
        │ ACQUIRE LOCATION DATA JUST BEFORE │
        │   AND AFTER CERTAIN RESIDENCE  │── S54
        │ ESTIMATION TARGET LOCATION DATA │
        └───────────────────────────────┘
                        │
        ┌───────────────────────────────┐
        │   CALCULATE FEATURE QUANTITY   │── S55
        └───────────────────────────────┘
                        │
                   ╱─────────╲  ── S56
                  ╱ DONE WITH  ╲
                 ╱ ALL RESIDENCE ╲   NO
                ╱  ESTIMATION      ╲────────┐
                ╲  TARGET LOCATION ╱        │
                 ╲    DATA?       ╱         │
                  ╲──────────────╱          │
                        │ YES              ─┘
        ┌───────────────────────────────┐
        │  CALCULATE EXPECTED STAY TIME  │── S57
        └───────────────────────────────┘
                        │
        ┌───────────────────────────────┐
        │      CREATE ESTIMATED          │── S58
        │  RESIDENCE TERMINAL LIST       │
        └───────────────────────────────┘
                        │
        ┌───────────────────────────────┐
        │       STORE ESTIMATED          │── S59
        │  RESIDENCE TERMINAL LIST       │
        └───────────────────────────────┘
                        │
                    (  END  )
```

# Fig.18

```
          ┌─────────┐
          │  START  │
          └────┬────┘
               │
┌──────────────┴──────────────┐
│ACQUIRE ANALYSIS TARGET PERIOD│
│   INFORMATION AND ANALYSIS   │~S61
│    TARGET AREA INFORMATION    │
└──────────────┬──────────────┘
               │
┌──────────────┴──────────────┐
│      ACQUIRE ANALYSIS        │~S62
│     TARGET LOCATION DATA     │
└──────────────┬──────────────┘
               │
┌──────────────┴──────────────┐
│       EXTRACT ANALYSIS       │~S63
│       TARGET TERMINALS       │
└──────────────┬──────────────┘
               │
┌──────────────┴──────────────┐
│SELECT ESTIMATION TARGET TERMINALS│~S64
│ OF COMMUTERS UNABLE TO GET HOME │
└──────────────┬──────────────┘
               │
┌──────────────┴──────────────┐
│      ESTIMATE NUMBER OF       │
│ESTIMATION TARGET TERMINALS OF │~S65
│COMMUTERS UNABLE TO GET HOME   │
└──────────────┬──────────────┘
               │
┌──────────────┴──────────────┐
│  ESTIMATE NUMBER OF PEOPLE    │
│  FROM NUMBER OF ESTIMATION    │~S66
│     TARGET TERMINALS OF       │
│COMMUTERS UNABLE TO GET HOME   │
└──────────────┬──────────────┘
               │
┌──────────────┴──────────────┐
│      ESTIMATE NUMBER OF       │~S67
│ COMMUTERS UNABLE TO GET HOME │
└──────────────┬──────────────┘
               │
┌──────────────┴──────────────┐
│   OUTPUT INFORMATION ABOUT    │~S68
│ COMMUTERS UNABLE TO GET HOME │
└──────────────┬──────────────┘
               │
          ┌────┴────┐
          │   END   │
          └─────────┘
```

*Fig.19*

C : MOBILE TERMINALS WITH ADDRESS INFORMATION IN OBSERVATION AREA

O : MOBILE TERMINALS SORTED AS LIVING IN OBSERVATION AREA BY ESTIMATED RESIDENCE TERMINAL LIST

A : ANALYSIS TARGET TERMINALS IN ANALYSIS TARGET AREA

EP 2 672 737 A1

# *Fig.20*

PEOPLE RETURNING TO OBSERVATION AREA X

ANALYSIS TARGET AREA Y1(□ ×)

★ANALYSIS TARGET AREA Y2(△○)

ANALYSIS TARGET AREA Y3(× ×)

. . .

0

PEOPLE
NUMBER

## Fig.21

```
                    ┌─────────────┐
                    │    START    │
                    └──────┬──────┘
                           │
        ┌──────────────────────────────────────┐
        │ ACQUIRE ANALYSIS TARGET PERIOD        │
        │ INFORMATION AND ANALYSIS              │──S71
        │ TARGET AREA INFORMATION               │
        └──────────────────┬───────────────────┘
                           │
        ┌──────────────────────────────────────┐
        │      ACQUIRE ANALYSIS                 │──S72
        │      TARGET LOCATION DATA             │
        └──────────────────┬───────────────────┘
                           │
        ┌──────────────────────────────────────┐
        │      EXTRACT ANALYSIS                 │──S73
        │      TARGET TERMINALS                 │
        └──────────────────┬───────────────────┘
                           │
        ┌──────────────────────────────────────┐
        │ SELECT ESTIMATION TARGET TERMINAL     │──S74
        │ OF COMMUTERS UNABLE TO GET HOME       │
        └──────────────────┬───────────────────┘
                           │
        ┌──────────────────────────────────────┐
        │ ESTIMATE NUMBER OF ESTIMATION         │
        │ TARGET TERMINALS OF                   │──S75
        │ COMMUTERS UNABLE TO GET HOME          │
        └──────────────────┬───────────────────┘
                           │
        ┌──────────────────────────────────────┐
        │ ESTIMATE NUMBER OF PEOPLE RETURNING   │
        │ TO OBSERVATION AREA FROM              │──S76
        │ NUMBER OF ESTIMATION TARGET TERMINALS │
        │ OF COMMUTERS UNABLE TO GET HOME       │
        └──────────────────┬───────────────────┘
                           │
        ┌──────────────────────────────────────┐
        │ ESTIMATE NUMBER OF                    │──S77
        │ COMMUTERS UNABLE TO GET HOME          │
        └──────────────────┬───────────────────┘
                           │
        ┌──────────────────────────────────────┐
        │ OUTPUT INFORMATION ABOUT              │──S78
        │ COMMUTERS UNABLE TO GET HOME          │
        └──────────────────┬───────────────────┘
                           │
                    ┌─────────────┐
                    │     END     │
                    └─────────────┘
```

# Fig.22

TERMINAL NUMBER ESTIMATION DEVICE ~10B

- OBSERVATION TARGET PERIOD ACQUISITION UNIT ~13
- OBSERVATION AREA ACQUISITION UNIT ~14
- LOCATION DATA ACQUISITION UNIT ~11
- ACCUMULATION UNIT ~12
- OBSERVATION TARGET ACQUISITION UNIT ~15B
- BEFORE AND AFTER LOCATION DATA ACQUISITION UNIT ~16B
- CORRECTION FACTOR CALCULATION UNIT ~60
- FEATURE QUANTITY CALCULATION UNIT ~17B
- EXPECTED STAY TIME CALCULATION UNIT ~18B
- PASSING/STAYING TERMINAL SELECTION UNIT ~19B
- TERMINAL NUMBER ESTIMATION UNIT ~20B
- TERMINAL NUMBER CORRECTION UNIT ~50
- TERMINAL NUMBER OUTPUT UNIT ~21B

EP 2 672 737 A1

# Fig.23

(a)

| LOCATION REGISTRATION SIGNAL LOCATION DATA | | | |
|---|---|---|---|
| IDENTIFICATION INFORMATION | LOCATION INFORMATION (SECTOR NUMBER) | LOCATION ACQUISITION TIME | ... |
| A | S2 | t1 | ... |
| B | S4 | t1 | ... |
| A | S2 | t2 | ... |
| C | S1 | t2 | ... |
| A | S3 | t3 | ... |
| ... | ... | ... | ... |

(b)

| GPS SIGNAL LOCATION DATA | | | |
|---|---|---|---|
| IDENTIFICATION INFORMATION | LOCATION INFORMATION (LATITUDE, LONGITUDE) | LOCATION ACQUISITION TIME | ... |
| B | X1,Y1 | t1.1 | ... |
| B | X1,Y2 | t1.5 | ... |
| A | X4,Y5 | t4 | ... |
| E | X3,Y2 | t3 | ... |
| ... | ... | ... | ... |

*Fig.24*

*Fig.25*

Fig.26

*Fig.27*

NUMBER OF
TERMINALS

G(t)

t:STAY TIME

1    2    3    4

## Fig.28

(a)

NUMBER OF
TERMINALS

L(t)

1　X2　2　X3　3　4　　t:STAY TIME

(b)

NUMBER OF
TERMINALS

Y

G(t)

1　2　3　4　　t:STAY TIME

# Fig.29

# *Fig.30*

START

ACQUIRE AND STORE
LOCATION DATA — S81

ACQUIRE OBSERVATION TARGET
PERIOD INFORMATION AND
OBSERVATION AREA INFORMATION — S82

ACQUIRE LOCATION REGISTRATION
SIGNAL LOCATION DATA AND
GPS SIGNAL LOCATION DATA — S83

ACQUIRE LOCATION DATA
JUST BEFORE AND AFTER
CERTAIN LOCATION DATA — S84

CALCULATE FEATURE QUANTITY — S85

DONE WITH ALL
LOCATION DATA? — S86
NO

YES

CALCULATE EXPECTED STAY TIME — S87

DIVIDE BY STAY TIME — S88

CALCULATE LOCATION REGISTRATION SIGNAL
STAY TIME DISTRIBUTION AND LOCATION
REGISTRATION SIGNAL STAY TIME DISTRIBUTION — S89

CALCULATE
CORRECTION FACTOR — S90

CORRECT NUMBER OF
TERMINALS — S91

OUTPUT TERMINAL NUMBER
DISTRIBUTION — S92

END

# Fig.31

```
            ┌─────────┐
            │  START  │
            └────┬────┘
                 │
    ┌────────────┴────────────────┐
    │ DETERMINE CORRECTION FACTOR │──S101
    │  CALCULATION TARGET PERIOD  │
    └────────────┬────────────────┘
                 │
    ┌────────────┴────────────────┐
    │   ACQUIRE EXPRESSION L(t)    │──S102
    └────────────┬────────────────┘
                 │
    ┌────────────┴────────────────┐
    │ ACQUIRE APPROXIMATE CURVE G(t)│──S103
    └────────────┬────────────────┘
                 │
    ┌────────────┴────────────────┐
    │ CALCULATE CORRECTION FACTOR k │──S104
    └────────────┬────────────────┘
                 │
    ┌────────────┴────────────────┐
    │  OUTPUT CORRECTION FACTOR k  │──S105
    └────────────┬────────────────┘
                 │
            ┌────┴────┐
            │   END   │
            └─────────┘
```

# Fig.32

TERMINAL NUMBER
ESTIMATION DEVICE

~13 OBSERVATION TARGET PERIOD ACQUISITION UNIT

~14 OBSERVATION AREA ACQUISITION UNIT

~10B

~11 LOCATION DATA ACQUISITION UNIT

~12 ACCUMULATION UNIT

OBSERVATION TARGET ACQUISITION UNIT ~15B

BEFORE AND AFTER LOCATION DATA ACQUISITION UNIT ~16B

~60 CORRECTION FACTOR CALCULATION UNIT

FEATURE QUANTITY CALCULATION UNIT ~17B

EXPECTED STAY TIME CALCULATION UNIT ~18B

PASSING/STAYING TERMINAL SELECTION UNIT ~19B

TERMINAL NUMBER ESTIMATION UNIT ~20B

TERMINAL NUMBER CORRECTION UNIT ~50

POPULATION ESTIMATION UNIT ~22

TERMINAL NUMBER OUTPUT UNIT ~21B

EP 2 672 737 A1

# *Fig.33*

## Fig.34

*Fig.35*

NUMBER OF
TERMINALS

TIME

1:00    2:00    3:00    4:00

<table>
<tr><td colspan="2" align="center">**INTERNATIONAL SEARCH REPORT**</td><td colspan="2">International application No.<br>PCT/JP2012/052030</td></tr>
</table>

A.  CLASSIFICATION OF SUBJECT MATTER
*H04W4/02*(2009.01)i, *H04M11/00*(2006.01)i, *H04W64/00*(2009.01)i

According to International Patent Classification (IPC) or to both national classification and IPC

B.  FIELDS SEARCHED

Minimum documentation searched (classification system followed by classification symbols)
H04W4/02, H04M11/00, H04W64/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2010/113699 A1  (NTT Docomo Inc.),<br>07 October 2010 (07.10.2010),<br>paragraphs [0046], [0047], [0059], [0062];<br>fig. 10<br>(Family: none) | 1,3,5,19<br>6,7<br>2,4,8-18 |
| Y | JP 2003-122877 A  (Oki Electric Industry Co.,<br>Ltd.),<br>25 April 2003 (25.04.2003),<br>paragraphs [0013] to [0018]<br>(Family: none) AA | 6,7 |
| A | WO 2010/116900 A1  (NTT Docomo Inc.),<br>14 October 2010 (14.10.2010),<br>entire text; all drawings<br>(Family: none) | 1-19 |

☒  Further documents are listed in the continuation of Box C.            ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>20 April, 2012 (20.04.12) | Date of mailing of the international search report<br>01 May, 2012 (01.05.12) |
|---|---|
| Name and mailing address of the ISA/<br>  Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/052030 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-091629 A  (Matsushita Electric Industrial Co., Ltd.), 28 March 2003 (28.03.2003), entire text; all drawings (Family: none) | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003044969 A

- JP 2010221456 A